# EUROPEAN PATENT APPLICATION

(11) **EP 4 791 064 A1**
(43) Date of publication of application: **12.08.2026**
(21) Application number: 24874510.1
(22) Date of filing: 24.09.2024
(51) Int. Cl.: H04W 24/04, H04W 24/10

(54) **COMMUNICATION DEVICE AND COMMUNICATION METHOD**

(30) Priority: 02.10.2023 JP 2023171590
(71) Applicant: Sony Group Corporation, Tokyo 108-0075 (JP)
(72) Inventor: MATSUDA, Hiroki, Tokyo 108-0075 (JP); SHIMEZAWA, Kazuyuki, Tokyo 108-0075 (JP)
(74) Representative: Witte, Weller & Partner Patentanwälte mbB
(86) International application number: PCT/JP2024/033903
(87) International publication number: WO 2025/074903

(57) **Abstract**

A communication device that performs wireless communication with another communication device, comprising a processor that controls a wireless transceiver for performing the wireless communication, wherein the processor controls the wireless transceiver to transmit, to the other communication device, information regarding an AI/ML model applied to at least one process among: a first transmission process of the communication device regarding wireless signals transmitted from the communication device to the other communication device, a first reception process of the other communication device regarding wireless signals transmitted from the communication device to the other communication device, a second transmission process of the other communication device regarding wireless signals transmitted from the other communication device to the communication device, or a second reception process of the communication device regarding wireless signals transmitted from the other communication device to the communication device.

## Description

### [Technical Field]

The present disclosure relates to a communication device and a communication method.

### [Background Art]

Development of technologies related to wireless communication is being actively pursued. In recent years, technologies for improving communication performance by applying artificial intelligence/machine learning technologies to wireless access networks are being studied.

### [Citation List]

### [Non-Patent Documents]

[Non-Patent Document 1]R1-2210997,"Discussions on AI/ML framework",vivo,3GPP TSG-RAN WG1 Meeting
   #111,Toulouse,France,November 14th-18th,2022
[Non-Patent Document 2]TR22.876 V19.0.0,"Study on AI/ML Model Transfer Phase 2",3GPP Technical Specification Group Services and System Aspects, June 2023

### [Summary]

### [Technical Problem]

However, simply applying artificial intelligence/machine learning technologies to wireless access networks does not necessarily achieve high communication performance (for example, improvement in frequency utilization efficiency, large capacity, high speed, low latency, high reliability, power saving, or low processing load).

Therefore, the present disclosure proposes a communication device and a communication method capable of achieving high communication performance.

Note that the above problem or objective is merely one of multiple problems or objectives that can be solved or achieved by multiple embodiments disclosed in this specification.

### [Solution to Problem]

In order to solve the above problem, a communication device according to one embodiment of the present disclosure is a communication device that performs wireless communication with another communication device, and has a processor that controls a wireless transceiver for performing the wireless communication, wherein the processor controls the wireless transceiver to transmit, to the other communication device, information regarding an AI/ML model applied to at least one process among: a first transmission process of the communication device regarding wireless signals transmitted from the communication device to the other communication device, a first reception process of the other communication device regarding wireless signals transmitted from the communication device to the other communication device, a second transmission process of the other communication device regarding wireless signals transmitted from the other communication device to the communication device, or a second reception process of the communication device regarding wireless signals transmitted from the other communication device to the communication device.

### [Brief Description of Drawings]

[FIG. 1A]A diagram showing an example of functionality in a use case related to transmission and reception of CSI information.
[FIG. 1B]A diagram showing an example of functionality in a use case related to transmission and reception of CSI information.
[FIG. 1C]A diagram showing an example of functionality in a use case related to transmission and reception of CSI information.
[FIG. 2A]A diagram showing an example of functionality in a use case related to beam ID identification.
[FIG. 2B]A diagram showing an example of functionality in a use case related to beam ID identification.
[FIG. 2C]A diagram showing an example of functionality in a use case related to beam ID identification.
[FIG. 3A]A diagram showing an example of functionality in a use case related to positioning.
[FIG. 3B]A diagram showing an example of functionality in a use case related to positioning.
[FIG. 3C]A diagram showing an example of functionality in a use case related to positioning.
[FIG. 4]A diagram showing the configuration of a communication system according to this embodiment.
[FIG. 5]A diagram showing the configuration of a management device according to this embodiment.
[FIG. 6]A diagram showing the configuration of a base station according to this embodiment.
[FIG. 7]A diagram showing the configuration of a relay station according to this embodiment.
[FIG. 8]A diagram showing the configuration of a terminal device according to this embodiment.
[FIG. 9]A diagram showing an example of 5G architecture.
[FIG. 10]A diagram for explaining LCM.
[FIG. 11]A diagram for explaining fallback processing.
[FIG. 12A]A diagram showing a basic sequence example of communication processing when the transmitting device is the LCM control entity.
[FIG. 12B]A diagram showing a specific sequence example of communication processing when the transmitting device is the LCM control entity.
[FIG. 13A]A diagram showing a basic sequence example of communication processing when the receiving device is the LCM control entity.
[FIG. 13B]A diagram showing a specific sequence example of communication processing when the receiving device is the LCM control entity.
[FIG. 14]A diagram showing a sequence example of communication processing related to model transfer.
[FIG. 15]A diagram showing a sequence example of communication processing related to model activation.
[FIG. 16]A diagram showing a sequence example of signal processing using an AI/ML model.
[FIG. 17]A diagram showing a sequence example of communication processing related to model monitoring.
[FIG. 18]A diagram showing a sequence example of communication processing related to model fallback.

### [Mode for Carrying Out the Invention]

Hereinafter, embodiments of the present disclosure will be described in detail based on the drawings. Note that in the following embodiments, the same reference numerals are assigned to the same parts to omit redundant explanations.

Also, in this specification and drawings, multiple components having substantially the same functional configuration may be distinguished by adding different alphabets or numbers after the same reference numeral. For example, multiple configurations having substantially the same functional configuration are distinguished as terminal devices 40₁, 40₂, and 40₃ as necessary. However, when there is no particular need to distinguish each of multiple components having substantially the same functional configuration, only the same reference numeral is assigned. For example, when there is no particular need to distinguish terminal devices 40₁, 40₂, and 40₃, they are simply referred to as terminal device 40.

One or more embodiments (including examples and modifications) described below can each be implemented independently. On the other hand, multiple embodiments described below may be implemented by appropriately combining at least a part of them with at least a part of other embodiments. These multiple embodiments may include mutually different novel features. Therefore, these multiple embodiments may contribute to solving mutually different purposes or problems and may achieve mutually different effects.

### <<1. Overview>>

Before describing this embodiment in detail, an overview of this embodiment will be explained.

### <1-1. Problem>

In 3GPP (registered trademark), studies on NR (New Radio), Beyond 5G, and 6G are being conducted. NR is a wireless access technology that can support various use cases including enhanced mobile broadband (eMBB), massive machine type communications (mMTC), and ultra reliable and low latency communications (URLLC). NR was standardized in Rel-15 as a technical framework corresponding to usage scenarios, requirements, and deployment scenarios in those use cases, and technical extensions are still being made. Beyond 5G and 6G are next-generation mobile communication technologies after 5G. In Beyond 5G and 6G, further improvements in enhanced mobile broadband, massive simultaneous connections, and ultra-reliable low latency are expected.

To achieve this, technologies for improving communication performance using artificial intelligence (AI)/machine learning (ML) are being studied. For example, in 3GPP, studies are being conducted to improve frequency efficiency by applying AI/ML models to wireless access networks. For example, Non-Patent Document 1 (3GPP R1-2210997) describes AI/ML model management when using machine learning. Also, Non-Patent Document 2 (3GPP TR22.876) describes use cases related to the application of machine learning to sidelink communication. Sidelink communication is characterized by communication between multiple different terminal devices, unlike conventional communication between base stations and terminal devices (uplink communication and/or downlink communication).

However, simply using artificial intelligence/machine learning does not necessarily achieve high communication performance (for example, improvement in frequency utilization efficiency, large capacity, high speed, low latency, high reliability, power saving, or low processing load).

For example, AI/ML models are expected to be utilized in various use cases, but the means of applying AI/ML models may change depending on the use case being utilized. Therefore, it is necessary to change the method of managing AI/ML models for each use case according to the situation. On the other hand, when the use cases applying AI/ML models increase, issues such as increased processing load and increased memory amount for managing AI/ML models arise. Therefore, in communication utilizing AI/ML models, it becomes necessary to efficiently manage AI/ML models. In other words, to achieve high communication performance in communication using AI/ML, it is necessary for communication devices to appropriately implement AI/ML model management.

Note that in this embodiment, use cases where AI/ML models are utilized are not limited to uplink communication, downlink communication, and sidelink communication. For example, use cases where AI/ML models are utilized may be communication using non-cellular communication such as wireless LAN communication. Also, use cases where AI/ML models are utilized may be more specific use cases using these communications (for example, at least one of uplink communication, downlink communication, and sidelink communication).

### <1-2. Solution>

In this embodiment, the above problem is solved as follows.

Before explaining the overview of the solution, functionality and AI/ML model management, which are important elements in this embodiment, will be explained.

### <1-2-1. Functionality>

First, functionality will be explained.

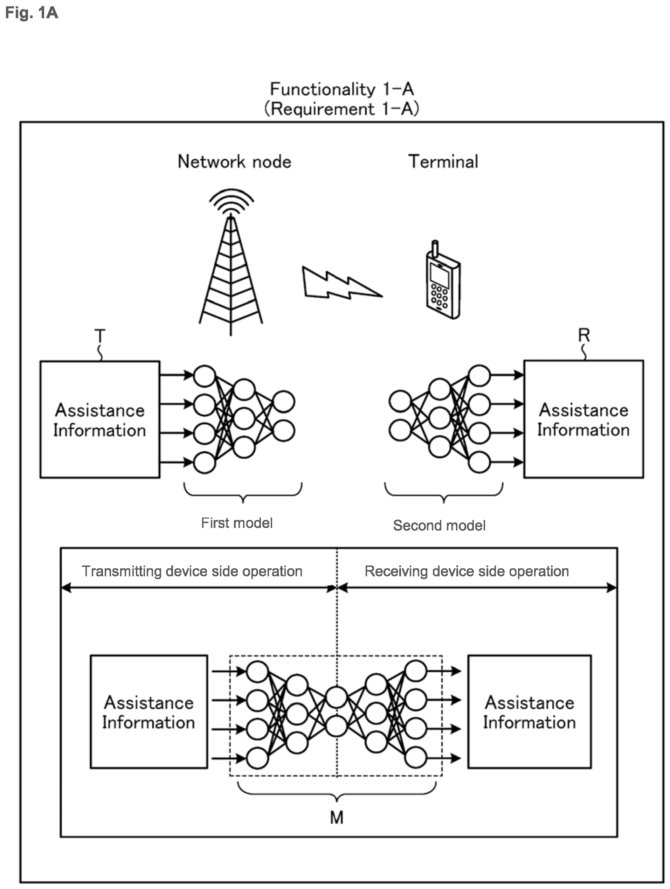

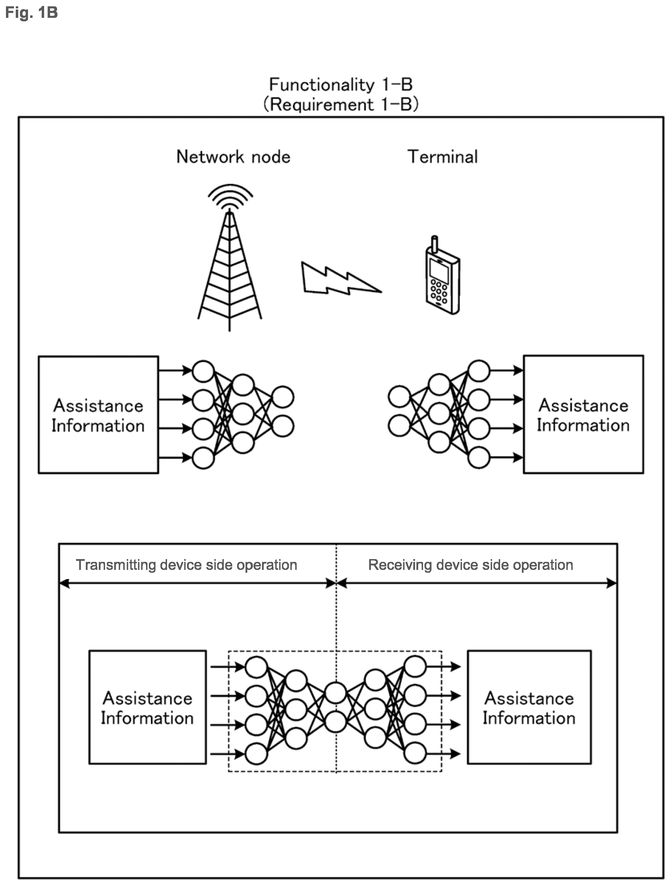

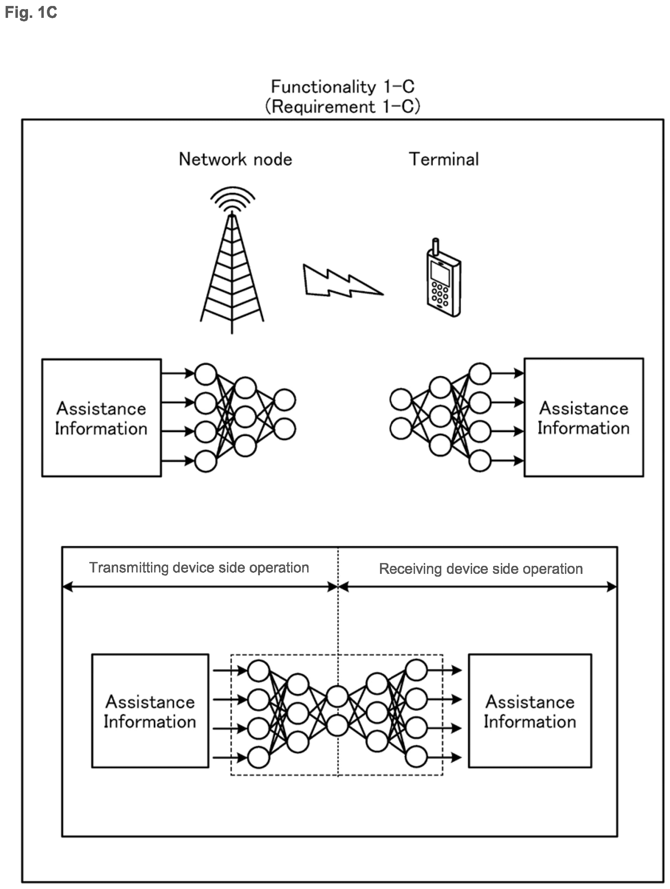

Functionality is a concept that represents communication requirements required for AI communication, use cases utilizing AI/ML models, or functions realized using AI/ML models in features such as use cases where AI/ML models are applied. FIGS. 1A to 3C are diagrams showing examples of functionality, respectively.

FIGS. 1A to 1C show functionalities 1-A, 1-B, and 1-C in use cases (Features) related to transmission and reception of CSI information. In the examples of FIGS. 1A to 1C, assistance information (e.g., information about AI/ML models) is transmitted from a transmitting device (terminal device (Terminal) in the examples of FIGS. 1A to 1C) to a receiving device (network node in the examples of FIGS. 1A to 1C). In the examples of FIGS. 1A to 1C, the assistance information is information necessary for the receiving device to perform processing related to wireless communication, or information to assist the receiving device's processing related to wireless communication. For example, the assistance information may be information (e.g., control information) necessary for operations such as downlink communication, uplink communication, sidelink communication, unlicensed communication, handover, etc. of the terminal device. In transmitting and receiving CSI information, one or more communication requirements are defined. For example, assuming three communication requirements are defined, these are defined as functionality 1-A, functionality 1-B, and functionality 1-C. In functionalities 1-A, 1-B, and 1-C, both the transmitting device and receiving device use AI/ML models based on the communication requirements defined in each functionality, enabling efficient information transmission from the transmitting device to the receiving device.

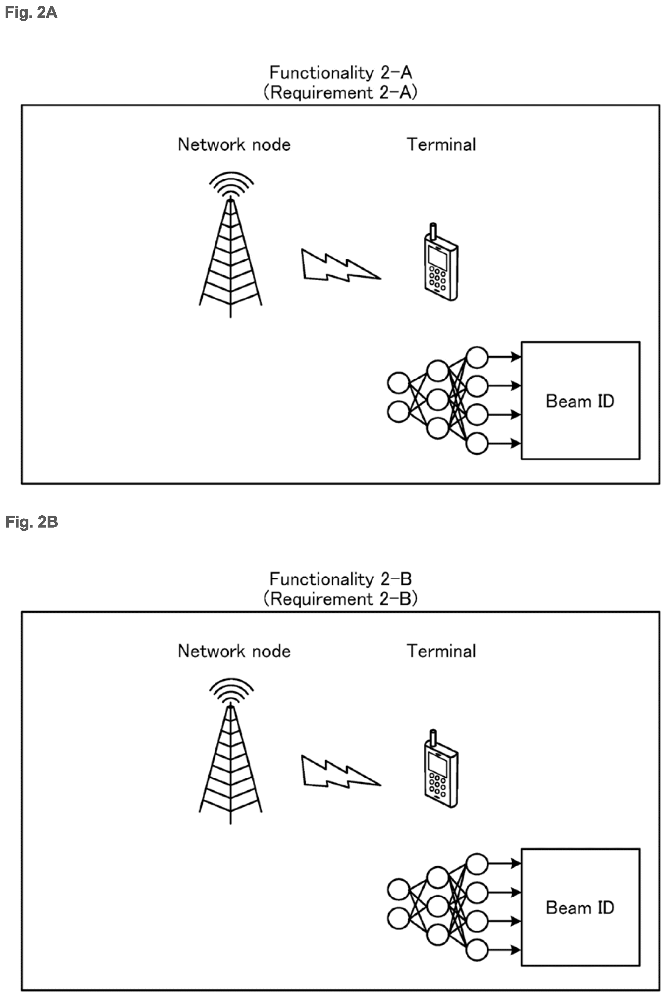

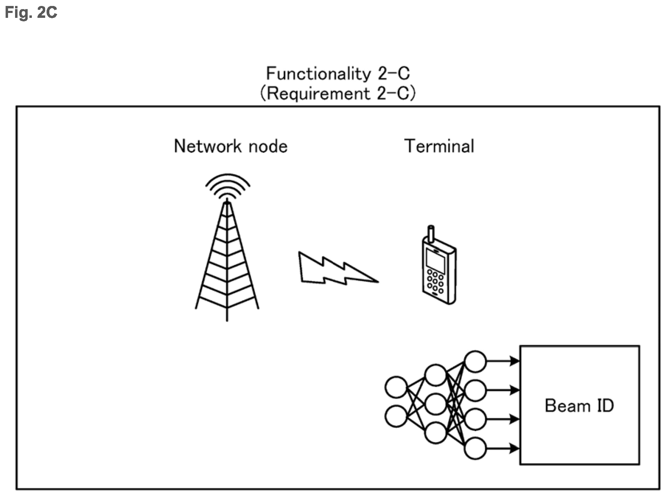

FIGS. 2A to 2C show functionalities 2-A, 2-B, and 2-C in use cases (Features) related to beam ID identification. In the examples of FIGS. 2A to 2C, the receiving device (terminal in the examples of FIGS. 2A to 2C) identifies beam IDs (e.g., reference signal, synchronization signal IDs) based on information/signals transmitted from the transmitting device (network node in the examples of FIGS. 2A to 2C). In identifying beam IDs, one or more communication requirements are defined. For example, assuming three communication requirements are defined, these are defined as functionality 2-A, functionality 2-B, and functionality 2-C. In functionalities 2-A, 2-B, and 2-C, the receiving device identifies beam IDs using the information/signals received and AI/ML models based on the communication requirements defined in each functionality.

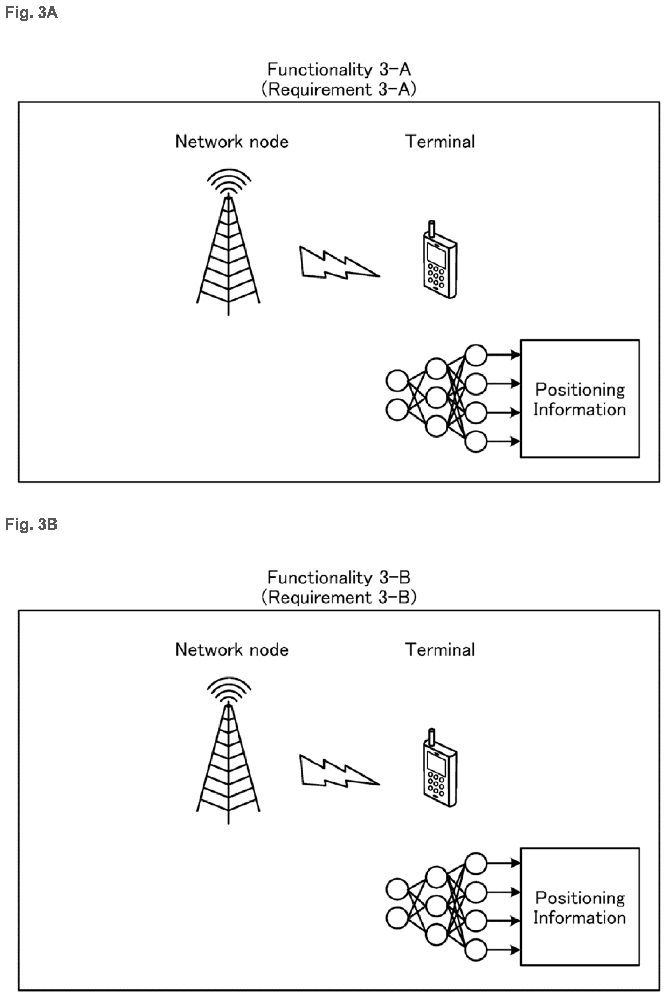

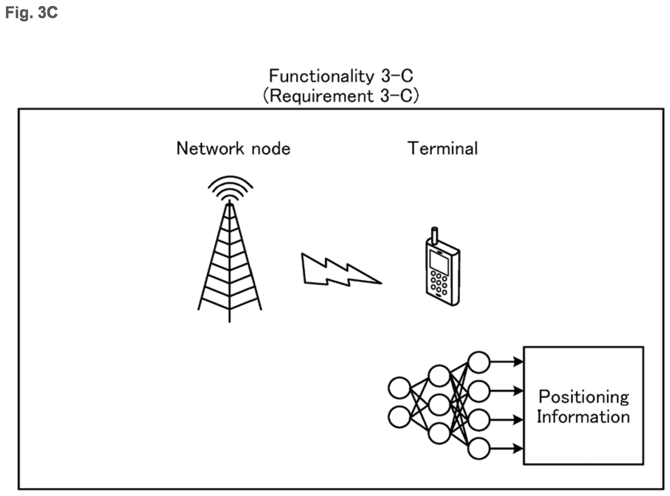

FIGS. 3A to 3C show functionalities 3-A, 3-B, and 3-C in use cases (Features) related to positioning. In the examples of FIGS. 3A to 3C, the receiving device (terminal in the examples of FIGS. 3A to 3C) generates positioning information based on information/signals transmitted from the transmitting device (network node in the examples of FIGS. 3A to 3C). In generating positioning information, one or more communication requirements are defined. For example, assuming three communication requirements are defined, these are defined as functionality 3-A, functionality 3-B, and functionality 3-C. In functionalities 3-A, 3-B, and 3-C, the receiving device generates positioning information using the information/signals received and AI/ML models based on the communication requirements defined in each functionality.

Note that the description of functionality appearing in the following explanation may be replaced with other descriptions. For example, functionality appearing in the following explanation may be replaced with descriptions such as use case, feature, function, function index, functional ID, AI/ML index, AI index, ML index, or model index. Of course, the description of functionality is not limited to these, and may be replaced with other terms representing, for example, use cases utilizing AI/ML models or functions realized using AI/ML models.

### <1-2-2. AI/ML Model Management>

Next, AI/ML model management will be explained.

In 3GPP, AI/ML model management is being studied (for example, RP-221347). In this embodiment, AI/ML model management may be referred to as LCM (Life-cycle-management).

AI/ML model management (e.g., LCM) may be composed of one or more elements (processes/methods/procedures/functions) among the following (M1) to (M25). For example, AI/ML model management (e.g., LCM) may be one of (M1) to (M25), or may be a combination of multiple elements including at least one element among (M1) to (M25).

(M1) Data collection
(M2) Model training
(M3) Functionality identification
(M4) Model identification
(M5) Model delivery
(M6) Model transfer
(M7) Model download
(M8) Model upload
(M9) Model inference
(M10) Model validation
(M11) Model testing
(M12) Model activation
(M13) Functionality activation
(M14) Model deactivation
(M15) Functionality deactivation
(M16) Model switching
(M17) Functionality switching
(M18) Model fallback
(M19) Model monitoring
(M20) Model update
(M21) Model registration
(M22) Model deployment
(M23) Model configuration
(M24) Model selection
(M25) UE capability

Note that (M1) to (M25) are merely examples. The AI/ML model management (e.g., LCM (or elements constituting LCM)) of this embodiment may include management (or elements) other than the above-mentioned (M1) to (M25). (M1) to (M25) will be described in detail later.

### <1-2-3. Overview of Solution>

Based on the above, an overview of the solution of this embodiment will be explained.

The communication device of this embodiment (hereinafter referred to as the first communication device) is configured to be capable of wireless communication with another communication device (hereinafter referred to as the second communication device).

Here, the first communication device and the second communication device may be base stations or terminal devices. For example, the first communication device may be a base station and the second communication device may be a terminal device. Also, the first communication device may be a terminal device and the second communication device may be a base station. Also, the first communication device may be a terminal device and the second communication device may be another terminal device. Also, the first communication device may be a base station and the second communication device may be another base station. Note that the first communication device and the second communication device are not limited to base stations and/or terminal devices. At least one of the first communication device and the second communication device may be a relay station, a device constituting a core network, a server device, or other control device.

At least one of the first communication device and the second communication device is configured to be capable of executing processing of one or more functionalities described above or below. For example, at least one of the first communication device and the second communication device may be configured to be capable of executing at least one of processing related to transmission or reception of assistance information, processing related to beam ID identification, and processing related to positioning. Functionality processing is realized using AI/ML models. One or more AI/ML models are associated with one functionality.

The first communication device transmits information about AI/ML models applied to at least one of the following processes (P1) to (P4) (first transmission process, first reception process, second transmission process, and second reception process) to the second communication device.
(P1) Transmission process of the first communication device regarding wireless signals transmitted from the first communication device to the second communication device (first transmission process)
(P2) Reception process of the second communication device regarding wireless signals transmitted from the first communication device to the second communication device (first reception process)
(P3) Transmission process of the second communication device regarding wireless signals transmitted from the second communication device to the first communication device (second transmission process)
(P4) Reception process of the first communication device regarding wireless signals transmitted from the second communication device to the first communication device (second reception process)

Here, the above-mentioned first transmission process and second transmission process may indicate processing performed on wireless signals to be transmitted. In other words, the above-mentioned first transmission process and second transmission process may be performed on the wireless signals before transmitting the wireless signals. Additionally or alternatively, the above-mentioned first reception process and second reception process may indicate processing performed on wireless signals to be received. In other words, the above-mentioned first reception process and second reception process may be performed on the wireless signals after receiving the wireless signals.

The wireless signals in the present disclosure may be Layer 1 physical signals or physical channels, or combinations thereof. For example, the Layer 1 physical signals may be at least one of the above-mentioned or below-mentioned SS (Synchronization signal), SSB (SS/PBCH Block), CSI-RS (Channel State Information-Reference Signal), SRS (Sounding Reference Signal), PT-RS (Phase-tracking reference signal), or DMRS (Demodulation reference signal). SS may be PSS (Primary Synchronization Signal), SSS (Secondary Synchronization Signal), SPSS (Sidelink Primary Synchronization Signal), or SSSS (Sidelink Secondary Synchronization Signal), or a combination of at least two of these. DMRS may be PDCCH DMRS, PDSCH DMRS, PBCH DMRS, PUCCH DMRS, PUSCH DMRS, PSCCH DMRS, or PSSCH DMRS, or a combination of at least two of these. For example, Layer 1 physical channels may be at least one of the above-mentioned or below-mentioned PBCH (Physical broadcast channel), PDCCH (Physical downlink control channel), PDSCH (Physical downlink shared channel), PRACH (Physical random-access channel), PUCCH (Physical uplink control channel), PUSCH (Physical uplink shared channel), PSBCH (Physical sidelink broadcast channel), PSCCH (Physical sidelink control channel), PSSCH (Physical sidelink shared channel), or PSFCH (Physical sidelink feedback channel), or a combination of at least two of these.

Additionally or alternatively, the wireless signals in the present disclosure may be Layer 1, Layer 2, or Layer 3 messages. For example, the wireless signals in the present disclosure may include at least one of the above-mentioned or below-mentioned DCI (Downlink Control Information), UCI (Uplink Control Information), SCI (Sidelink Control Information), MAC CE (Medium Access Control-Control Element), or RRC (Radio Resource Control) messages. RRC messages may be at least one of MIB (Master Information Block), SIB (System Information Block) (e.g. SIB1, SIB2, SIB3, SIB4, ...., SIBX (X is an integer)), RRCRequest message, RRCSetup message, RRCSetupComplete message, RRCReconfiguration message, RRCRelease message, SecurityModeCommand message, SecurityModeComplete message, SecurityModeFailure message, CounterCheck message, CounterCheckResponse message, Paging message, RRCReestablishmentRequest message, or RRCReestablishment message.

Additionally or alternatively, at least one of the above-mentioned first transmission process, first reception process, second transmission process, or second reception process may include at least one corresponding process and/or procedure among the processes and/or procedures described in at least one of the following (K1) to (K6).

(K1) Sequence generation, scrambling, layer mapping, antenna port mapping, mapping to radio resources, precoding, modulation, cyclic shift, or spreading for wireless signals or bit sequences carried by wireless signals, or a combination of at least two of these.

(K2) CRC calculation, Codebook Segmentation, Polar Coding, LDPC (Low density parity check) Coding, Rate matching, or Code block concatenation for wireless signals or bit sequences carried by wireless signals, or a combination of at least two of these.

(K3) Cell search, transmission timing adjustment, Radio Link Monitoring, Radio Link Recovery, Power Control for wireless signals, Random Access Procedure, HARQ-ACK codebook determination, or UCI report (HARQ-ACK, SR (Scheduling Request)), or a combination of at least two of these.

(K4) Resource allocation to time axis or frequency axis, Modulation order, TBS (Transport Block Size) determination, processing related to Antenna ports quasi co-location between wireless signals, CSI report, CSI feedback, CSI Computation Time, processing time of wireless signals, preparation procedure time of wireless signals, or uplink switching, or a combination of at least two of these.

(K5) Random Access Procedure in MAC, HARQ operation for Transport Block carried by wireless signals, buffer status report, discontinuous reception (DRX), SCell (secondary cell) Activation/Deactivation, PDCP duplication Activation/Deactivation, Listen before talk (LBT), positioning, or Small data transmission (SDT), or a combination of at least two of these.

(K6) System information reception (acquisition) procedure, paging, RRC connection establishment procedure, Initial AS security activation procedure, RRC reconfiguration procedure, Counter check procedure, RRC connection re-establishment procedure, Radio link failure related operation, RRC connection resume, RRC connection resume, Idle mode mobility (cell selection, cell reselection), Connected mode mobility (Handover, Beam level mobility), or measurement (L1 measurement, L2 measurement, L3 measurement), or a combination of at least two of these.

As a representative example, at least one of the above-mentioned first transmission process, first reception process, second transmission process, or second reception process may be at least one corresponding process and/or procedure among the processes and/or procedures described in at least one of the following (H1) to (H3).

### (H1) CSI feedback

At least one of the above-mentioned first transmission process, first reception process, second transmission process, or second reception process may be processing related to CSI feedback. Here, CSI feedback may be at least one of Type 1 Single-panel codebook, Type 1 Multi-panel Codebook, Type 2 Codebook, Type 2 Port selection codebook, Enhanced Type 2 Codebook, Enhanced Type 2 Port selection codebook, and Further enhanced Type 2 port selection codebook.

### (H2) Beam management

At least one of the above-mentioned first transmission process, first reception process, second transmission process, or second reception process may be processing related to Beam management. Here, Beam management may be an operation of receiving SSB (Synchronization Signal Block) and transmitting a PRACH preamble on a PRACH resource corresponding to the SSB. Also, Beam management may be an operation of receiving CSI-RS and reporting a CSI report.

### (H3) Positioning

At least one of the above-mentioned first transmission process, first reception process, second transmission process, or second reception process may be processing related to Positioning. Here, Positioning may be an operation of transmitting PRS (Positioning Reference Signal) on the downlink and performing position estimation. Also, Positioning may be an operation of transmitting SRS (Sounding Reference Signal) on the uplink and performing position estimation.

Here, the information regarding AI/ML models may be information regarding LCM. For example, assume that the first communication device is the control entity of LCM and the second communication device is the control target of LCM. In this case, the first communication device may transmit at least one of the following information as information regarding AI/ML models.

### (Model Transfer)

The first communication device may transmit, as information regarding AI/ML models, data of AI/ML models used for at least one of the first reception process and the second transmission process to the second communication device. The second communication device executes the first reception process or the second transmission process using the AI/ML model data acquired from the first communication device.

### (Model Activation)

The first communication device may transmit, as information regarding AI/ML models, information instructing activation of AI/ML models used for at least one of the first reception process and the second transmission process. When the second communication device receives activation instruction information from the first communication device, it executes activation processing of the AI/ML model related to the instruction.

### (Model Deactivation)

The first communication device may transmit, as information regarding AI/ML models, information instructing deactivation of AI/ML models used for at least one of the first reception process and the second transmission process. When the second communication device receives activation instruction information from the first communication device, it executes deactivation processing of the AI/ML model related to the instruction.

### (Model Fallback)

The first communication device may transmit, as information regarding AI/ML models, information for causing at least one of the first reception process and the second transmission process to fall back from processing using AI/ML models to processing not using AI/ML models. When the second communication device receives fallback information from the first communication device, it falls back the processing related to the instruction from processing using AI/ML models to processing not using AI/ML models.

Note that the above shows the processing of the first communication device in cases where LCM is model transfer, model activation, model deactivation, or model fallback. However, LCM where the first communication device serves as the control entity is not limited to these. In other LCM cases as well, the first communication device can serve as the control entity.

Also, the second communication device may be the control entity of LCM and the first communication device may be the control target of LCM. In this case, the first communication device may transmit at least one of the following information as information regarding AI/ML models.

### (Terminal Capability)

The first communication device may transmit its own capability information regarding at least one of the first transmission process and the second reception process to the second communication device. For example, assume that AI/ML models are associated with functionality related to at least one of the first transmission process and the second reception process. In this case, the first communication device may transmit, as capability information, information indicating which functionality it corresponds to among multiple functionalities related to at least one of the first transmission process and the second reception process to the second communication device. Alternatively, the first communication device may transmit, as capability information, information indicating which AI/ML model it corresponds to among multiple AI/ML models related to at least one of the first transmission process and the second reception process to the second communication device. The second communication device may execute LCM based on the capability information of the first communication device.

### (Model Training)

The first communication device may transmit training information of AI/ML models regarding at least one of the first transmission process and the second reception process to the second communication device. For example, assume that AI/ML models are associated with functionality related to at least one of the first transmission process and the second reception process. In this case, the first communication device may transmit, as training information, information indicating which functionality among multiple functionalities has completed AI/ML model training to the second communication device. The second communication device may execute LCM based on the training information.

Note that the above shows the processing of the first communication device in cases where LCM is terminal capability or model training. However, LCM where the first communication device serves as the control target is not limited to these. In other LCM cases as well, the first communication device can serve as the control target.

Also, while the above description was divided into two cases: where the first communication device is the control entity of LCM and the second communication device is the control target of LCM, and where the second communication device is the control entity of LCM and the first communication device is the control target of LCM, the examples of information regarding AI/ML models explained in each case may be implemented regardless of these two cases. That is, at least two of the examples of information regarding AI/ML models explained in each case may be implemented simultaneously. In this case, even when spanning the above two cases, at least two of the examples of information regarding AI/ML models may be implemented simultaneously.

Thus, in this embodiment, the first communication device transmits information regarding AI/ML models to the second communication device in implementing LCM. Alternatively, the first communication device transmits information regarding AI/ML models to the second communication device that implements LCM. The second communication device uses or manages AI/ML models based on the information regarding AI/ML models received from the first communication device. This enables efficient use or management of AI/ML models, so the first communication device and/or the second communication device can achieve high communication performance. Note that the purpose of transmitting or receiving information regarding AI/ML models is not limited to implementing LCM. In other words, transmitting or receiving information regarding AI/ML models may not involve implementing LCM.

The above describes the overview of this embodiment, and the communication system 1 of this embodiment will be described in detail below.

### <<2. Configuration of Communication System>>

First, the configuration of communication system 1 will be described.

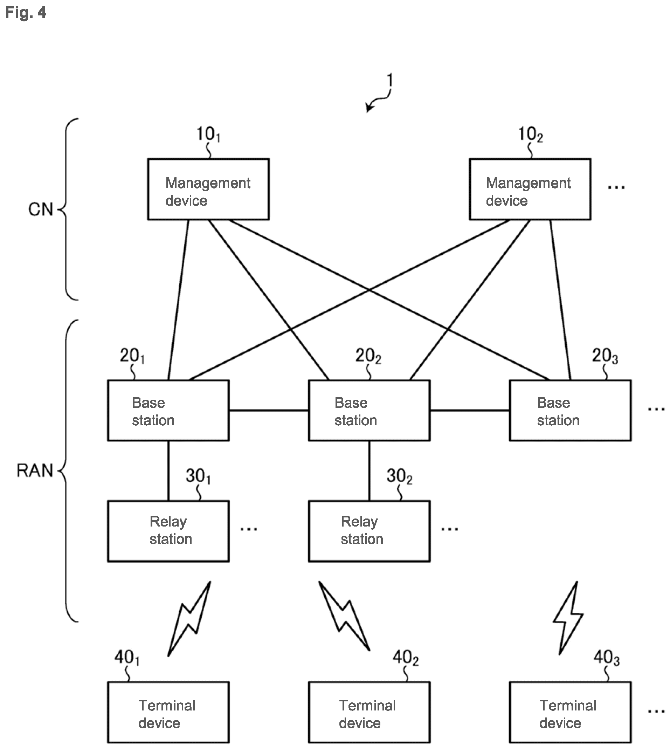

FIG. 4 is a diagram showing the configuration of communication system 1 according to this embodiment. Communication system 1 includes a management device 10, a base station 20, a relay station 30, and a terminal device 40. Communication system 1 provides a wireless network that enables mobile communication for users by the coordinated operation of each wireless communication device constituting communication system 1. The wireless network of this embodiment is composed of a radio access network RAN and a core network CN. In this embodiment, wireless communication devices are devices having wireless communication functions, and in the example of FIG. 4, these correspond to base station 20, relay station 30, and terminal device 40.

Communication system 1 may include multiple management devices 10, base stations 20, relay stations 30, and terminal devices 40, respectively. In the example of FIG. 4, communication system 1 includes management devices 10₁ and 10₂ as management device 10, and includes base stations 20₁, 20₂, and 20₃ as base station 20. Also, communication system 1 includes relay stations 30₁ and 30₂ as relay station 30, and includes terminal devices 40₁, 40₂, and 40₃ as terminal device 40. Note that depending on the communication system, relay station 30 may not exist.

Terminal device 40 may be configured to connect to the network using radio access technologies (RAT: Radio Access Technology) such as LTE (Long Term Evolution), NR (New Radio), 6G, Wi-Fi, Bluetooth (registered trademark), etc. In this case, terminal device 40 may be configured to be capable of using different radio access technologies (wireless communication methods). For example, terminal device 40 may be configured to be capable of using NR and Wi-Fi. Also, terminal device 40 may be configured to be capable of using different cellular communication technologies (for example, LTE, NR, or 6G). In the following description, terminal device 40 may be referred to as UE (User Equipment) 40.

LTE and NR are types of cellular communication technologies that enable mobile communication of terminal devices by arranging multiple areas covered by base stations in a cellular pattern. Also, 6G is assumed to be a type of cellular communication technology, and mobile communication of terminal devices may be enabled by arranging multiple areas covered by base stations in a cellular pattern.

Note that in the following description, "LTE" shall include LTE-A (LTE-Advanced), LTE-A Pro (LTE-Advanced Pro), and EUTRA (Evolved Universal Terrestrial Radio Access). Also, NR shall include NRAT (New Radio Access Technology) and FEUTRA (Further EUTRA). Furthermore, NR may include 5G-Advanced. Note that a single base station 20 may manage multiple cells. In the following description, cells corresponding to LTE may be called LTE cells, and cells corresponding to NR may be called NR cells.

NR is the next generation (fifth generation) radio access technology after LTE (fourth generation communication including LTE-Advanced and LTE-Advanced Pro). NR is a radio access technology that can support various use cases including eMBB (Enhanced Mobile Broadband), mMTC (Massive Machine Type Communications), and URLLC (Ultra-Reliable and Low Latency Communications). NR was standardized in 3GPP (registered trademark) Rel-15 as a technical framework corresponding to usage scenarios, requirements, and deployment scenarios in these use cases. Furthermore, Beyond 5G and 6G are required to simultaneously realize multiple axes of high-speed large capacity, low latency and high reliability, and massive simultaneous connections.

6G is the next generation mobile communication technology after NR and 5GS (5G system), which are fifth generation mobile communications. 6G can also be a cellular communication technology like 5G (NR). 6G includes radio access technology and network technology between base stations, core networks, and data networks. Also, 6G includes technology for advancement (Extreme connectivity) of each of eMBB, mMTC, and URLLC, which were main use cases or requirements in NR. Also, 6G includes new technologies in new aspects. For example, 6G may include technologies related to AI (Cognitive network, AI native Air Interface), sensing (including Radar sensing, network as a sensor), and terahertz communication.

Note that the above-mentioned or below-mentioned wireless network may support at least one of radio access technologies (RAT: Radio Access Technology) such as LTE (Long Term Evolution), NR (New Radio), 6G, etc. Note that the radio access method used by communication system 1 is not limited to LTE, NR, and 6G, and may be other radio access methods such as W-CDMA (Wideband Code Division Multiple Access) and cdma2000 (Code Division Multiple Access 2000).

Also, base station 20 and relay station 30 may be terrestrial stations or non-terrestrial stations. That is, the communication system of FIG. 4 may be a Non-terrestrial Network. Non-terrestrial stations may be satellite stations or aircraft stations. If the non-terrestrial station is a satellite station, the wireless network may be a Bent-pipe (Transparent) type mobile satellite communication system.

Note that in this embodiment, terrestrial stations and terrestrial base stations refer to base stations and relay stations installed on the ground. Here, "ground" is ground in a broad sense that includes not only land but also underground, on water, and underwater. Note that in the following description, the description of "terrestrial station" may be replaced with "gateway".

Note that LTE base stations may be called eNodeB (Evolved Node B) or eNB. Also, NR base stations may be called gNodeB or gNB. Also, 6G base stations may be called 6G NodeB (6GNB). LTE RAN may be called EUTRAN. NR RAN may be called NGRAN. 6G RAN may be called 6GRAN. Also, in LTE, NR, and 6G, terminal devices (also called mobile stations or terminals) may be called UE (User Equipment). Note that terminal devices are a type of communication device and are also called mobile stations or terminals.

Note that terminal device 40 may be capable of connecting to the network using radio access technologies (wireless communication methods) other than LTE, NR, 6G, Wi-Fi, and Bluetooth. For example, terminal device 40 may be capable of connecting to the network using LPWA (Low Power Wide Area) communication. Also, terminal device 40 may be capable of connecting to the network using proprietary wireless communication.

Here, LPWA communication refers to wireless communication that enables low-power wide-area communication. For example, LPWA wireless refers to IoT (Internet of Things) wireless communication using specific low-power wireless (e.g., 920MHz band) or ISM (Industry-Science-Medical) band. Note that the LPWA communication used by terminal device 40 may comply with LPWA standards. The LPWA standard may be at least one of ELTRES, ZETA, SIGFOX, LoRaWAN, LTE-M, and NB-IoT. Of course, LPWA standards are not limited to these and may be other LPWA standards.

Each wireless communication device shown in FIG. 4 may be considered as a device in a logical sense. That is, part of each wireless communication device may be realized by virtual machines (VM: Virtual Machine) or containers such as Docker, and they may be physically implemented on the same hardware.

In this embodiment, the concept of wireless communication device includes not only portable mobile devices (terminal devices) such as mobile terminals, but also devices installed on structures or mobile bodies. The structure or mobile body itself may be regarded as a wireless communication device. Also, the concept of wireless communication device includes not only terminal device 40 but also base station 20 and relay station 30. Wireless communication devices are a type of processing device or information processing device. Wireless communication devices can also be referred to as transmitting devices or receiving devices.

Note that in this embodiment, resources may indicate at least one of Frequency, Time, Resource Element (including REG, CCE, CORESET), Resource Block, Bandwidth Part, Component Carrier, Symbol, Sub-Symbol, Slot, Mini-Slot, Subslot, Subframe, Frame, PRACH occasion, Occasion, Code, Multi-access physical resource, Multi-access signature, and Subcarrier Spacing (Numerology). That is, the aforementioned or below-mentioned "resource" may be replaced with at least any of the above examples.

Hereinafter, the configuration of each wireless communication device constituting communication system 1 will be specifically described. Note that the configuration of each wireless communication device shown below is merely an example. The configuration of each wireless communication device may differ from the configuration shown below.

### <2-1. Configuration of Management Device>

Management device 10 is an information processing device (computer) that manages the wireless network. For example, management device 10 is an information processing device that manages communication of base station 20.

Management device 10 may be a device constituting core network CN. For example, management device 10 may be a device having functions as MME (Mobility Management Entity). Also, management device 10 may be a device having functions as AMF (Access and Mobility Management Function) and/or SMF (Session Management Function). MME, AMF, and SMF are Control Plane Network Function nodes in core network CN. Management device 10 may be a device having functions as a Control Plane Network Function (6G CPNF) in 6G. 6G CPNF may be composed of one or more logical nodes.

Of course, the functions of management device 10 are not limited to MME, AMF, SMF, and 6G CPNF. Management device 10 may be a device having functions as NSSF (Network Slice Selection Function), AUSF (Authentication Server Function), PCF (Policy Control Function), and UDM (Unified Data Management). Also, management device 10 may be a device having functions as HSS (Home Subscriber Server).

Note that management device 10 may have gateway functions. For example, management device 10 may have functions as S-GW (Serving Gateway) and P-GW (Packet Data Network Gateway). Also, management device 10 may have functions of UPF (User Plane Function). At this time, management device 10 may have multiple UPFs. Also, management device 10 may be a device having functions as a User Plane Network Function (6G UPNF) in 6G.

Core network CN is composed of multiple Network Functions, and each network function may be integrated into one physical device or distributed across multiple physical devices. That is, management device 10 may be distributed across multiple devices. Furthermore, this distributed arrangement may be controlled to be executed dynamically. Base station 20 and management device 10 constitute one network and provide wireless communication services to terminal device 40. Management device 10 is connected to the Internet, and terminal device 40 can use various services provided via the Internet through base station 20.

Note that management device 10 does not necessarily have to be a device constituting core network CN. For example, assume that core network CN is a core network of W-CDMA (Wideband Code Division Multiple Access) or cdma2000 (Code Division Multiple Access 2000). In this case, management device 10 may be a device that functions as RNC (Radio Network Controller).

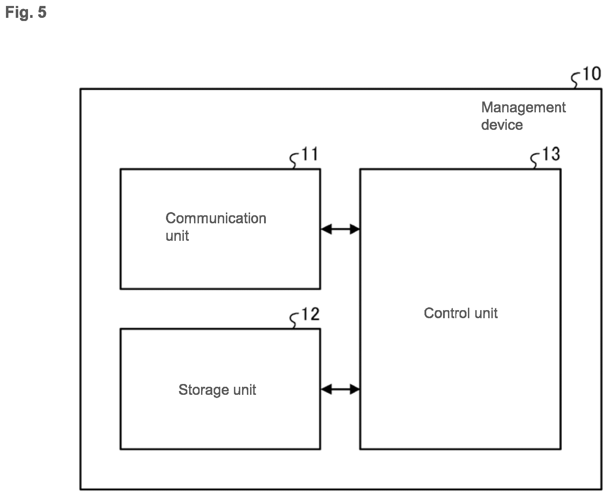

FIG. 5 is a diagram showing the configuration of management device 10 according to this embodiment. Management device 10 includes a communication unit 11, a storage unit 12, and a control unit 13. The configuration shown in FIG. 5 is a functional configuration, and the hardware configuration may differ from this. Also, the functions of management device 10 may be implemented by being statically or dynamically distributed across multiple physically separated configurations. Management device 10 may be composed of multiple server devices.

Communication unit 11 is a communication interface for communicating with wireless communication devices (e.g., base station 20). Communication unit 11 may be a network interface or a device connection interface. Communication unit 11 may be a LAN (Local Area Network) interface such as NIC (Network Interface Card), or may be a USB interface configured by USB (Universal Serial Bus) host controller or USB port. Communication unit 11 may be a wired interface or a wireless interface. Communication unit 11 is controlled by control unit 13.

Storage unit 12 is a readable and writable storage device such as DRAM, SRAM, flash memory, or hard disk. Storage unit 12 stores, for example, the connection state of terminal device 40. Storage unit 12 stores the RRC (Radio Resource Control) state and ECM (EPS Connection Management) state of terminal device 40, or the 5G System CM (Connection Management) state. Storage unit 12 may function as home memory that stores location information of terminal device 40.

Control unit 13 is a controller that controls each part of management device 10. Control unit 13 may be realized by a processor such as CPU (Central Processing Unit) or MPU (Micro Processing Unit). For example, control unit 13 may be realized by a processor executing various programs stored in an internal storage device of management device 10 using RAM (Random Access Memory) as a work area. Control unit 13 may be realized by an integrated circuit such as ASIC (Application Specific Integrated Circuit) or FPGA (Field Programmable Gate Array). Also, control unit 13 may be realized by GPU (Graphics Processing Unit). CPU, MPU, ASIC, FPGA, and GPU can all be considered as controllers. Note that control unit 13 may be composed of multiple physically separated objects. For example, control unit 13 may be composed of multiple semiconductor chips.

### <2-2. Configuration of Base Station>

Base station 20 is a wireless communication device that performs wireless communication with other wireless communication devices (e.g., relay station 30, terminal device 40, or other base station 20). Base station 20 may perform wireless communication with terminal device 40 via relay station 30, or may perform wireless communication directly with terminal device 40.

Base station 20 is a device corresponding to a radio base station (Base Station, Node B, eNB, gNB, or 6GNB, etc.) or a radio access point (Access Point). Base station 20 may be a radio relay station. Base station 20 may be an optical extension device called RRH (Remote Radio Head). Base station 20 may be a receiving station such as FPU (Field Pickup Unit). Base station 20 may be an IAB (Integrated Access and Backhaul) donor node or IAB relay node that provides radio access lines and radio backhaul lines by time division multiplexing, frequency division multiplexing, or spatial division multiplexing.

The radio access technology used by base station 20 may be cellular communication technology. The radio access technology used by base station 20 may be wireless LAN technology. The radio access technology used by base station 20 may be LPWA (Low Power Wide Area) communication technology. However, the radio access technology used by base station 20 is not limited to these and may be other radio access technologies. The wireless communication used by base station 20 may be wireless communication using millimeter waves or wireless communication using terahertz waves. The wireless communication used by base station 20 may be wireless communication using radio waves or wireless communication using infrared or visible light (optical wireless). Also, base station 20 may be capable of NOMA (Non-Orthogonal Multiple Access) communication with terminal device 40. Here, NOMA communication refers to communication (transmission, reception, or both) using non-orthogonal resources. Note that base station 20 may be capable of NOMA communication with other base stations 20.

Note that base station 20 may be capable of communicating with each other via base station-core network interfaces (e.g., NG Interface, S1 Interface, etc.). This interface may be either wired or wireless. Also, base stations may be capable of communicating with other base stations via interbase station interfaces (e.g., Xn Interface, X2 Interface, F1 Interface, etc.). This interface may be either wired or wireless.

The concept of base station (also called "base station device") includes not only donor base stations but also relay base stations (also called "relay stations"). Relay base stations may be any one of RF Repeater, Smart Repeater, and Intelligent Surface. The concept of base station includes not only structures equipped with base station functions but also devices installed on structures.

Structures are, for example, buildings such as high-rise buildings, houses, steel towers, station facilities, airport facilities, port facilities, office buildings, school buildings, hospitals, factories, commercial facilities, and stadiums. The concept of structure includes not only buildings but also non-building structures such as tunnels, bridges, dams, walls, and steel poles, as well as equipment such as cranes, gates, and windmills. The concept of structure includes not only land-based (ground in the narrow sense) or underground structures but also water-based structures such as piers or megafloats, and underwater structures such as marine observation equipment. Base stations can also be referred to as information processing devices.

Base station 20 may be a donor station or a relay station. Also, base station 20 may be a fixed station or a mobile station. A mobile station is a wireless communication device (e.g., base station) configured to be movable. In this case, base station 20 may be a device installed on a mobile body or may be the mobile body itself. For example, a relay station with mobility can be considered as base station 20 as a mobile station. Also, devices that originally have mobility such as vehicles, UAVs (Unmanned Aerial Vehicles) represented by drones, and smartphones, and are equipped with base station functions (at least part of base station functions) also correspond to base station 20 as mobile stations.

Here, the mobile body may be a mobile terminal such as a smartphone or mobile phone. The mobile body may be a mobile body that moves on land (ground in the narrow sense) (e.g., vehicles such as automobiles, bicycles, buses, trucks, motorcycles, trains, or linear motor cars) or may be a mobile body that moves underground (e.g., in tunnels) (e.g., subways). Also, the mobile body may be a mobile body that moves on water (e.g., ships such as passenger ships, cargo ships, or hovercrafts) or may be a mobile body that moves underwater (e.g., submersibles such as submersibles, submarines, or unmanned underwater vehicles). Also, the mobile body may be a mobile body that moves within the atmosphere (e.g., aircraft such as airplanes, airships, or drones).

Base station 20 may be a terrestrial base station (terrestrial station) installed on the ground. Base station 20 may be a base station arranged on a ground structure or may be a base station installed on a mobile body moving on the ground. Base station 20 may be an antenna installed on a structure such as a building and a signal processing device connected to that antenna. Base station 20 may be the structure or mobile body itself. "Ground" is ground in a broad sense that includes not only land (ground in the narrow sense) but also underground, on water, and underwater. Base station 20 is not limited to terrestrial base stations. When communication system 1 is a satellite communication system, base station 20 may be an aircraft station. From the perspective of a satellite station, an aircraft station located on Earth is a terrestrial station.

Base station 20 is not limited to terrestrial stations. Base station 20 may be a non-terrestrial base station (non-terrestrial station) capable of floating in the air or space. Base station 20 may be an aircraft station or satellite station.

A satellite station is a satellite station capable of floating outside the atmosphere. The satellite station may be a device mounted on a space mobile body such as an artificial satellite or may be the space mobile body itself. A space mobile body is a mobile body that moves outside the atmosphere. The space mobile body may be at least one of an artificial satellite, spacecraft, space station, and probe. Of course, the space mobile body may be an artificial celestial body other than these. Note that satellites serving as satellite stations may be any of low earth orbiting (LEO) satellites, medium earth orbiting (MEO) satellites, geostationary earth orbiting (GEO) satellites, or highly elliptical orbiting (HEO) satellites. Satellite stations may be devices mounted on low earth orbit satellites, medium earth orbit satellites, geostationary satellites, or highly elliptical orbit satellites.

An aircraft station is a wireless communication device capable of floating within the atmosphere such as aircraft. The aircraft station may be a device mounted on aircraft or may be the aircraft itself. The concept of aircraft includes not only heavier-than-air aircraft such as airplanes or gliders but also lighter-than-air aircraft such as balloons or airships. The concept of aircraft includes not only heavier-than-air or lighter-than-air aircraft but also rotorcraft such as helicopters or autogyros. Aircraft stations or aircraft equipped with aircraft stations may be unmanned aircraft such as drones.

The concept of unmanned aircraft includes Unmanned Aircraft Systems (UAS) and tethered UAS. The concept of unmanned aircraft includes Lighter than Air UAS (LTA) and Heavier than Air UAS (HTA). The concept of unmanned aircraft also includes High Altitude UAS Platforms (HAPs).

The size of coverage of base station 20 may be relatively large like a macro cell or relatively small like a pico cell. The size of coverage of base station 20 may be extremely small like a femto cell. Base station 20 may have a beamforming function. Base station 20 may have cells or service areas formed for each beam. Additionally or alternatively, base station 20 may have a function to deliver desired waves to predetermined points with pinpoint accuracy by further considering distance information from the antenna of base station 20 in addition to beamforming that gives directivity to beams. This function may be called Beam focusing or Point forming.

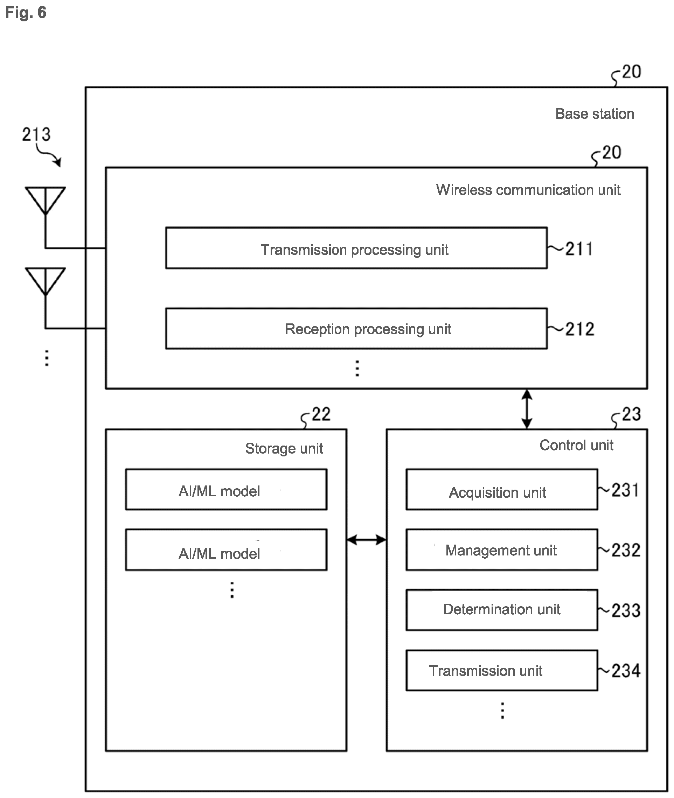

FIG. 6 is a diagram showing the configuration of base station 20 according to this embodiment. Base station 20 includes a wireless communication unit 21, a storage unit 22, and a control unit 23. However, the configuration shown in FIG. 6 is a functional configuration, and the hardware configuration may differ from this. Also, the functions of base station 20 may be implemented by being distributed across multiple physically separated configurations.

Wireless communication unit 21 is a signal processing unit for wireless communication with other wireless communication devices (e.g., at least one of relay station 30, terminal device 40, and other base station 20). Wireless communication unit 21 may be called a wireless transceiver. Wireless communication unit 21 is controlled by control unit 23. Wireless communication unit 21 supports one or more wireless access methods. Wireless communication unit 21 may support at least one of NR, LTE, and 6G. Wireless communication unit 21 may support W-CDMA and cdma2000 in addition to NR, LTE, and 6G. Wireless communication unit 21 may support automatic retransmission technologies such as HARQ (Hybrid Automatic Repeat reQuest). Part or all of these processes executed by wireless communication unit 21 may be regarded as transmission processing (transmission processing described above or below (first transmission processing or second transmission processing)) or reception processing (reception processing described above or below (first reception processing or second reception processing)) of this embodiment. Part or all of these processes (transmission processing or reception processing described above or below) may be executed by control unit 23.

Wireless communication unit 21 may indicate at least one of transmission processing unit 211, reception processing unit 212, and antenna 213. Wireless communication unit 21 may include multiple transmission processing units 211, reception processing units 212, and antennas 213, respectively. When wireless communication unit 21 supports multiple wireless access methods, each part of wireless communication unit 21 may be configured individually for each wireless access method. Transmission processing unit 211 and reception processing unit 212 may be configured individually for LTE, NR, and 6G. Antenna 213 may be configured by multiple antenna elements, for example, multiple patch antennas. Wireless communication unit 21 may have a beamforming function. For example, wireless communication unit 21 may have a polarization beamforming function using vertical polarization (V polarization) and horizontal polarization (H polarization) (or a polarization beamforming function using dual polarization in polarization directions of 45 degrees and -45 degrees from the vertical direction).

Transmission processing unit 211 performs transmission processing of downlink control information and downlink data. For example, transmission processing unit 211 encodes downlink control information and downlink data input from control unit 23 using encoding schemes such as block coding, convolutional coding, turbo coding, etc. Here, the encoding may be performed using Polar Code or LDPC (Low Density Parity Check) Code. Then, transmission processing unit 211 modulates the encoded bits using a predetermined modulation scheme (for example, BPSK, QPSK, 16QAM, 64QAM, 256QAM, or higher-order multilevel modulation schemes). In this case, signal points on the constellation do not necessarily need to be equidistant. The constellation may be a Non Uniform Constellation (NUC). Then, transmission processing unit 211 multiplexes modulation symbols of each channel and downlink reference signals, and arranges them in predetermined resource elements. Then, transmission processing unit 211 performs various signal processing on the multiplexed signals. For example, transmission processing unit 211 performs processing such as conversion to frequency domain by discrete Fourier transform, addition of guard interval (cyclic prefix), generation of baseband digital signals, conversion to analog signals, quadrature modulation, up-conversion, removal of unnecessary frequency components, power amplification, etc. The signals generated by transmission processing unit 211 are transmitted from antenna 213. Part or all of these processes executed by transmission processing unit 211 may be regarded as transmission processing of this embodiment (transmission processing described above or below (first transmission processing or second transmission processing)).

Reception processing unit 212 performs processing of uplink signals received via antenna 213. For example, reception processing unit 212 performs down-conversion, removal of unnecessary frequency components, amplification level control, quadrature demodulation, conversion to digital signals, removal of guard interval (cyclic prefix), extraction of frequency domain signals by discrete Fourier transform, etc. on uplink signals. Then, reception processing unit 212 separates uplink channels such as PUSCH (Physical Uplink Shared Channel), PUCCH (Physical Uplink Control Channel), etc. and uplink reference signals from the signals that have undergone these processes. Also, reception processing unit 212 demodulates received signals using modulation schemes such as BPSK (Binary Phase Shift Keying), QPSK (Quadrature Phase Shift Keying), etc. for modulation symbols of uplink channels. The modulation scheme used for demodulation may be 16QAM (Quadrature Amplitude Modulation), 64QAM, or 256QAM. In this case, signal points on the constellation do not necessarily need to be equidistant. The constellation may be a Non Uniform Constellation (NUC). Then, reception processing unit 212 performs decoding processing on the demodulated encoded bits of uplink channels. The decoded uplink data and uplink control information are output to control unit 23. Part or all of these processes executed by reception processing unit 212 may be regarded as reception processing of this embodiment (reception processing described above or below (first reception processing or second reception processing)).

Antenna 213 is an antenna device that mutually converts current and radio waves. Antenna 213 may be configured by one antenna element, for example, one patch antenna. Antenna 213 may be configured by multiple antenna elements, for example, multiple patch antennas. When antenna 213 is configured by multiple antenna elements, wireless communication unit 21 may have a beamforming function. Wireless communication unit 21 may be configured to generate directional beams by controlling the directivity of wireless signals using multiple antenna elements. Antenna 213 may be a dual polarization antenna. When antenna 213 is a dual polarization antenna, wireless communication unit 21 may use vertical polarization (V polarization) and horizontal polarization (H polarization) (or dual polarization in polarization directions of 45 degrees and -45 degrees from the vertical direction) when transmitting wireless signals. Wireless communication unit 21 may control the directivity of wireless signals transmitted using vertical polarization and horizontal polarization (or dual polarization in polarization directions of 45 degrees and -45 degrees from the vertical direction). Also, wireless communication unit 21 may transmit and receive spatially multiplexed signals via multiple layers configured by multiple antenna elements.

Storage unit 22 is a readable and writable storage device such as DRAM, SRAM, flash memory, or hard disk. Storage unit 22 may store AI/ML models used in processing of each functionality. The AI/ML models stored by base station 20 may be the same as or different from the AI/ML models stored by relay station 30 and terminal device 40 described later.

Control unit 23 is a controller that controls each part of base station 20. Control unit 23 may be realized by a processor such as CPU or MPU. For example, control unit 23 may be realized by a processor executing various programs stored in an internal storage device of base station 20 using RAM as a work area. Control unit 23 may be realized by an integrated circuit such as ASIC or FPGA. Also, control unit 23 may be realized by GPU. CPU, MPU, ASIC, FPGA, and GPU can all be considered as controllers. Note that control unit 23 may be composed of multiple physically separated objects. For example, control unit 23 may be composed of multiple semiconductor chips.

Control unit 23 includes at least one block among acquisition unit 231, management unit 232, determination unit 233, and transmission unit 234. Each block constituting control unit 23 (acquisition unit 231 to transmission unit 234) is a functional block indicating the functions of control unit 23. These functional blocks may be software blocks or hardware blocks. For example, each of the above functional blocks may be one software module realized by software (including microprograms), or may be one circuit block on a semiconductor chip (die). Of course, each functional block may be one processor or one integrated circuit. Control unit 23 may be configured in functional units different from the above functional blocks. The configuration method of functional blocks is arbitrary. The operation of each functional block of control unit 23 may be the same as the operation of each functional block of relay station 30 or terminal device 40.

Note that in some embodiments, base station 20 may be configured by a collection of multiple physical or logical devices. As an example, base station 20 of this embodiment may be distinguished into multiple devices such as BBU (Baseband Unit) and RU (Radio Unit). Base station 20 may be interpreted as a collection of these multiple devices. Also, the base station may be either BBU or RU, or both. BBU and RU may be connected by a predetermined interface such as eCPRI (enhanced Common Public Radio Interface).

RU may be referred to as RRU (Remote Radio Unit) or RD (Radio DoT). RU may correspond to gNB-DU (gNB Distributed Unit) described later. BBU may correspond to gNB-CU (gNB Central Unit) described later. RU may be a device integrally formed with an antenna. The antenna of base station 20, for example, an antenna integrally formed with RU, may adopt Advanced Antenna System and support MIMO such as FD-MIMO or beamforming. The antenna of base station 20 may include, for example, 64 transmission antenna ports and 64 reception antenna ports.

The antenna mounted on RU may be an antenna panel composed of one or more antenna elements, and RU may mount one or more antenna panels. RU may mount two types of antenna panels: a horizontal polarization antenna panel and a vertical polarization antenna panel. RU may mount two types of antenna panels: a right-hand circular polarization antenna panel and a left-hand circular polarization antenna panel, or an antenna panel with polarization direction of 45 degrees from the vertical direction and an antenna panel with polarization direction of -45 degrees. Multiple antennas having these multiple polarization directions may be implemented in one antenna panel. RU may form and control independent beams for each antenna panel.

Multiple base stations 20 may be connected to each other. One or more base stations 20 may be included in a Radio Access Network (RAN). At this time, base station 20 may be simply referred to as RAN, RAN node, AN (Access Network), or AN node, etc. RAN in LTE may be called EUTRAN (Enhanced Universal Terrestrial RAN). RAN in NR may be called NGRAN. Also, RAN in 6G may be called 6GRAN. RAN in W-CDMA (UMTS) may be called UTRAN.

Base station 20 of LTE may be referred to as eNodeB (Evolved Node B) or eNB. At this time, EUTRAN includes one or more eNodeBs (eNBs). Base station 20 of NR may be referred to as gNodeB or gNB. At this time, NGRAN includes one or more gNBs. 6G base stations may be referred to as 6GNodeB, 6gNodeB, 6GNB, or 6gNB. At this time, 6GRAN includes one or more 6GNBs. EUTRAN may include gNB (en-gNB) connected to the core network (EPC) in LTE communication system (EPS). NGRAN may include ng-eNB connected to core network 5GC in 5G communication system (5GS).

When base station 20 is eNB, gNB, 6GNB, etc., base station 20 may be referred to as 3GPP Access. When base station 20 is a wireless access point (Access Point), base station 20 may be referred to as Non-3GPP Access. Base station 20 may be an optical extension device called RRH (Remote Radio Head). When base station 20 is gNB, base station 20 may be a combination of the aforementioned gNB-CU and gNB-DU, or may be either gNB-CU or gNB-DU.

Here, gNB-CU hosts multiple upper layers (for example, RRC (Radio Resource Control), SDAP (Service Data Adaptation Protocol), PDCP (Packet Data Convergence Protocol)) of the access stratum (Access Stratum) for communication with UE. On the other hand, gNB-DU hosts multiple lower layers (for example, RLC (Radio Link Control), MAC (Medium Access Control), PHY (Physical layer)) of the access stratum (Access Stratum). That is, among messages/information described later, RRC signaling (semi-static notification) is generated by gNB-CU, while MAC CE and DCI (dynamic notification) may be generated by gNB-DU. Or, among RRC configurations (semi-static notifications), some configurations such as IE:cellGroupConfig may be generated by gNB-DU, and the remaining configurations may be generated by gNB-CU. These configurations may be transmitted and received via the F1 interface described later.

Base station 20 may be configured to be capable of communicating with other base stations. When multiple base stations 20 are eNBs or a combination of eNB and en-gNB, these base stations 20 may be connected by X2 interface. When multiple base stations 20 are gNBs or a combination of gn-eNB and gNB, these base stations 20 may be connected by Xn interface. When multiple base stations 20 are a combination of gNB-CU and gNB-DU, these base stations 20 may be connected by the aforementioned F1 interface. Messages/information described later (for example, RRC signaling, MAC CE (MAC Control Element), or DCI (Downlink Control Information), etc.) may be transmitted between multiple base stations 20 via these inter-base station interfaces (for example, X2 interface, Xn interface, or F1 interface, etc.).

Cells provided by base station 20 may be called Serving Cells. The concept of serving cell includes PCell (Primary Cell) and SCell (Secondary Cell). When dual connectivity is provided to terminal device 40, PCell provided by MN (Master Node) and zero or more SCells may be called Master Cell Group. Dual connectivity may be at least one of EUTRA-EUTRA Dual Connectivity, EUTRA-NR Dual Connectivity (ENDC), EUTRA-NR Dual Connectivity with 5GC, NR-EUTRA Dual Connectivity (NEDC), NR-NR Dual Connectivity, NR-6G Dual Connectivity, and 6G-NR Dual Connectivity. Of course, dual connectivity is not limited to these.

Serving cells may include PSCell (Primary Secondary Cell, or Primary SCG Cell). When dual connectivity is provided to terminal device 40, PSCell provided by SN (Secondary Node) and zero or more SCells may be called SCG (Secondary Cell Group). Unless special configuration (for example, PUCCH on SCell) is made, physical uplink control channel (PUCCH) is transmitted by PCell and PSCell, but not transmitted by SCell. Radio Link Failure is detected by PCell and PSCell, but not detected (need not be detected) by SCell. Thus, PCell and PSCell play special roles among serving cells, so they are also called SpCell (Special Cell).

One cell may be associated with one downlink component carrier and one uplink component carrier. The system bandwidth corresponding to one cell may be divided into multiple BWPs (Bandwidth Parts). At this time, one or more BWPs are configured for terminal device 40, and one BWP may be used by terminal device 40 as Active BWP. Radio resources that terminal device 40 can use, for example, frequency band, numerology (subcarrier spacing), or slot format (Slot configuration), may differ for each cell, each component carrier, or each BWP.

### <2-3. Configuration of Relay Station>

Relay station 30 is a wireless communication device that serves as a repeater for base station 20. Relay station 30 is a type of base station. Relay station 30 is a type of information processing device. Relay station 30 can also be referred to as a relay base station. Note that relay station 30 may be a device called a repeater (for example, RF Repeater, Smart Repeater, Intelligent Surface). Relay station 30 is a wireless communication device that performs wireless communication with other wireless communication devices (for example, base station 20, other relay station 30, or terminal device 40).

Relay station 30 may be capable of NOMA communication with terminal device 40. Relay station 30 relays communication between base station 20 and terminal device 40. Relay station 30 may be capable of wireless communication with other relay station 30 and base station 20. Relay station 30 may be a terrestrial station device or a non-terrestrial station device. Relay station 30 constitutes radio access network RAN together with base station 20.

Relay station 30 may be a fixed device, a movable device, or a floating device. The size of coverage of relay station 30 is not limited to a specific size. The cell covered by relay station 30 may be a macro cell, a micro cell, or a small cell.

Relay station 30 may be a device mounted on other devices as long as the relay function is satisfied. For example, relay station 30 may be mounted on terminal devices such as smartphones, may be mounted on mobile bodies such as automobiles, trains, balloons, airplanes, or drones, or may be mounted on home appliances such as televisions, game consoles, air conditioners, refrigerators, or lighting equipment.

The configuration of relay station 30 may be the same as the configuration of base station 20 described above. Relay station 30, like base station 20 described above, may be a device installed on a mobile body or may be the mobile body itself. The mobile body may be a mobile terminal such as a smartphone or mobile phone as described above. The mobile body may be a mobile body that moves on land (ground in the narrow sense) or may be a mobile body that moves underground. The mobile body may be a mobile body that moves on water or may be a mobile body that moves underwater. The mobile body may be a mobile body that moves within the atmosphere or may be a mobile body that moves outside the atmosphere. Relay station 30 may be a terrestrial station device or a non-terrestrial station device. Relay station 30 may be an aircraft station or satellite station, etc.

The size of coverage of relay station 30, like base station 20, may be large like a macro cell or small like a pico cell. The size of coverage of relay station 30 may be extremely small like a femto cell. Relay station 30 may have a beamforming function. Relay station 30 may have cells or service areas formed for each beam.

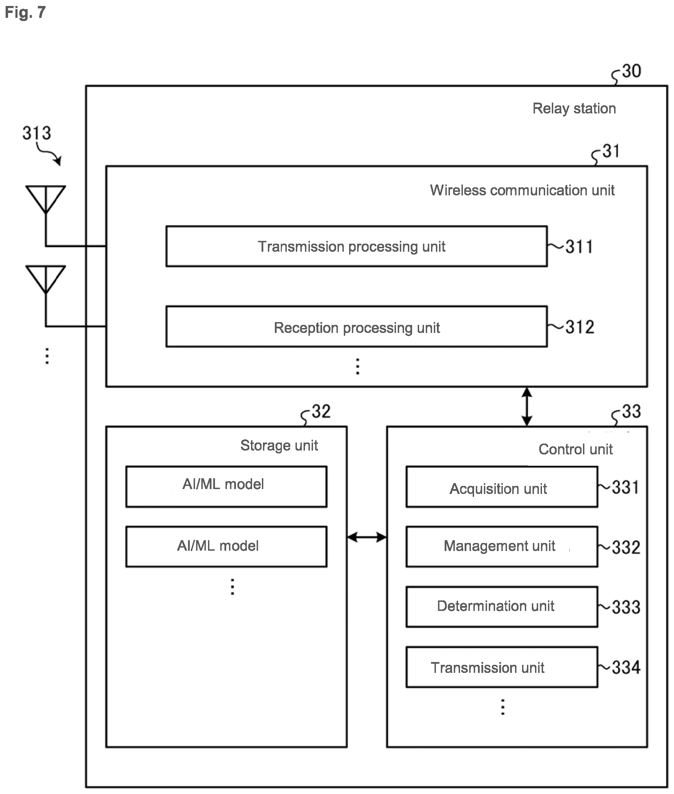

FIG. 7 is a diagram showing the configuration of relay station 30 according to this embodiment. Relay station 30 includes a wireless communication unit 31, a storage unit 32, and a control unit 33. However, the configuration shown in FIG. 7 is a functional configuration, and the hardware configuration may differ from this. Also, the functions of relay station 30 may be implemented by being distributed across multiple physically separated configurations.

Wireless communication unit 31 is a signal processing unit for wireless communication with other wireless communication devices (for example, at least one of base station 20, terminal device 40, and other relay station 30). Wireless communication unit 31 may be called a wireless transceiver. Wireless communication unit 31 supports one or multiple wireless access methods. Wireless communication unit 31 may support at least one of NR, LTE, and 6G. Wireless communication unit 31 may support W-CDMA and cdma2000 in addition to NR, LTE, and 6G. Part or all of the processing executed by wireless communication unit 31 may be regarded as transmission processing (transmission processing described above or below (first transmission processing or second transmission processing)) or reception processing (reception processing described above or below (first reception processing or second reception processing)) of this embodiment. Part or all of these processes (transmission processing or reception processing described above or below) may be executed by control unit 33.

Wireless communication unit 31 may indicate at least one of transmission processing unit 311, reception processing unit 312, and antenna 313. Wireless communication unit 31 may include multiple transmission processing units 311, reception processing units 312, and antennas 313, respectively. When wireless communication unit 31 supports multiple wireless access methods, each part of wireless communication unit 31 may be configured individually for each wireless access method. Transmission processing unit 311 and reception processing unit 312 may be configured individually for LTE, NR, and 6G. The configurations of transmission processing unit 311, reception processing unit 312, and antenna 313 may be the same as the configurations of transmission processing unit 211, reception processing unit 212, and antenna 213 of base station 20 described above. Wireless communication unit 31 may have a beamforming function, similar to wireless communication unit 21 of base station 20. Part or all of the processing executed by transmission processing unit 311 may be regarded as transmission processing of this embodiment (transmission processing described above or below (first transmission processing or second transmission processing)). Also, part or all of the processing executed by reception processing unit 312 may be regarded as reception processing of this embodiment (reception processing described above or below (first reception processing or second reception processing)).

Storage unit 32 is a readable and writable storage device such as DRAM, SRAM, flash memory, or hard disk. Storage unit 32 functions as storage means for relay station 30. The configuration and function of storage unit 32 may be the same as the configuration and function of storage unit 22 of base station 20 described above. Storage unit 32 may store AI/ML models used in processing of each functionality. The AI/ML models stored by relay station 30 may be the same as or different from the AI/ML models stored by base station 20 described above and terminal device 40 described later.

Control unit 33 is a controller that controls each part of relay station 30. Control unit 33 may be realized by a processor such as CPU or MPU. Specifically, control unit 33 may be realized by a processor executing various programs stored in an internal storage device of relay station 30 using RAM or the like as a work area. Control unit 33 may be realized by an integrated circuit such as ASIC or FPGA. CPU, MPU, ASIC, and FPGA can all be considered as controllers. Also, control unit 33 may be realized by GPU. CPU, MPU, ASIC, FPGA, and GPU can all be considered as controllers. Note that control unit 33 may be composed of multiple physically separated objects. For example, control unit 33 may be composed of multiple semiconductor chips. The configuration and function of control unit 33 may be the same as the configuration and function of control unit 23 of base station 20 described above.

Control unit 33 includes at least one block among acquisition unit 331, management unit 332, determination unit 333, and transmission unit 334. Each block constituting control unit 33 (acquisition unit 331 to transmission unit 334) is a functional block indicating the functions of control unit 33. These functional blocks may be software blocks or hardware blocks. For example, each of the above functional blocks may be one software module realized by software (including microprograms), or may be one circuit block on a semiconductor chip (die). Of course, each functional block may be one processor or one integrated circuit. Control unit 33 may be configured in functional units different from the above functional blocks. The configuration method of functional blocks is arbitrary. The operation of each functional block of control unit 33 may be the same as the operation of each functional block of base station 20 or terminal device 40.

Note that relay station 30 may be an IAB relay node. Relay station 30 operates as IAB-MT (Mobile Termination) for an IAB donor node that provides backhaul, and operates as IAB-DU (Distributed Unit) for terminal device 40 that provides access. The IAB donor node may be, for example, base station 20, and operates as IAB-CU (Central Unit).

### <2-4. Configuration of Terminal Device>

Terminal device 40 is a wireless communication device that performs wireless communication with other wireless communication devices (for example, base station 20, relay station 30, or other terminal device 40, etc.). Terminal device 40 can be referred to as UE (User Equipment) 40.

Terminal device 40 can adopt any form of information processing device (computer). For example, terminal device 40 may be a mobile terminal such as a mobile phone, smart device (smartphone or tablet), PDA (Personal Digital Assistant), or notebook PC. Also, terminal device 40 may be a communication module that is connected to an information processing device (for example, an imaging device without wireless communication function) and provides wireless communication function to the information processing device. Also, terminal device 40 may be an imaging device (for example, a camcorder) equipped with wireless communication function.

Also, terminal device 40 may be a motorcycle or mobile relay vehicle equipped with communication equipment such as FPU (Field Pickup Unit). Also, terminal device 40 may be an M2M (Machine to Machine) device or IoT (Internet of Things) device. Also, terminal device 40 may be a wearable device such as a smart watch.

Also, terminal device 40 may be an XR (Extended Reality) device such as an AR (Augmented Reality) device, VR (Virtual Reality) device, or MR (Mixed Reality) device. At this time, the XR device may be a glasses-type device such as AR glasses or MR glasses, or may be a head-mounted device such as a VR head-mounted display. When terminal device 40 is an XR device, terminal device 40 may be a standalone device composed only of a user-worn part (for example, glasses part). Also, terminal device 40 may be a terminal-linked device composed of a user-worn part (for example, glasses part) and a terminal part (for example, smart device) that works in conjunction with that part.

Terminal device 40 may be capable of NOMA communication with base station 20. Terminal device 40 may be capable of using automatic retransmission technologies such as HARQ when communicating with base station 20. Terminal device 40 may be capable of sidelink communication with other terminal devices 40. Terminal device 40 may be capable of using automatic retransmission technologies such as HARQ when performing sidelink communication. Terminal device 40 may be capable of NOMA communication when performing sidelink communication with other terminal devices 40. Terminal device 40 may be capable of LPWA communication with other wireless communication devices such as base station 20. The wireless communication used by terminal device 40 may be wireless communication using millimeter waves. The wireless communication used by terminal device 40 may be wireless communication using radio waves, including sidelink communication, or may be wireless communication using infrared or visible light (i.e., optical wireless).

Terminal device 40 may be a movable wireless communication device, i.e., a mobile device. Terminal device 40 may be a wireless communication device installed on a mobile body, or may be the mobile body itself. Terminal device 40 may be a vehicle that moves on roads such as automobiles, buses, trucks, or motorcycles, or a train vehicle that runs on tracks, or may be a wireless communication device mounted on such vehicles. The mobile body may be a mobile terminal, or may be a mobile body that moves on land (ground in the narrow sense), underground, on water, or underwater. Also, the mobile body may be a mobile body that moves within the atmosphere such as aircraft, airships, balloons, or helicopters, or may be a mobile body that moves outside the atmosphere such as artificial satellites. The mobile body may be a UAV (Unmanned Aerial Vehicle) such as a drone. Also, terminal device 40 may be a wireless communication device mounted on a mobile body.

Terminal device 40 may be capable of simultaneously connecting to and communicating with multiple base stations 20 or multiple cells. When one base station 20 supports a communication area via multiple cells (for example, pCell or sCell), communication between base station 20 and terminal device 40 can be performed by bundling these multiple cells using Carrier Aggregation (CA) technology, Dual Connectivity (DC) technology, or Multi-Connectivity (MC) technology. Alternatively, communication between terminal device 40 and these multiple base stations 20 can be performed via cells of different base stations 20 using Coordinated Multi-Point Transmission and Reception (CoMP) technology.

Terminal device 40 may be a relay terminal that relays communication to remote terminals.

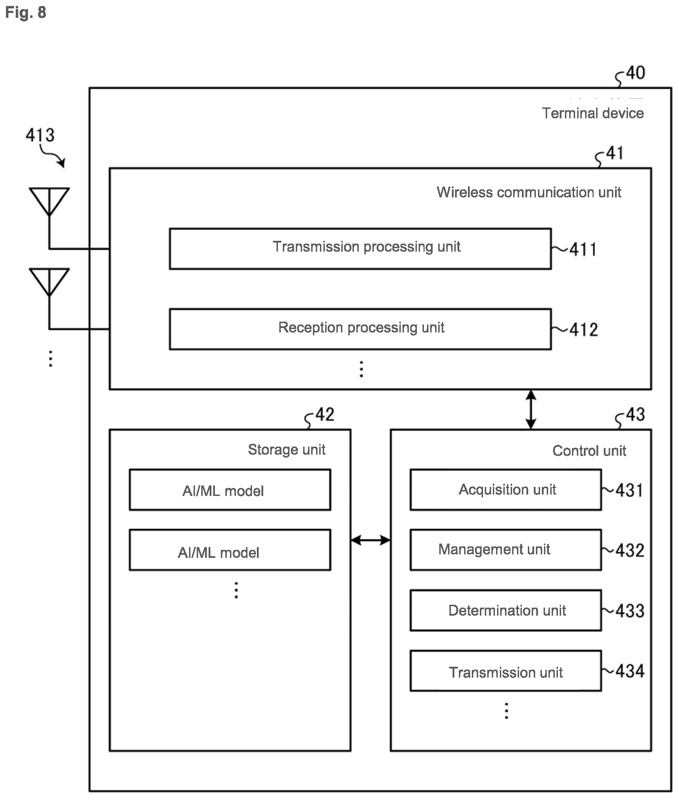

FIG. 8 is a diagram showing the configuration of terminal device 40 according to this embodiment. Terminal device 40 includes a wireless communication unit 41, a storage unit 42, and a control unit 43. However, the configuration shown in FIG. 8 is a functional configuration, and the hardware configuration may differ from this. Also, the functions of terminal device 40 may be implemented by being distributed across multiple physically separated configurations.

Wireless communication unit 41 is a signal processing unit for wireless communication with other wireless communication devices (for example, at least one of base station 20, relay station 30, and other terminal devices 40). Wireless communication unit 41 may be called a wireless transceiver. Wireless communication unit 41 is controlled by control unit 43. Wireless communication unit 41 supports one or multiple wireless access methods. Wireless communication unit 41 may support at least one of NR, LTE, and 6G. Wireless communication unit 41 may support W-CDMA and cdma2000 in addition to NR, LTE, and 6G. Wireless communication unit 41 may support automatic retransmission technologies such as HARQ (Hybrid Automatic Repeat reQuest). Part or all of the processing executed by wireless communication unit 41 may be regarded as transmission processing (transmission processing described above or below (first transmission processing or second transmission processing)) or reception processing (reception processing described above or below (first reception processing or second reception processing)) of this embodiment. Part or all of these processes (transmission processing or reception processing described above or below) may be executed by control unit 43.

Wireless communication unit 41 may indicate at least one of transmission processing unit 411, reception processing unit 412, and antenna 413. Wireless communication unit 41 may include multiple transmission processing units 411, reception processing units 412, and antennas 413, respectively. When wireless communication unit 41 supports multiple wireless access methods, each part of wireless communication unit 41 may be configured individually for each wireless access method. Transmission processing unit 411 and reception processing unit 412 may be configured individually for LTE, NR, and 6G. Antenna 413 may be configured by multiple antenna elements, for example, multiple patch antennas. Wireless communication unit 41 may have a beamforming function. For example, wireless communication unit 41 may have a polarization beamforming function using vertical polarization (V polarization) and horizontal polarization (H polarization) (or a polarization beamforming function using dual polarization in polarization directions of 45 degrees and -45 degrees from the vertical direction). Also, antenna 413 does not necessarily have to be part of terminal device 40 or wireless communication unit 41. For example, antenna 413 may not be included in wireless communication unit 41 and may be installed in terminal device 40 as an external antenna. Part or all of the processing executed by transmission processing unit 411 may be regarded as transmission processing of this embodiment (transmission processing described above or below (first transmission processing or second transmission processing)). Also, part or all of the processing executed by reception processing unit 412 may be regarded as reception processing of this embodiment (reception processing described above or below (first reception processing or second reception processing)).

Storage unit 42 is a readable and writable storage device such as DRAM, SRAM, flash memory, or hard disk. Storage unit 42 functions as storage means for terminal device 40. Storage unit 42 may store AI/ML models used in processing of each functionality. The AI/ML models stored by terminal device 40 may be the same as or different from the AI/ML models stored by base station 20 or relay station 30 described above.

Control unit 43 is a controller that controls each part of terminal device 40. Control unit 43 may be realized by a processor such as CPU or MPU. For example, control unit 43 may be realized by a processor executing various programs stored in an internal storage device of terminal device 40 using RAM or the like as a work area. Control unit 43 may be realized by an integrated circuit such as ASIC or FPGA. Control unit 43 may be realized by GPU. CPU, MPU, ASIC, FPGA, and GPU can all be considered as controllers. Note that control unit 43 may be composed of multiple physically separated objects. For example, control unit 43 may be composed of multiple semiconductor chips.

Control unit 43 includes at least one block among acquisition unit 431, management unit 432, determination unit 433, and transmission unit 434. Each block constituting control unit 43 (acquisition unit 431 to transmission unit 434) is a functional block indicating the functions of control unit 43. These functional blocks may be software blocks or hardware blocks. For example, each of the above functional blocks may be one software module realized by software (including microprograms), or may be one circuit block on a semiconductor chip (die). Of course, each functional block may be one processor or one integrated circuit. Control unit 43 may be configured in functional units different from the above functional blocks. The configuration method of functional blocks is arbitrary. The operation of each functional block of control unit 43 may be the same as the operation of each functional block of base station 20 or relay station 30.

### <2-5. AI/ML Models>

At least one of storage unit 22 of base station 20, storage unit 32 of relay station 30, and storage unit 42 of terminal device 40 may store AI/ML models. Also, at least one of base station 20, relay station 30, and terminal device 40 may execute various processes using AI/ML models. For example, at least one of base station 20, relay station 30, and terminal device 40 may generate information such as assistance information and transmission data using AI/ML models. Note that in the following description, AI/ML models may be referred to as learning models or simply models.

The learning model is, for example, a neural network model. A neural network model is composed of layers called input layer, intermediate layer (or hidden layer), and output layer that include multiple nodes, and each node is connected via edges. Each layer has a function called an activation function, and each edge is weighted. The learning model has one or multiple intermediate layers (or hidden layers). When the learning model is a neural network model, learning of the learning model means, for example, setting the number of intermediate layers (or hidden layers), the number of nodes in each layer, or the weight of each edge.

Here, the neural network model may be a model based on deep learning. In this case, the neural network model may be a model in the form called DNN (Deep Neural Network). Also, the neural network model may be a model in the form called CNN (Convolution Neural Network), RNN (Recurrent Neural Network), or LSTM (Long Short-Term Memory). Of course, neural network models are not limited to these forms of models.

In CNN, the hidden layer is composed of layers called convolution layer and pooling layer. In the convolution layer, filtering by convolution operation is applied to extract data called feature maps. In the pooling layer, information of feature maps output from the convolution layer is compressed and down sampling is applied. CNN is used, for example, for image recognition applications, where information of each pixel, also called image pixels, is input to the input layer, and information related to the recognized image can be obtained as the output layer.

RNN has a network structure where hidden layer values are recursively input to the hidden layer, and for example, short-term time series data is processed.

In LSTM, by introducing a parameter called memory cell that maintains the state of the intermediate layer to the intermediate layer output of RNN, the influence of distant past outputs can be maintained. That is, LSTM processes time series data for a longer period compared to RNN.

Also, learning models are not limited to neural network models. For example, the learning model may be a model based on reinforcement learning. In reinforcement learning, actions (settings) that maximize value through trial and error are learned. In addition, the learning model may be a logistic regression model.

Note that the learning model may be composed of multiple models. For example, the learning model may be composed of multiple neural network models. More specifically, the learning model may be composed of multiple neural network models selected from, for example, CNN, RNN, and LSTM. When the learning model is composed of multiple neural network models, these multiple neural network models may be in a dependent relationship or in a parallel relationship.

Note that the learning model can be rephrased as an AI (Artificial Intelligence) model, ML (Machine Learning) model, or training model (Trained Model). In the following description, the learning model may be simply referred to as a model. Hereinafter, the learning model will be explained using learning model M shown in FIG. 1A as an example, but the learning model of this embodiment is not limited to learning model M shown below.

Learning model M is a learning model composed of a first model and a second model. The first model and the second model are each sub-models of learning model M. The first model is the first half of learning model M and is stored in the transmitting device. The second model is the second half of learning model M and is stored in the receiving device. Note that sub-models can also be considered as a type of learning model. Hereinafter, the learning model of this embodiment will be described in detail. In the following description, the learning model will be explained using the generation of assistance information as an example, but the functions of the learning model are not limited to the generation of assistance information.

Learning model M is, for example, a learning model (trained model) that has learned using assistance information T as input data and assistance information R as correct labels (teacher data). As described above, assistance information is information necessary for the receiving device to perform processing related to wireless communication, or information to assist the receiving device's processing related to wireless communication. For example, assistance information is information (for example, control information) necessary for operations such as uplink data transmission, sidelink transmission, unlicensed communication, handover, etc. of terminal device 40. Note that assistance information R is information related to assistance information T. Assistance information R may be information with different content from assistance information T, or may be information with the same content as assistance information T.

When base station 20 or terminal device 40 inputs first information (for example, assistance information T) to the first model of learning model M, the first model outputs second information (for example, compressed information/feature information of assistance information T). Also, when base station 20 or terminal device 40 inputs the second information to the second model of learning model M, the second model outputs third information (for example, assistance information R).

In this case, learning model M includes an input layer that inputs first information (for example, assistance information T), an output layer that outputs third information (for example, assistance information R), a first element belonging to any layer from the input layer to the output layer other than the output layer, and a second element whose value is calculated based on the first element and the weight of the first element, and may be a learning model for causing a computer to function so as to output third information from the output layer according to the first information input to the input layer by performing operations based on the first element and the weight of the first element (i.e., connection coefficient) with each element belonging to each layer other than the output layer as the first element for information input to the input layer.

Here, assume that learning model M is realized by a neural network having one or more intermediate layers, such as DNN. In this case, the first element included in the learning model corresponds to any node that the input layer or intermediate layer has. Also, the second element corresponds to a next-stage node that is a node to which values are transmitted from the node corresponding to the first element. Also, the weight of the first element corresponds to a connection coefficient that is a weight considered for values transmitted from the node corresponding to the first element to the node corresponding to the second element.

Also, assume that learning model M is realized by a regression model represented by "y=a1*x1+a2*x2+...+ai*xi". In this case, the first element included in learning model M corresponds to input data (xi) such as x1 and x2. Also, the weight of the first element corresponds to coefficient ai corresponding to xi. Here, the regression model can be regarded as a simple perceptron having an input layer and an output layer. When each model is regarded as a simple perceptron, the first element corresponds to any node that the input layer has, and the second element can be regarded as a node that the output layer has.

Base station 20 or terminal device 40 calculates output information using a model having any structure such as a neural network or regression model. Specifically, learning model M has coefficients set so as to output third information (for example, assistance information R) when first information (for example, assistance information T) is input. For example, base station 20 or terminal device 40 sets coefficients based on the similarity between the third information and values obtained by inputting the first information to the learning model. Base station 20 or terminal device 40 generates second information from first information using such a sub-model (first model) of learning model M. Alternatively, base station 20 or terminal device 40 generates third information from second information using such a sub-model (second model) of learning model M.

Note that in the above example, as an example of learning model M, a model that outputs third information when first information is input was shown. However, learning model M according to the embodiment may be a model generated based on results obtained by repeating input and output of data to the learning model.

Also, when base station 20 or terminal device 40 performs learning or generation of output information using GAN (Generative Adversarial Networks), the learning model may be a model that constitutes part of the GAN.

Note that the learning device that performs learning of learning model M may be base station 20, relay station 30, or terminal device 40. Also, the learning device may be another information processing device (for example, management device 10, or a server device network-connected to management device 10). For example, assume that a server device performs learning of learning model M. In this case, the server device performs learning of learning model M and stores the learned learning model M in a storage unit. More specifically, the server device sets connection coefficients of learning model M so that when first information (for example, assistance information T) is input to learning model M, the learning model outputs third information (for example, assistance information R).

For example, an information processing device (for example, management device 10, base station 20, relay station 30, terminal device 40, or server device) inputs first information to nodes of the input layer of learning model M, and propagates data through each intermediate layer to the output layer of learning model M, thereby causing learning model M to output third information. Then, the information processing device corrects connection coefficients of learning model M based on the difference between values actually output by learning model M and values used as correct labels (teacher data). At this time, the information processing device may correct connection coefficients using techniques such as backpropagation. At this time, the server device may correct connection coefficients based on cosine similarity between a vector indicating input values and a vector indicating values actually output by the learning model.

Note that any learning algorithm may be used for learning. For example, the information processing device may perform learning of the learning model using learning algorithms such as neural networks, support vector machines, clustering, reinforcement learning, random forests, decision trees, etc.

The above describes the generation method of learning model M, but the above embodiments are also applicable to learning models other than learning model M.

Also, the learning algorithm used in this embodiment may be one where a single information processing device (for example, management device 10, base station 20, relay station 30, terminal device 40, or server device) learns independently, or may be one where multiple information processing devices (for example, multiple devices selected from management device 10, base station 20, relay station 30, terminal device 40, and server device) learn in cooperation. An example of a learning algorithm where multiple information processing devices learn in cooperation is federated learning.

### <<3. Network Architecture>>

The above describes the configuration of communication system 1, and next, the network architecture that can be applied in communication system 1 of this embodiment will be described. Here, as an example of core network CN of communication system 1, the architecture of the fifth generation mobile communication system (5G) will be described.

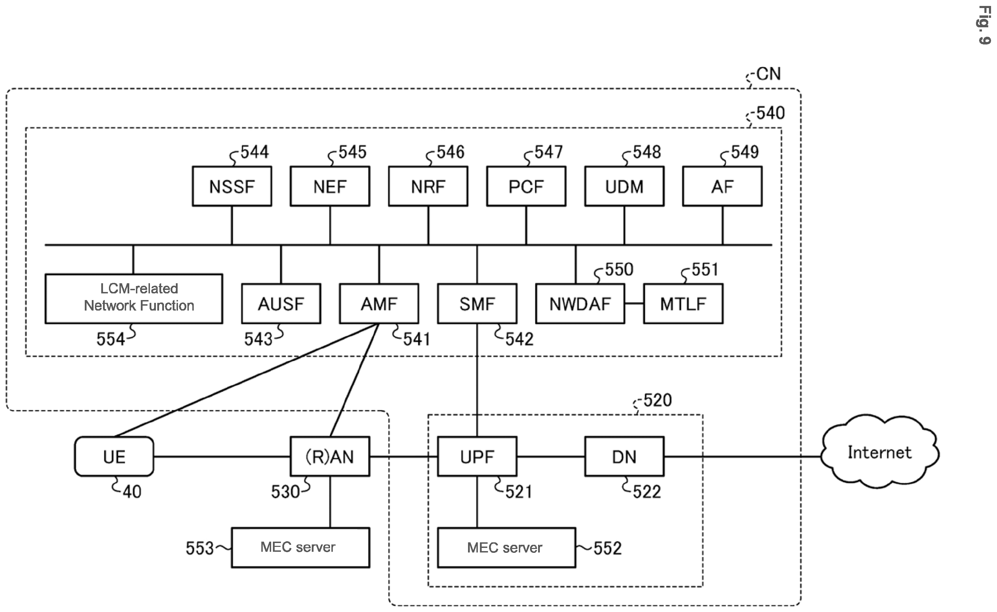

FIG. 9 is a diagram showing an example of 5G architecture. The core network CN of 5G is also called 5GC (5G Core)/NGC (Next Generation Core). Hereinafter, the core network CN of 5G is also referred to as 5GC/NGC. Core network CN connects to UE (User Equipment) 40 via (R)AN 530.

Note that terminal device 40 shown in FIG. 8 is an example of UE 40. Base station 20 shown in FIG. 6 or relay station 30 shown in FIG. 7 is an example of RAN/AN 530. Also, management device 10 shown in FIG. 5 is an example of a device having functions of, for example, AF 549 or AMF 541.

(R)AN 530 has functions that enable connection to RAN (Radio Access Network) and connection to AN (Access Network) other than RAN. (R)AN 530 includes base stations called gNB or ng-eNB.

Core network CN mainly performs connection permission and session management when UE 40 connects to the network. Core network CN may be configured to include user plane function group 520 and control plane function group 540.

User plane function group 520 includes UPF (User Plane Function) 521 and DN (Data Network) 522. UPF 521 has user plane processing functions. UPF 521 includes routing/forwarding functions for data handled in the user plane. DN 522 has functions to provide connection to operator-specific services such as MNO (Mobile Network Operator), functions to provide Internet connection, or functions to provide connection to third-party services. Thus, user plane function group 520 plays the role of a gateway that serves as the boundary between core network CN and the Internet.

Control plane function group 540 includes AMF (Access Management Function) 541, SMF (Session Management Function) 542, AUSF (Authentication Server Function) 543, NSSF (Network Slice Selection Function) 544, NEF (Network Exposure Function) 545, NRF (Network Repository Function) 546, PCF (Policy Control Function) 547, UDM (Unified Data Management) 548, and AF (Application Function) 549.

AMF 541 has functions such as registration processing, connection management, and mobility management of UE 40. SMF 542 has functions such as session management and IP allocation and management of UE 40. AUSF 543 has authentication functions. NSSF 544 has functions related to network slice selection. NEF 545 has functions to provide network function capabilities and events to third parties, AF 549, and edge computing functions.

NRF 546 has functions to discover network functions and maintain network function profiles. PCF 547 has policy control functions. UDM 548 has functions for generating 3GPP AKA authentication information and processing user IDs. AF 549 has functions to interact with the core network to provide services.

For example, control plane function group 540 acquires information from UDM 548 where subscriber information of UE 40 is stored, and determines whether the UE 40 may connect to the network. Control plane function group 540 uses contract information of UE 40 and keys for encryption included in information acquired from UDM 548 for such determination. Also, control plane function group 540 performs generation of keys for encryption, etc.

That is, control plane function group 540 determines network connection availability depending on whether information of UE 40 linked to a subscriber number called IMSI (International Mobile Subscriber Identity) is stored in UDM 548. Note that IMSI is stored, for example, in a SIM (Subscriber Identity Module) card inside UE 40.

Note that core network CN may have LCM-related network functions. LCM-related network functions are network functions that provide LCM-related control functions. For example, LCM-related network functions have functions such as control of at least one of the above-mentioned (M1) to (M25), or provision of information necessary for execution of at least one of the above-mentioned (M1) to (M25).

LCM-related network functions may be included in existing network functions. For example, LCM-related network functions may be included in MTLF (Model Training Logical Function) 551. Management device 10 shown in FIG. 5 is an example of a device having functions of MTLF 551.

Also, LCM-related network functions may be included in servers constituting core network CN. For example, LCM-related network functions may be included in a server (for example, MEC (Mobile Edge Computing) server 552) connected to UPF 521. Also, LCM-related network functions may be included in a server (for example, MEC server 553) connected to base station 20 ((R)AN 530). Management device 10 shown in FIG. 5 is an example of MEC server 552 or MEC server 553.

Also, LCM-related network functions may be included in core network CN as new network functions. For example, as one of control plane function group 540, LCM-related network function 554 may be included in core network CN. Management device 10 shown in FIG. 5 is an example of a device having functions of LCM-related network function 554.

Note that one or multiple LCM-related network functions may exist in core network CN.

### <<4. LCM>>

The above describes network architecture, and next, LCM (Life-cycle-management) will be described in detail.

As described above, LCM is management of AI/ML models. LCM may be executed by management units of communication devices. For example, LCM may be executed by at least one of management unit 232 of base station 20, management unit 332 of relay station 30, and management unit 432 of terminal device 40. Of course, LCM may be executed by management device 10 or may be executed by a server device on the Internet.

Note that in the following description, AI/ML models may be referred to as learning models or simply models.

LCM may be composed of one or more elements (processes/methods/procedures/functions) among the following (M1) to (M25). For example, LCM may be one of (M1) to (M25), or may be a combination of multiple elements selected from (M1) to (M25). Note that (M1) to (M25) shown below are merely examples. The LCM of this embodiment (or elements constituting LCM) may include elements other than (M1) to (M25). Hereinafter, (M1) to (M25) will be described respectively.

### (M1) Data collection

Data collection is a process where network nodes (e.g. base station 20), management entities (e.g., management device 10), or UE (User Equipment) (e.g. terminal device 40) collect data for the purpose of AI/ML model training, data analysis, and inference.

### (M2) Model training

Model training is a process of data-driven training by learning input-output relationships of AI/ML models and acquiring trained AI/ML models for inference.

### (M3) Functionality identification

Functionality identification is a process/method for identifying functions or requirements to which AI/ML is applied.

### (M4) Model identification

Model identification is a process/method for identifying AI/ML models for common understanding between networks (e.g. base station 20, management device 10) and UE (e.g. terminal device 40).

### (M5) Model delivery

Model delivery is a general term referring to delivering AI/ML models from one entity (e.g. communication devices described above or below) to another entity (e.g. communication devices described above or below) by any method.

### (M6) Model transfer

Model transfer is a process of transferring AI/ML models via air interface, either parameters of model structures known on the receiving side (e.g. receiving device side) or new models with parameters. Transfer may include transfer of full models or partial models.

### (M7) Model download

Model download is a process of transferring models from networks (e.g. base station 20, management device 10) to UE (e.g. terminal device 40).

### (M8) Model upload

Model upload is a process of transferring models from UE (e.g. terminal device 40) to networks (e.g. base station 20, management device 10).

### (M9) Model inference

Model inference is a process of generating a series of outputs based on a series of inputs (e.g. receiving information from other communication devices) using trained AI/ML models.

### (M10) Model validation

Model validation is a training subprocess that evaluates the quality of AI/ML models using datasets different from those used for model training.

### (M11) Model testing

Model testing is a training subprocess that evaluates the performance of final AI/ML models using datasets different from those used for model training and validation. Unlike AI/ML model validation, model testing does not assume subsequent model adjustments.

### (M12) Model activation

Model activation is a process of enabling AI/ML models for specific functions.

### (M13) Functionality activation

Functionality activation is a process of enabling AI/ML functionality for specific features.

### (M14) Model deactivation

Model deactivation is a process of disabling AI/ML models for specific functions.

### (M15) Functionality deactivation

Functionality deactivation is a process of disabling AI/ML functionality for specific features.

### (M16) Model switching

Model switching is a process of deactivating currently active AI/ML models and activating different AI/ML models for specific functions.

### (M17) Functionality switching

Functionality switching is a process of deactivating currently active AI/ML models and activating different AI/ML models for specific functions.

### (M18) Model fallback

Model fallback is a process of deactivating AI/ML models and switching to processing that does not use AI/ML models.

### (M19) Model monitoring

Model monitoring is a procedure for monitoring the inference performance of AI/ML models.

### (M20) Model update

Model update is a process of updating model parameters and/or model structures of models.

### (M21) Model registration

Model registration is a process of registering model parameters and/or model structures of models.

### (M22) Model deployment

Model deployment is a general term referring to deploying AI/ML models from one entity (e.g. communication devices described above or below) to another entity (e.g. communication devices described above or below) by any method.

### (M23) Model configuration

Model configuration is a process of configuring model parameters and/or model structures of models.

### (M24) Model selection

Model selection is a process of selecting and activating AI/ML models from multiple currently selectable AI/ML models.

### (M25) UE capability

UE capability is a process of notifying the capability of a terminal device (e.g. terminal device 40) from the terminal device (e.g. terminal device 40) to another communication device (for example, base station 20).

Note that in the following description, implementing AI/ML model management based on functionality (for example, implementing AI/ML model management for each use case and/or function) may be referred to as Functionality-based LCM.

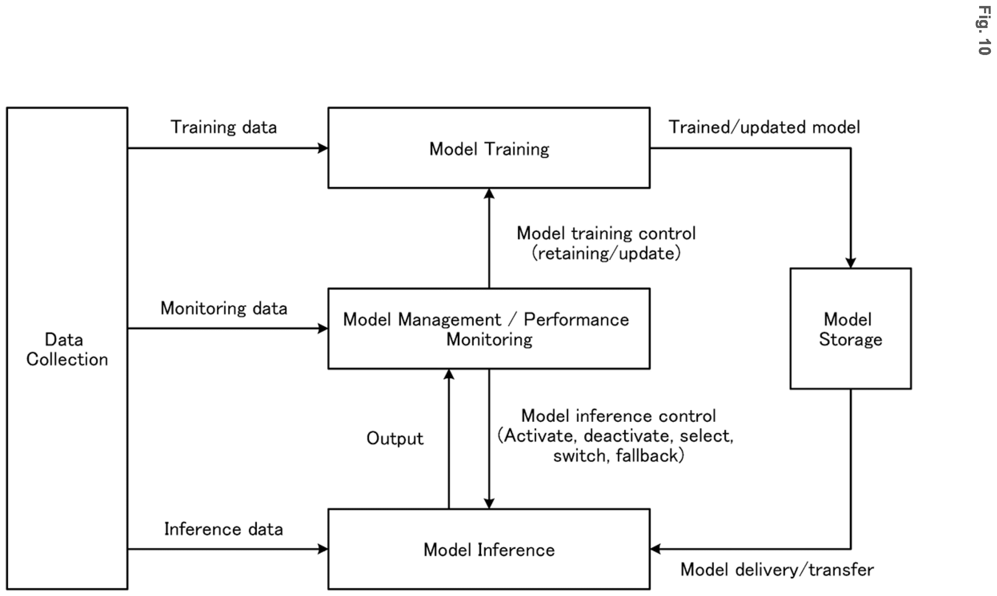

FIG. 10 is a diagram for explaining LCM. More specifically, FIG. 10 is a diagram showing relationships between LCM (or elements constituting LCM). LCM may be implemented as shown in the diagram of FIG. 10. Note that the diagram shown in FIG. 10 may be implemented by any one of base station 20, transmitting device (e.g. terminal device 40), and receiving device (e.g. terminal device 40), or a combination of at least two of them. In other words, any one of base station 20, transmitting device (e.g. terminal device 40), and receiving device (e.g. terminal device 40) may implement at least part of the above-mentioned LCM and operations defined in the diagram of FIG. 10. The diagram shown in FIG. 10 is merely an example. The relationships between LCM (or elements constituting LCM) are not limited to the relationships shown in FIG. 10.

Data collection provides training data to Model training. Also, data collection provides monitoring data to Model management/Performance monitoring. Also, data collection provides inference data to Model inference.

Model training stores trained/updated models in Model storage.

Model management/Performance monitoring performs control of model training (for example, control of model maintenance and/or update). Also, model management/performance monitoring executes control of model inference (for example, at least one of Model activation, Model deactivation, Model selection, Model switching, and Model fallback).

Model storage delivers or transfers trained/updated models to model inference.

Model inference notifies output by inference to model management/performance monitoring.

### <<4. Operation of Communication System>>

Based on the above, the operation of communication system 1 related to LCM (Life-cycle-management) will be described. Note that the description of "LCM" appearing in the following explanation may be replaced with "AI/ML model management".

A communication device (hereinafter referred to as the first communication device) provided in communication system 1 is configured to be capable of wireless communication with another communication device (hereinafter referred to as the second communication device).

Here, the first communication device and the second communication device may be base station 20, relay station 30, or terminal device 40. For example, the first communication device may be base station 20 and the second communication device may be terminal device 40. Also, the first communication device may be terminal device 40 and the second communication device may be base station 20. Also, the first communication device may be terminal device 40 and the second communication device may be another terminal device 40. Also, the first communication device may be base station 20 and the second communication device may be another base station 20. Note that the first communication device and the second communication device are not limited to base station 20 and/or terminal device 40. At least one of the first communication device and the second communication device may be relay station 30 or management device 10. Of course, at least one of the first communication device and the second communication device may be a server device connected to the Internet or other communication devices.

The wireless communication between the first communication device and the second communication device may be cellular communication. For example, the wireless communication between the first communication device and the second communication device may be uplink communication with terminal device 40 as the transmitting device and base station 20 as the receiving device, downlink communication with base station 20 as the transmitting device and terminal device 40 as the receiving device, or sidelink communication with terminal device 40 as the transmitting device and another terminal device 40 as the receiving device.

In this embodiment, the first communication device transmits information regarding AI/ML models applied to at least one of the following processes (P1) to (P4) (first transmission process, first reception process, second transmission process, and second reception process) to the second communication device.
(P1) Transmission process of the first communication device regarding wireless signals transmitted from the first communication device to the second communication device (first transmission process)
(P2) Reception process of the second communication device regarding wireless signals transmitted from the first communication device to the second communication device (first reception process)
(P3) Transmission process of the second communication device regarding wireless signals transmitted from the second communication device to the first communication device (second transmission process)
(P4) Reception process of the first communication device regarding wireless signals transmitted from the second communication device to the first communication device (second reception process)

The transmission of information regarding AI/ML models may be executed by a transmission unit of the communication device. The transmission of information regarding AI/ML models may be executed by a control unit of the communication device controlling the transmission unit. For example, the transmission of information regarding AI/ML models may be executed by at least one of transmission unit 234 of base station 20, transmission unit 334 of relay station 30, and transmission unit 434 of terminal device 40. Of course, the transmission of information regarding AI/ML models may be executed by management device 10 or may be executed by a server device on the Internet.

The second communication device acquires information regarding AI/ML models from the first communication device. Then, the second communication device uses or manages AI/ML models based on the information regarding AI/ML models. For example, assume that the first communication device is the control entity of LCM and the second communication device is the control target of LCM. In this case, the second communication device may execute processing related to signal processing (first reception process or second transmission process) of the second communication device based on the information regarding AI/ML models. Also, assume that the second communication device is the control entity of LCM and the first communication device is the control target of LCM. In this case, the second communication device may execute LCM related to signal processing (first transmission process or second reception process) of the first communication device based on the information regarding AI/ML models.

The acquisition of information regarding AI/ML models may be executed by an acquisition unit of the communication device. The acquisition of information regarding AI/ML models may be executed by a control unit of the communication device controlling the acquisition unit. For example, the acquisition of information regarding AI/ML models may be executed by at least one of acquisition unit 231 of base station 20, acquisition unit 331 of relay station 30, and acquisition unit 431 of terminal device 40. Of course, the acquisition of information regarding AI/ML models may be executed by management device 10 or may be executed by a server device on the Internet.

In the above or below description, a communication device that executes transmission processing (first transmission processing/second transmission processing) may be referred to as a transmitting device, and a communication device that executes reception processing (first reception processing/second reception processing) may be referred to as a receiving device.

Here, the information regarding AI/ML models may be information regarding LCM (information regarding AI/ML model management). Hereinafter, the operation of communication system 1 will be described assuming that the information regarding AI/ML models is information regarding LCM (information regarding AI/ML model management).

### <4-1. Control Entity of AI/ML Model Management>

First, the control entity of LCM (AI/ML model management) will be described.

The control entity of LCM may be the first communication device or the second communication device. At this time, the control entity of LCM may be a communication device that becomes the transmitting device among the first communication device and the second communication device, or may be a communication device that becomes the receiving device among the first communication device and the second communication device. Also, the control entity of LCM may be both the first communication device and the second communication device.

Also, the control entity of LCM may be a communication device that controls at least one of the transmitting device and the receiving device (hereinafter referred to as a communication control device). For example, in the case of sidelink communication with terminal device 40 as the transmitting device and another terminal device 40 as the receiving device, the control entity of LCM may be base station 20 that controls the sidelink communication. Note that the communication between the transmitting device and the receiving device is not limited to sidelink communication. The communication between the transmitting device and the receiving device may be uplink communication or downlink communication. Also, the communication control device that becomes the control entity of LCM is not limited to base station 20. For example, the communication control device may be management device 10, relay station 30, or a server device on the Internet. Also, the communication control device may be terminal device 40. For example, the communication control device may be a primary terminal (master terminal) that makes at least one of the transmitting device and the receiving device a secondary terminal (slave terminal) (for example, primary terminal device 40 (master terminal device 40) that controls sidelink communication between secondary terminals (slave terminals)).

### <4-1-1. Specific Examples of Control Entity of LCM>

The wireless communication to which AI/ML models are applied (wireless communication between the first communication device and the second communication device (or processing related thereto)) may be uplink communication (or processing related thereto) with terminal device 40 as the transmitting device and base station 20 as the receiving device, or downlink communication (or processing related thereto) with base station 20 as the transmitting device and terminal device 40 as the receiving device. The control entity of LCM in uplink/downlink communication may be any of the following (A1-1) to (A1-3).
(A1-1) Base station 20
(A1-2) Terminal device 40
(A1-3) Both base station 20 and terminal device 40

Note that when both base station 20 and terminal device 40 become control entities (in the case of (A1-3) above), base station 20 and terminal device 40 may cooperatively control LCM, or base station 20 and terminal device 40 may independently control LCM. Note that the control entity of LCM is not limited to base station 20 and/or terminal device 40. The control entity of LCM in uplink/downlink communication may be a communication control device (for example, management device 10 or a server device on the Internet) that controls base station 20 and/or terminal device 40.

Also, the wireless communication between the first communication device and the second communication device may be sidelink communication with terminal device 40 as the transmitting device of sidelink data and another terminal device 40 as the receiving device of sidelink data. In this case, the control entity of LCM may be any of the following (A2-1) to (A2-3).
(A2-1) Communication control device that controls at least one of the transmitting device and the receiving device
(A2-2) Terminal device 40 that becomes the transmitting device
(A2-3) Terminal device 40 that becomes the receiving device
(A2-4) Both terminal device 40 that becomes the transmitting device and terminal device 40 that becomes the receiving device

Here, the communication control device of (A2-1) may be base station 20 that controls sidelink communication between the transmitting device and the receiving device, or may be a primary terminal (master terminal) that makes at least one of the transmitting device and the receiving device a secondary terminal (slave terminal). Also, when both terminal device 40 that becomes the transmitting device and terminal device 40 that becomes the receiving device become control entities (in the case of (A2-4) above), terminal device 40 that becomes the transmitting device and terminal device 40 that becomes the receiving device may cooperatively control LCM, or terminal device 40 that becomes the transmitting device and terminal device 40 that becomes the receiving device may independently control LCM.

The LCM diagram shown in FIG. 10 may be implemented by either or both of the first communication device and the second communication device. In other words, either of the first communication device and the second communication device may implement at least part of the elements (processes/methods/procedures/functions) shown in (M1) to (M25) above and the operations defined in the diagram shown in FIG. 10.

### <4-1-2. Determination of Control Entity of LCM>

Communication system 1 may determine (discriminate) the control entity of LCM.

The determination of the control entity of LCM may be performed by at least one of the first communication device and the second communication device. For example, a communication device that becomes the transmitting device among the first communication device and the second communication device may determine the control entity of LCM, or a communication device that becomes the receiving device may determine the control entity of LCM. If the wireless communication to which AI/ML models are applied (or processing related thereto) is uplink/downlink communication (or processing related thereto), base station 20 may determine the control entity of LCM, or terminal device 40 may determine the control entity of LCM. If the wireless communication to which AI/ML models are applied (or processing related thereto) is sidelink communication (or processing related thereto), terminal device 40 that becomes the transmitting device may determine the control entity of LCM, or terminal device 40 that becomes the receiving device may determine the control entity of LCM.

Also, both the first communication device and the second communication device may determine the control entity of LCM. If the wireless communication to which AI/ML models are applied (or processing related thereto) is uplink/downlink communication (or processing related thereto), both base station 20 and terminal device 40 may determine the control entity of LCM. If the wireless communication to which AI/ML models are applied (or processing related thereto) is sidelink communication (or processing related thereto), both terminal device 40 that becomes the transmitting device and terminal device 40 that becomes the receiving device may determine the control entity of LCM.

Also, a third device different from the transmitting device and the receiving device may determine the control entity of LCM. For example, a communication control device that controls at least one of the transmitting device and the receiving device may determine the control entity of LCM. If the wireless communication to which AI/ML models are applied (or processing related thereto) is uplink/downlink communication (or processing related thereto), a device constituting the core network (for example, management device 10) may determine the control entity of LCM. If the wireless communication to which AI/ML models are applied (or processing related thereto) is sidelink communication (or processing related thereto), another device within network coverage (base station 20 or primary terminal device 40 (master terminal device 40)) may determine the control entity of LCM.

Hereinafter, a device that determines (discriminates) the control entity of LCM may be referred to as a determination device. As described above, the determination device may be either one of the first communication device and the second communication device, or both. Also, the determination device may be a communication device other than the first communication device and the second communication device.

Note that if the determination device is base station 20, the determination of the control entity of LCM may be executed by determination unit 233 of base station 20. If the determination device is relay station 30, the determination of the control entity of LCM may be executed by determination unit 333 of relay station 30. If the determination device is terminal device 40, the determination of the control entity of LCM may be executed by determination unit 433 of terminal device 40. Of course, the determination device is not limited to any of base station 20, relay station 30, and terminal device 40. The determination device may be management device 10 or a server device on the Internet.

The determination device may determine (discriminate) the control entity of LCM based on at least one of the following determination methods (B1) to (B5). Hereinafter, means for determining the control entity of LCM will be described.

### (B1) Determination based on specifications

The determination device may determine the control entity of LCM based on specifications (for example, rules shared in advance between communication devices). The specifications here may be technical standards defined by 3GPP (registered trademark). If the wireless communication to which AI/ML models are applied (or processing related thereto) is uplink/downlink communication (or processing related thereto), the determination device may determine one or both of base station 20 and terminal device 40 as the control entity of LCM based on the specifications. Also, if the wireless communication to which AI/ML models are applied (or processing related thereto) is sidelink communication (or processing related thereto), the determination device may determine one or both of terminal device 40 that becomes the transmitting device and terminal device 40 that becomes the receiving device as the control entity of LCM based on the specifications.

### (B2) Determination based on configuration information

The determination device may determine the control entity of LCM based on configuration information stored in advance (for example, information pre-configured in the storage unit of the communication device). Here, the information pre-configured in the determination device may be information stored in the storage unit of the determination device when the determination device is shipped from the factory. Note that the pre-configured LCM does not necessarily have to be all LCM. The pre-configured LCM may be only part of LCM (for example, part of (M1) to (M25) mentioned above).

### (B3) Determination based on control information

The determination device may determine the control entity of LCM based on control information received from other communication devices (control information including information about the control entity of LCM). If the wireless communication to which AI/ML models are applied (or processing related thereto) is uplink/downlink communication (or processing related thereto), base station 20 may determine the control entity of LCM based on control information received from terminal device 40, or terminal device 40 may determine the control entity of LCM based on control information received from base station 20. Also, if the wireless communication to which AI/ML models are applied (or processing related thereto) is sidelink communication (or processing related thereto), one or both of terminal device 40 that becomes the transmitting device and terminal device 40 that becomes the receiving device may determine the control entity of LCM based on control information notified between terminal devices 40. The control information here may be at least one of RRC message, MAC CE, and DCI.

### (B4) Determination based on priority

A priority may be provided for determining which AI/ML model of the first communication device and the second communication device to use preferentially. Then, the determination device may determine the communication device that holds the AI/ML model with higher priority among the first communication device and the second communication device as the control entity of LCM. This will be explained using the determination of the control entity of model transfer as an example.

For example, assume that a rule is established to preferentially use AI/ML models of communication devices that already possess trained AI/ML models. In this case, the determination device may determine the communication device that possesses trained AI/ML models among the first communication device and the second communication device as the control entity of LCM. If the wireless communication to which AI/ML models are applied (or processing related thereto) is uplink/downlink communication (or processing related thereto), the communication device that possesses trained AI/ML models among base station 20 and terminal device 40 may be determined as the control entity of LCM. If the wireless communication to which AI/ML models are applied (or processing related thereto) is sidelink communication (or processing related thereto), terminal device 40 that possesses trained AI/ML models among terminal device 40 that becomes the transmitting device and terminal device 40 that becomes the receiving device may be determined as the control entity of LCM. The communication device determined as the control entity of LCM (the communication device that possesses trained AI/ML models) may transfer the trained AI/ML models to the communication device that does not possess them.

For example, assume that a rule is established to preferentially use AI/ML models of communication devices that possess trained AI/ML models of AI/ML models (or functionality) supported by both the first communication device and the second communication device. In this case, the determination device may discriminate AI/ML models (or functionality) supported by both the first communication device and the second communication device based on capability information of the first communication device and the second communication device. Then, the determination device may determine the communication device that possesses trained AI/ML models of the discriminated AI/ML models (or functionality) among the first communication device and the second communication device as the control entity of LCM. If the wireless communication to which AI/ML models are applied (or processing related thereto) is uplink/downlink communication (or processing related thereto), the communication device that possesses trained AI/ML models among base station 20 and terminal device 40 may be determined as the control entity of LCM. If the wireless communication to which AI/ML models are applied (or processing related thereto) is sidelink communication (or processing related thereto), terminal device 40 that possesses trained AI/ML models among terminal device 40 that becomes the transmitting device and terminal device 40 that becomes the receiving device may be determined as the control entity of LCM. The communication device determined as the control entity of LCM (the communication device that possesses trained AI/ML models) may transfer the trained AI/ML models to the communication device that does not possess them.

### (B5) Determination method based on model type

The determination device may determine the control entity of LCM based on the type of AI/ML model applied to wireless communication. The type of AI/ML model may include at least one of one-sided model and two-sided model.

A one-sided model is a case where AI/ML models are applied to either one of the first communication device and the second communication device. If the wireless communication to which AI/ML models are applied (or processing related thereto) is uplink/downlink communication (or processing related thereto), in a one-sided model, AI/ML models are applied to either one of base station 20 and terminal device 40. If the wireless communication to which AI/ML models are applied (or processing related thereto) is sidelink communication (or processing related thereto), in a one-sided model, AI/ML models are applied to either one of terminal device 40 that becomes the transmitting device and terminal device 40 that becomes the receiving device. A one-sided model can be rephrased as a one-sided AI/ML model.

In the case of a one-sided model, the communication device that possesses AI/ML models among the first communication device and the second communication device may become the control entity of LCM. If the wireless communication to which AI/ML models are applied (or processing related thereto) is uplink/downlink communication (or processing related thereto), the communication device that possesses AI/ML models among base station 20 and terminal device 40 may become the control entity of LCM. If the wireless communication to which AI/ML models are applied (or processing related thereto) is sidelink communication (or processing related thereto), the communication device that possesses AI/ML models among terminal device 40 that becomes the transmitting device and terminal device 40 that becomes the receiving device may become the control entity of LCM.

A two-sided model is a case where AI/ML models are applied to both the first communication device and the second communication device. If the wireless communication to which AI/ML models are applied (or processing related thereto) is uplink/downlink communication (or processing related thereto), in a two-sided model, AI/ML models are applied to both base station 20 and terminal device 40. If the wireless communication to which AI/ML models are applied (or processing related thereto) is sidelink communication (or processing related thereto), in a two-sided model, AI/ML models are applied to both terminal device 40 that becomes the transmitting device and terminal device 40 that becomes the receiving device. A two-sided model can be rephrased as a two-sided AI/ML model.

In the case of a two-sided model, the communication device that possesses AI/ML models among the first communication device and the second communication device may become the control entity of LCM. If the wireless communication to which AI/ML models are applied (or processing related thereto) is uplink/downlink communication (or processing related thereto), either one of base station 20 and terminal device 40 may become the control entity of LCM, or both base station 20 and terminal device 40 may become the control entity of LCM. If the wireless communication to which AI/ML models are applied (or processing related thereto) is sidelink communication (or processing related thereto), either one of terminal device 40 that becomes the transmitting device and terminal device 40 that becomes the receiving device may become the control entity of LCM, or both terminal device 40 that becomes the transmitting device and terminal device 40 that becomes the receiving device may become the control entity of LCM.

### <4-1-3. Case where one of the communication devices becomes the control entity of LCM>

First, the operation of the control entity of LCM when either one of the first communication device and the second communication device becomes the control entity of LCM will be described.

The control entity of LCM executes control related to the application of AI/ML models (hereinafter also referred to as LCM control). For example, either one of the first communication device and the second communication device becomes the control entity of LCM and executes LCM control of the other communication device (hereinafter also referred to as control target). For example, if the wireless communication to which AI/ML models are applied (or processing related thereto) is uplink/downlink communication (or processing related thereto), one of base station 20 and terminal device 40 becomes the control entity of LCM and executes LCM control of the other communication device. If the wireless communication to which AI/ML models are applied (or processing related thereto) is sidelink communication (or processing related thereto), either one of terminal device 40 that becomes the transmitting device and terminal device 40 that becomes the receiving device becomes the control entity of LCM and executes LCM control of the other communication device.

Specifically, the control entity of LCM may execute at least one of the following processes (C1) to (C10).

### (C1) Model transfer

When LCM control is model transfer, the control entity of LCM transmits, as information regarding AI/ML models, data of AI/ML models used for transmission processing or reception processing to the communication device that becomes the control target (for example, at least one of the first communication device and the second communication device). For example, assume that the control entity of LCM is the first communication device. In this case, the first communication device transmits data of AI/ML models used for at least one of the above-mentioned first reception processing and the above-mentioned second transmission processing to the second communication device. The communication device that becomes the control target (for example, the second communication device) executes at least one of the first reception processing and the second transmission processing using the received AI/ML model data.

For example, assume that the wireless communication to which AI/ML models are applied (or processing related thereto) is uplink/downlink communication (or processing related thereto) and the control entity of LCM is base station 20. In this case, base station 20 transmits data of AI/ML models possessed by base station 20 to terminal device 40 before or during transmission of downlink data, or before reception of uplink data. Terminal device 40 uses the received AI/ML model data as is or with fine tuning for reception of downlink data or transmission of uplink data.

For example, assume that the wireless communication to which AI/ML models are applied (or processing related thereto) is uplink/downlink communication (or processing related thereto) and the control entity of LCM is terminal device 40. In this case, terminal device 40 transmits data of AI/ML models possessed by terminal device 40 to base station 20 before reception of downlink data, or before or during transmission of uplink data. Base station 20 uses the received AI/ML model data as is or with fine tuning for transmission of downlink data or reception of uplink data.

For example, assume that the wireless communication to which AI/ML models are applied (or processing related thereto) is sidelink communication (or processing related thereto) and the control entity of LCM is terminal device 40 that becomes the transmitting device. In this case, terminal device 40 that becomes the transmitting device transmits data of AI/ML models possessed by terminal device 40 that becomes the transmitting device to terminal device 40 that becomes the receiving device before or during transmission of sidelink data. Terminal device 40 that becomes the receiving device uses the received AI/ML model data as is or with fine tuning for reception of sidelink data.

For example, assume that the wireless communication to which AI/ML models are applied (or processing related thereto) is sidelink communication (or processing related thereto) and the control entity of LCM is terminal device 40 that becomes the receiving device. In this case, terminal device 40 that becomes the receiving device transmits data of AI/ML models possessed by terminal device 40 that becomes the transmitting device to terminal device 40 that becomes the receiving device before or during transmission of sidelink data. Terminal device 40 that becomes the receiving device uses the received AI/ML model data as is or with fine tuning for reception of sidelink data.

The data of AI/ML models transmitted by the communication device that becomes the control entity of LCM does not necessarily have to be data that can be directly used by the communication device that becomes the control target for its own processing. For example, assume that the control entity of LCM is the first communication device. In this case, the first communication device may transfer data of AI/ML models used for processing executed by the first communication device (at least one of the first transmission processing and the above-mentioned second reception processing) rather than data of AI/ML models directly used for processing executed by the second communication device (at least one of the first reception processing and the above-mentioned second transmission processing). In this case, the second communication device may generate AI/ML models for its own use based on the AI/ML model data received from the first communication device.

### (C2) Data collection

When LCM control is data collection, the control entity of LCM transmits, as information regarding AI/ML models, control information instructing execution of data collection to the communication device that becomes the control target (for example, at least one of the first communication device and the second communication device). For example, the control entity of LCM transmits control information instructing collection of data for model inference and/or model training to the communication device that becomes the control target. The communication device that becomes the control target executes data collection based on the control information.

For example, assume that the wireless communication to which AI/ML models are applied (or processing related thereto) is uplink/downlink communication (or processing related thereto) and the control entity of LCM is base station 20. In this case, base station 20 transmits control information instructing execution of data collection to terminal device 40. Terminal device 40 executes data collection based on the received control information.

For example, assume that the wireless communication to which AI/ML models are applied (or processing related thereto) is uplink/downlink communication (or processing related thereto) and the control entity of LCM is terminal device 40. In this case, terminal device 40 transmits control information instructing execution of data collection to base station 20. Base station 20 executes data collection based on the received control information.

For example, assume that the wireless communication to which AI/ML models are applied (or processing related thereto) is sidelink communication (or processing related thereto) and the control entity of LCM is terminal device 40 that becomes the transmitting device. In this case, terminal device 40 that becomes the transmitting device transmits control information instructing execution of data collection to terminal device 40 that becomes the receiving device. Terminal device 40 that becomes the receiving device executes data collection based on the received control information.

For example, assume that the wireless communication to which AI/ML models are applied (or processing related thereto) is sidelink communication (or processing related thereto) and the control entity of LCM is terminal device 40 that becomes the receiving device. In this case, terminal device 40 that becomes the receiving device transmits control information instructing execution of data collection to terminal device 40 that becomes the transmitting device. Terminal device 40 that becomes the transmitting device executes data collection based on the received control information.

### (C3) Functionality identification

When LCM control is functionality identification, the control entity of LCM notifies, as information regarding AI/ML models, information about functionality to which AI/ML models are applied to the communication device that becomes the control target (for example, at least one of the first communication device and the second communication device). Here, the information about functionality to which AI/ML models are applied may be functionality ID (including a list of IDs). The communication device that becomes the control target makes a determination on application of AI/ML models to the functionality based on the information about functionality to which AI/ML models are applied.

For example, assume that the wireless communication to which AI/ML models are applied (or processing related thereto) is uplink/downlink communication (or processing related thereto) and the control entity of LCM is base station 20. In this case, base station 20 notifies terminal device 40 of information about functionality to which AI/ML models are applied. Terminal device 40 makes a determination on application of AI/ML models to the functionality related to the notification based on the received information.

For example, assume that the wireless communication to which AI/ML models are applied (or processing related thereto) is uplink/downlink communication (or processing related thereto) and the control entity of LCM is terminal device 40. In this case, terminal device 40 notifies base station 20 of information about functionality to which AI/ML models are applied. Base station 20 makes a determination on application of AI/ML models to the functionality related to the notification based on the received information.

For example, assume that the wireless communication to which AI/ML models are applied (or processing related thereto) is sidelink communication (or processing related thereto) and the control entity of LCM is terminal device 40 that becomes the transmitting device. In this case, terminal device 40 that becomes the transmitting device notifies terminal device 40 that becomes the receiving device of information about functionality to which AI/ML models are applied. Terminal device 40 that becomes the receiving device makes a determination on application of AI/ML models to the functionality related to the notification based on the received information.

For example, assume that the wireless communication to which AI/ML models are applied (or processing related thereto) is sidelink communication (or processing related thereto) and the control entity of LCM is terminal device 40 that becomes the receiving device. In this case, terminal device 40 that becomes the receiving device notifies terminal device 40 that becomes the transmitting device of information about functionality to which AI/ML models are applied. Terminal device 40 that becomes the transmitting device makes a determination on application of AI/ML models to the functionality related to the notification based on the received information.

As described above, the communication device that becomes the control target makes a determination on application of AI/ML models to the functionality related to the notification. At this time, the communication device that becomes the control target may always apply AI/ML models to the functionality related to the notification. Also, the communication device that becomes the control target may apply AI/ML models to the functionality related to the notification when predetermined conditions are satisfied. For example, the communication device that becomes the control target may combine functionality identification operations and model activation operations to make determinations related to application of AI/ML models. For example, the communication device that becomes the control target may apply AI/ML models to the functionality when AI/ML models applicable to the functionality related to the notification are activated by the control entity of LCM.

### (C4) Model identification

When LCM control is model identification, the control entity of LCM notifies, as information regarding AI/ML models, information about AI/ML models to be applied by the communication device that becomes the control target to the communication device that becomes the control target (for example, at least one of the first communication device and the second communication device). Here, the information about AI/ML models to be applied by the communication device that becomes the control target may be AI/ML model ID (including a list of IDs). The communication device that becomes the control target makes a determination on application of AI/ML models to processing executed by itself (for example, transmission processing and/or reception processing) based on the received information.

For example, assume that the wireless communication to which AI/ML models are applied (or processing related thereto) is uplink/downlink communication (or processing related thereto) and the control entity of LCM is base station 20. In this case, base station 20 notifies terminal device 40 of information about AI/ML models to be applied by terminal device 40. Terminal device 40 makes a determination on application of AI/ML models to processing executed by itself based on the received information.

For example, assume that the wireless communication to which AI/ML models are applied (or processing related thereto) is uplink/downlink communication (or processing related thereto) and the control entity of LCM is terminal device 40. In this case, terminal device 40 notifies base station 20 of information about AI/ML models to be applied by base station 20. Base station 20 makes a determination on application of AI/ML models to processing executed by itself based on the received information.

For example, assume that the wireless communication to which AI/ML models are applied (or processing related thereto) is sidelink communication (or processing related thereto) and the control entity of LCM is terminal device 40 that becomes the transmitting device. In this case, terminal device 40 that becomes the transmitting device notifies terminal device 40 that becomes the receiving device of information about AI/ML models to be applied by terminal device 40 that becomes the receiving device. Terminal device 40 that becomes the receiving device makes a determination on application of AI/ML models to processing executed by itself based on the received information.

For example, assume that the wireless communication to which AI/ML models are applied (or processing related thereto) is sidelink communication (or processing related thereto) and the control entity of LCM is terminal device 40 that becomes the receiving device. In this case, terminal device 40 that becomes the receiving device notifies terminal device 40 that becomes the transmitting device of information about AI/ML models to be applied by terminal device 40 that becomes the transmitting device. Terminal device 40 that becomes the transmitting device makes a determination on application of AI/ML models to processing executed by itself based on the received information.

As described above, when the communication device that becomes the control target receives a notification from the LCM control entity, it makes a determination on application of the AI/ML model to processing executed by itself. At this time, the communication device that becomes the control target may always apply the AI/ML model related to the notification to processing executed by itself. Also, the communication device that becomes the control target may apply the AI/ML model related to the notification when predetermined conditions are satisfied after receiving the notification from the LCM control entity. For example, the communication device that becomes the control target may combine model identification operations and model activation operations to make determinations related to application of AI/ML models. For example, the communication device that becomes the control target may apply the AI/ML model to processing executed by itself when the AI/ML model related to the notification is activated by the LCM control entity.

### (C5) Model activation

When LCM control is model activation, the LCM control entity transmits, as information regarding AI/ML models, control information instructing activation of AI/ML models used for transmission processing or reception processing to the communication device that becomes the control target (for example, at least one of the first communication device and the second communication device). For example, assume that the LCM control entity is the first communication device. In this case, the first communication device transmits control information instructing activation of AI/ML models used for at least one of the above-mentioned first reception processing and the above-mentioned second transmission processing to the second communication device. The communication device that becomes the control target (for example, the second communication device) executes activation of the AI/ML model related to the instruction based on the received control information.

For example, assume that the wireless communication to which AI/ML models are applied (or processing related thereto) is uplink/downlink communication (or processing related thereto) and the LCM control entity is base station 20. In this case, base station 20 transmits control information instructing activation of AI/ML models to terminal device 40. Terminal device 40 executes activation of the AI/ML model related to the instruction based on the received control information.

For example, assume that the wireless communication to which AI/ML models are applied (or processing related thereto) is uplink/downlink communication (or processing related thereto) and the LCM control entity is terminal device 40. In this case, terminal device 40 transmits control information instructing activation of AI/ML models to base station 20. Base station 20 executes activation of the AI/ML model related to the instruction based on the received control information.

For example, assume that the wireless communication to which AI/ML models are applied (or processing related thereto) is sidelink communication (or processing related thereto) and the LCM control entity is terminal device 40 that becomes the transmitting device. In this case, terminal device 40 that becomes the transmitting device transmits control information instructing activation of AI/ML models to terminal device 40 that becomes the receiving device. Terminal device 40 that becomes the receiving device executes activation of the AI/ML model related to the instruction based on the received control information.

For example, assume that the wireless communication to which AI/ML models are applied (or processing related thereto) is sidelink communication (or processing related thereto) and the LCM control entity is terminal device 40 that becomes the receiving device. In this case, terminal device 40 that becomes the receiving device transmits control information instructing activation of AI/ML models to terminal device 40 that becomes the transmitting device. Terminal device 40 that becomes the transmitting device executes activation of the AI/ML model related to the instruction based on the received control information.

Note that the control information instructing activation of AI/ML models may include information (for example, timer values) for the communication device that becomes the control target to specify the timing of AI/ML model activation. For example, when the communication device that becomes the control target receives a timer value, it may start a timer with that timer value. Then, the communication device that becomes the control target may execute activation of the AI/ML model at the timing specified from the information (for example, when the timer expires). Note that the information for specifying the timing of AI/ML model activation may be information indicating the period (Window, Duration, or Period) until AI/ML model activation is performed, or may be information indicating the cycle (Periodicity, or Cycle) for performing AI/ML model activation.

Additionally or alternatively, the control information instructing activation of AI/ML models may include information (for example, timer values) for the communication device that becomes the control target to specify the period during which AI/ML model activation is valid. For example, when the communication device that becomes the control target receives a timer value, it may start a timer with that timer value. Then, the communication device that becomes the control target may execute deactivation of the AI/ML model when the valid period specified from the information expires (for example, when the timer expires). Note that the information for specifying the period during which AI/ML model activation is valid may be indicated by Window, Duration, or Period, or may be information indicating the cycle (Periodicity, or Cycle) of the period during which AI/ML model activation is valid. Also, the deactivation here may be AI/ML model fallback described later.

### (C6) Model deactivation

When LCM control is model deactivation, the LCM control entity transmits, as information regarding AI/ML models, control information instructing deactivation of AI/ML models used for transmission processing or reception processing to the communication device that becomes the control target (for example, at least one of the first communication device and the second communication device). For example, assume that the LCM control entity is the first communication device. In this case, the first communication device transmits control information instructing deactivation of AI/ML models used for at least one of the above-mentioned first reception processing and the above-mentioned second transmission processing to the second communication device. The communication device that becomes the control target (for example, the second communication device) executes deactivation of the AI/ML model related to the instruction based on the received control information.

For example, assume that the wireless communication to which AI/ML models are applied (or processing related thereto) is uplink/downlink communication (or processing related thereto) and the LCM control entity is base station 20. In this case, base station 20 transmits control information instructing deactivation of AI/ML models to terminal device 40. Terminal device 40 executes deactivation of the AI/ML model related to the instruction based on the received control information.

For example, assume that the wireless communication to which AI/ML models are applied (or processing related thereto) is uplink/downlink communication (or processing related thereto) and the LCM control entity is terminal device 40. In this case, terminal device 40 transmits control information instructing deactivation of AI/ML models to base station 20. Base station 20 executes deactivation of the AI/ML model related to the instruction based on the received control information.

For example, assume that the wireless communication to which AI/ML models are applied (or processing related thereto) is sidelink communication (or processing related thereto) and the LCM control entity is terminal device 40 that becomes the transmitting device. In this case, terminal device 40 that becomes the transmitting device transmits control information instructing deactivation of AI/ML models to terminal device 40 that becomes the receiving device. Terminal device 40 that becomes the receiving device executes deactivation of the AI/ML model related to the instruction based on the received control information.

For example, assume that the wireless communication to which AI/ML models are applied (or processing related thereto) is sidelink communication (or processing related thereto) and the LCM control entity is terminal device 40 that becomes the receiving device. In this case, terminal device 40 that becomes the receiving device transmits control information instructing deactivation of AI/ML models to terminal device 40 that becomes the transmitting device. Terminal device 40 that becomes the transmitting device executes deactivation of the AI/ML model related to the instruction based on the received control information.

Note that the control information instructing deactivation of AI/ML models may include information (for example, timer values) for the communication device that becomes the control target to specify the timing of AI/ML model deactivation. For example, when the communication device that becomes the control target receives a timer value, it may start a timer with that timer value. Then, the communication device that becomes the control target may execute deactivation of the AI/ML model at the timing specified from the information (for example, when the timer expires). The information for specifying the timing of AI/ML model deactivation may be information indicating the period (Window, Duration, or Period) until AI/ML model deactivation is performed, or may be information indicating the cycle (Periodicity, or Cycle) for performing AI/ML model deactivation. Also, the deactivation here may be AI/ML model fallback described later.

### (C7) Model switching

When LCM control is model switching, the LCM control entity transmits, as information regarding AI/ML models, control information instructing switching of AI/ML models used for transmission processing or reception processing to the communication device that becomes the control target (for example, at least one of the first communication device and the second communication device). The communication device that becomes the control target switches the currently used AI/ML model to a different AI/ML model based on the received control information.

For example, assume that the wireless communication to which AI/ML models are applied (or processing related thereto) is uplink/downlink communication (or processing related thereto) and the LCM control entity is base station 20. In this case, base station 20 transmits control information instructing switching of AI/ML models to terminal device 40. Terminal device 40 switches the currently used AI/ML model to a different AI/ML model based on the received control information.

For example, assume that the wireless communication to which AI/ML models are applied (or processing related thereto) is uplink/downlink communication (or processing related thereto) and the LCM control entity is terminal device 40. In this case, terminal device 40 transmits control information instructing switching of AI/ML models to base station 20. Base station 20 switches the currently used AI/ML model to a different AI/ML model based on the received control information.

For example, assume that the wireless communication to which AI/ML models are applied (or processing related thereto) is sidelink communication (or processing related thereto) and the LCM control entity is terminal device 40 that becomes the transmitting device. In this case, terminal device 40 that becomes the transmitting device transmits control information instructing switching of AI/ML models to terminal device 40 that becomes the receiving device. Terminal device 40 that becomes the receiving device switches the currently used AI/ML model to a different AI/ML model based on the received control information.

For example, assume that the wireless communication to which AI/ML models are applied (or processing related thereto) is sidelink communication (or processing related thereto) and the LCM control entity is terminal device 40 that becomes the receiving device. In this case, terminal device 40 that becomes the receiving device transmits control information instructing switching of AI/ML models to terminal device 40 that becomes the transmitting device. Terminal device 40 that becomes the transmitting device switches the currently used AI/ML model to a different AI/ML model based on the received control information.

Note that the model switching operation may be realized by a combination of model activation and model deactivation operations.

Also, the communication device that becomes the control target may execute the model switching operation when another activated AI/ML model exists when receiving the model switching control information. Then, the communication device that becomes the control target may not execute the model switching operation when no other activated AI/ML model exists when receiving the model switching control information. When the communication device that becomes the control target does not execute the model switching operation, it may notify the LCM control entity of the non-execution of the model switching operation.

Additionally or alternatively, the control information instructing switching of AI/ML models used for transmission processing or reception processing may include information indicating the timing for performing AI/ML model switching (e.g. subframe, radio frame, SFN, slot, symbol). The information indicating the timing for performing AI/ML model switching may include information indicating the period from receiving the control information to the timing for performing AI/ML model switching. For example, when the timing of receiving the control information is n (e.g. nth subframe, nth radio frame, nth SFN, nth slot, nth symbol, where n is an integer), the timing for performing AI/ML model switching may be indicated by n+k (e.g. (n+k)th subframe, (n+k)th radio frame, (n+k)th SFN, (n+k)th slot, (n+k)th symbol, where n and k are integers). The period from receiving the control information to the timing for performing AI/ML model switching may be indicated by k.

### (C8) Model fallback

When LCM control is model fallback, the LCM control entity transmits, as information regarding AI/ML models, control information instructing fallback of AI/ML models used for transmission processing or reception processing to the communication device that becomes the control target (for example, at least one of the first communication device and the second communication device). For example, assume that the LCM control entity is the first communication device. In this case, the first communication device transmits control information for causing at least one of the above-mentioned first reception processing and the above-mentioned second transmission processing to fall back from processing using AI/ML models to processing not using AI/ML models to the second communication device. The communication device that becomes the control target (for example, the second communication device) falls back AI/ML model application processing to processing not using AI/ML models based on the received control information. For example, the second communication device falls back at least one of the first reception processing and the second transmission processing from processing using AI/ML models to processing not using AI/ML models.

In the following description, processing not using AI/ML models may be referred to as conventional processing or conventional signal processing. Alternatively, processing not using AI/ML models may be referred to as non-AI/ML-based processing. Note that processing not using AI/ML models is not necessarily limited to existing signal processing. The descriptions of "conventional processing" or "conventional signal processing" appearing in the following explanation may be replaced with "processing not using AI/ML models".

For example, assume that the wireless communication to which AI/ML models are applied (or processing related thereto) is uplink/downlink communication (or processing related thereto) and the LCM control entity is base station 20. In this case, base station 20 transmits control information instructing fallback of AI/ML models to terminal device 40. Terminal device 40 executes fallback of AI/ML model application processing to conventional processing based on the received control information.

For example, assume that the wireless communication to which AI/ML models are applied (or processing related thereto) is uplink/downlink communication (or processing related thereto) and the LCM control entity is terminal device 40. In this case, terminal device 40 transmits control information instructing fallback of AI/ML models to base station 20. Base station 20 executes fallback of AI/ML model application processing to conventional processing based on the received control information.

For example, assume that the wireless communication to which AI/ML models are applied (or processing related thereto) is sidelink communication (or processing related thereto) and the LCM control entity is terminal device 40 that becomes the transmitting device. In this case, terminal device 40 that becomes the transmitting device transmits control information instructing fallback of AI/ML models to terminal device 40 that becomes the receiving device. Terminal device 40 that becomes the receiving device executes fallback of AI/ML model application processing to conventional processing based on the received control information.

For example, assume that the wireless communication to which AI/ML models are applied (or processing related thereto) is sidelink communication (or processing related thereto) and the LCM control entity is terminal device 40 that becomes the receiving device. In this case, terminal device 40 that becomes the receiving device transmits control information instructing fallback of AI/ML models to terminal device 40 that becomes the transmitting device. Terminal device 40 that becomes the transmitting device executes fallback of AI/ML model application processing to conventional processing based on the received control information.

Note that the LCM control entity may instruct fallback for only some of the processing to which AI/ML models are applied (for example, functionality processing). For example, assume that the second communication device has multiple functionalities related to at least one of the above-mentioned first reception processing and the above-mentioned second transmission processing. The first communication device may transmit, as control information (information regarding AI/ML models), information for causing processing of some functionalities among the multiple functionalities to fall back from processing using AI/ML models to processing not using AI/ML models to the second communication device. The LCM control entity may instruct fallback of all processing.

When the communication device that becomes the control target receives control information from the LCM control entity, it may execute fallback only for some of the processing to which AI/ML models are applied (for example, functionality processing), or may execute fallback for all processing.

Note that the control information instructing fallback of AI/ML models may include information (for example, timer values) for the communication device that becomes the control target to specify the timing of AI/ML model fallback. For example, when the communication device that becomes the control target receives a timer value, it may start a timer with that timer value. Then, the communication device that becomes the control target may execute fallback of the AI/ML model at the timing specified from the information (for example, when the timer expires).

Also, AI/ML model fallback may be processing that executes fallback to a default AI/ML model. For example, a terminal device that receives an AI/ML model fallback notification may change the AI/ML model used for transmission processing or reception processing from the currently applied AI/ML model to a pre-configured default AI/ML model.

Additionally or alternatively, the control information instructing fallback of AI/ML models used for transmission processing or reception processing may include information indicating the timing for performing AI/ML model fallback (e.g. subframe, radio frame, SFN, slot, symbol). The information indicating the timing for performing AI/ML model fallback may include information indicating the period from receiving the control information to the timing for performing AI/ML model fallback. For example, when the timing of receiving the control information is n (e.g. nth subframe, nth radio frame, nth SFN, nth slot, nth symbol, where n is an integer), the timing for performing AI/ML model fallback may be indicated by n+k (e.g. (n+k)th subframe, (n+k)th radio frame, (n+k)th SFN, (n+k)th slot, (n+k)th symbol, where n and k are integers). The period from receiving the control information to the timing for performing AI/ML model fallback may be indicated by k.

### (C9) Model monitoring

When LCM control is model monitoring, the LCM control entity transmits, as information regarding AI/ML models, control information instructing execution of AI/ML model monitoring to the communication device that becomes the control target (for example, at least one of the first communication device and the second communication device). When the communication device that becomes the control target receives the control information, it executes AI/ML model monitoring operations.

For example, assume that the wireless communication to which AI/ML models are applied (or processing related thereto) is uplink/downlink communication (or processing related thereto) and the LCM control entity is base station 20. In this case, base station 20 transmits control information instructing execution of AI/ML model monitoring to terminal device 40. When terminal device 40 receives the control information, it executes AI/ML model monitoring operations.

For example, assume that the wireless communication to which AI/ML models are applied (or processing related thereto) is uplink/downlink communication (or processing related thereto) and the LCM control entity is terminal device 40. In this case, terminal device 40 transmits control information instructing execution of AI/ML model monitoring to base station 20. When base station 20 receives the control information, it executes AI/ML model monitoring operations.

For example, assume that the wireless communication to which AI/ML models are applied (or processing related thereto) is sidelink communication (or processing related thereto) and the LCM control entity is terminal device 40 that becomes the transmitting device. In this case, terminal device 40 that becomes the transmitting device transmits control information instructing execution of AI/ML model monitoring to terminal device 40 that becomes the receiving device. When terminal device 40 that becomes the receiving device receives the control information, it executes AI/ML model monitoring operations.

For example, assume that the wireless communication to which AI/ML models are applied (or processing related thereto) is sidelink communication (or processing related thereto) and the LCM control entity is terminal device 40 that becomes the receiving device. In this case, terminal device 40 that becomes the receiving device transmits control information instructing execution of AI/ML model monitoring to terminal device 40 that becomes the transmitting device. When terminal device 40 that becomes the transmitting device receives the control information, it executes AI/ML model monitoring operations.

Note that the communication device that becomes the control target may execute performance measurement of currently applied AI/ML models as AI/ML model monitoring operations. AI/ML model performance measurement may be executed for a predetermined period or at predetermined intervals. That is, the above-mentioned control information instructing AI/ML model monitoring may be information indicating the period (Window, Duration, or Period) during which AI/ML model performance measurement is executed, or may be information indicating the cycle (Periodicity, or Cycle) at which AI/ML model performance measurement is executed. Also, the control information instructing AI/ML model monitoring may be a combination of these.

### (C10) Model update

When LCM control is model update, the LCM control entity transmits, as information regarding AI/ML models, control information instructing execution of AI/ML model update to the communication device that becomes the control target (for example, at least one of the first communication device and the second communication device). When the communication device that becomes the control target receives the control information, it executes AI/ML model update operations. For example, when the communication device that becomes the control target receives the control information, it executes retraining of the currently used AI/ML model.

For example, assume that the wireless communication to which AI/ML models are applied (or processing related thereto) is uplink/downlink communication (or processing related thereto) and the LCM control entity is base station 20. In this case, base station 20 transmits control information instructing execution of AI/ML model update to terminal device 40. When terminal device 40 receives the control information, it executes AI/ML model update operations.

For example, assume that the wireless communication to which AI/ML models are applied (or processing related thereto) is uplink/downlink communication (or processing related thereto) and the LCM control entity is terminal device 40. In this case, terminal device 40 transmits control information instructing execution of AI/ML model update to base station 20. When base station 20 receives the control information, it executes AI/ML model update operations.

For example, assume that the wireless communication to which AI/ML models are applied (or processing related thereto) is sidelink communication (or processing related thereto) and the LCM control entity is terminal device 40 that becomes the transmitting device. In this case, terminal device 40 that becomes the transmitting device transmits control information instructing execution of AI/ML model update to terminal device 40 that becomes the receiving device. When terminal device 40 that becomes the receiving device receives the control information, it executes AI/ML model update operations.

For example, assume that the wireless communication to which AI/ML models are applied (or processing related thereto) is sidelink communication (or processing related thereto) and the LCM control entity is terminal device 40 that becomes the receiving device. In this case, terminal device 40 that becomes the receiving device transmits control information instructing execution of AI/ML model update to terminal device 40 that becomes the transmitting device. When terminal device 40 that becomes the transmitting device receives the control information, it executes AI/ML model update operations.

Note that the communication device that becomes the control target cannot use the AI/ML model during AI/ML model update operations. Therefore, when the communication device that becomes the control target executes AI/ML model update operations, it may fall back the currently executing processing to conventional processing that does not apply AI/ML models. Alternatively, when the communication device that becomes the control target executes AI/ML model update operations, it may switch the AI/ML model related to the update operations to a different AI/ML model.

### <4-1-4. Case where both communication devices become control entities of LCM>

As described above, both the first communication device and the second communication device may become control entities of LCM. For example, when the wireless communication to which AI/ML models are applied (or processing related thereto) is uplink/downlink communication (or processing related thereto), both base station 20 and terminal device 40 may become control entities of LCM. When the wireless communication to which AI/ML models are applied (or processing related thereto) is sidelink communication (or processing related thereto), both terminal device 40 that becomes the transmitting device and terminal device 40 that becomes the receiving device may become control entities of LCM.

When both the first communication device and the second communication device become control entities of LCM, coordination may be performed in advance between the communication devices to determine which of the first communication device and the second communication device becomes the control entity. For example, either one of the first communication device and the second communication device may transmit, as information regarding AI/ML models, information regarding the control entity to the other communication device. If the wireless communication to which AI/ML models are applied (or processing related thereto) is uplink/downlink communication (or processing related thereto), either one of base station 20 and terminal device 40 may transmit information regarding the control entity to the other communication device. Also, if the wireless communication to which AI/ML models are applied (or processing related thereto) is sidelink communication (or processing related thereto), either one of terminal device 40 that becomes the transmitting device and terminal device 40 that becomes the receiving device may transmit information regarding the control entity to the other communication device.

When both the first communication device and the second communication device become control entities of LCM, determination may be made for each LCM (for example, for each of (M1) to (M25)) as to which of the first communication device and the second communication device becomes the control entity. The means for determining which becomes the control entity for each LCM may be either of the following determination means 1 and determination means 2.

### (Determination means 1)

The determination device determines the control entity of LCM based on static information. For example, the first communication device and the second communication device may determine the control entity of LCM based on specifications (for example, rules shared in advance between communication devices).

### (Determination means 2)

The determination device determines the control entity of LCM based on semi-static information. For example, in advance, one of the first communication device and the second communication device may determine which of multiple LCMs it will control and which the other communication device will control. Then, one communication device may notify the other communication device which of the multiple LCMs the other communication device will control.

Note that the determination device may be either one of the first communication device and the second communication device, or both. Also, the determination device may be a communication device other than the first communication device and the second communication device.

When both the first communication device and the second communication device become control entities of LCM, among the controls included in LCM, some LCM controls may be executed by both the first communication device and the second communication device. For example, both the first communication device and the second communication device may execute model training. In this case, both the first communication device and the second communication device may execute training of AI/ML models respectively and use trained models respectively.

### <4-1-5. Others>

LCM control (including LCM described above or below) may be executed by management device 10. For example, LCM control may be executed by network functions included in the core network (LCM-related network functions). LCM-related network functions are network functions that provide LCM-related control functions. LCM-related network functions have functions such as control of the above-mentioned (M1) to (M25) or provision of information necessary for execution of the above-mentioned (M1) to (M25).

FIG. 9 shows an example of a network configuration including LCM-related network functions. LCM-related network functions may be included in a server (for example, MEC server 552) connected to UPF 521. Also, LCM-related network functions may be included in a server (for example, MEC server 553) connected to base station 20 ((R)AN 530). Also, LCM-related network functions may be defined as one of the network functions. Then, this network function (LCM-related network function 554 shown in FIG. 9) may be included in the core network as one of the new network functions. Also, LCM-related network functions may be included in existing network functions. For example, the functions of LCM-related network functions may be included in MTLF 551 shown in FIG. 9. LCM-related network functions may exist in one or multiple locations.

In addition, LCM control may be executed by management device 10, may be executed by base station 20, may be executed by relay station 30, may be executed by terminal device 40, or may be executed by other communication devices (for example, server devices on the Internet). Each of these communication devices can become a control entity of LCM.

### <4-2. Control means of AI/ML model management>

The above describes the control entity of LCM, and next, the control means of LCM (AI/ML model management) will be described.

### <4-2-1. Wireless communication using AI/ML models>

In implementing wireless communication using AI/ML models (hereinafter also referred to as AI communication), the control entity of LCM implements control related to the application of AI/ML models (hereinafter referred to as LCM control). LCM control may be functionality-based LCM or model ID-based LCM. The control entity of LCM may apply only one of functionality-based LCM and model ID-based LCM, or may apply both in combination.

### (D1) Functionality-based LCM

Functionality-based LCM indicates implementing AI/ML model management based on functionality. For example, functionality-based LCM indicates implementing AI/ML model management for each use case and/or function.

For example, assume that functionality indicates communication requirements required for AI communication in use cases and/or functions to which AI/ML models are applied. At this time, the control entity of LCM notifies the communication device that becomes the control target of information indicating which functionality's AI communication to activate. For example, the control entity of LCM determines which functionality's AI communication to activate and notifies the communication device that becomes the control target of the ID of the functionality related to the determination (hereinafter referred to as functionality ID).

### (Transmission of capability information)

At this time, the terminal device that becomes the control target may transmit capability information as information regarding AI/ML models to the communication device that becomes the control entity of LCM. For example, assume that the second communication device is the control entity of LCM and the first communication device is the control target of LCM. At this time, the first communication device may transmit, as capability information, information indicating which functionality it corresponds to among multiple functionalities related to at least one of the first transmission processing and the second reception processing to the second communication device. Here, the capability information may be the ID of supported functionality (functionality ID) or may be a list of functionality IDs.

For example, assume that the wireless communication to which AI/ML models are applied (or processing related thereto) is uplink/downlink communication (or processing related thereto) and the control entity of LCM is base station 20. In this case, terminal device 40 that becomes the control target transmits capability information indicating which functionality it corresponds to to base station 20.

For example, assume that the wireless communication to which AI/ML models are applied (or processing related thereto) is sidelink communication (or processing related thereto) and the control entity of LCM is one of terminal device 40 that becomes the transmitting device and terminal device 40 that becomes the receiving device. In this case, terminal device 40 that becomes the control target transmits capability information indicating which functionality it corresponds to to terminal device 40 that becomes the control entity of LCM.

### (Transmission of training completion information)

Also, the terminal device that becomes the control target may transmit training completion information as information regarding AI/ML models to the communication device that becomes the control entity of LCM. For example, assume that the second communication device is the control entity of LCM and the first communication device is the control target of LCM. Also, assume that AI/ML models are linked to functionality related to at least one of the first transmission processing and the second reception processing. At this time, the first communication device may transmit, as training completion information, information indicating which functionality's AI/ML models have completed training (are in a state where model inference is possible) among multiple functionalities related to at least one of the first transmission processing and the second reception processing to the second communication device. Here, the training completion information may be the ID of functionality for which AI/ML model training has been completed (functionality ID) or may be a list of functionality IDs.

For example, assume that the wireless communication to which AI/ML models are applied (or processing related thereto) is uplink/downlink communication (or processing related thereto) and the control entity of LCM is base station 20. In this case, terminal device 40 that becomes the control target transmits training completion information indicating which functionality's AI/ML models have completed training to base station 20.

For example, assume that the wireless communication to which AI/ML models are applied (or processing related thereto) is sidelink communication (or processing related thereto) and the control entity of LCM is one of terminal device 40 that becomes the transmitting device and terminal device 40 that becomes the receiving device. In this case, terminal device 40 that becomes the control target transmits training completion information indicating which functionality's AI/ML models have completed training to terminal device 40 that becomes the control entity of LCM.

### (Activation)

The control entity of LCM determines which functionality's AI communication to activate based on information received from the control target. For example, assume that the second communication device is the control entity of LCM and the first communication device is the control target of LCM. The second communication device determines which functionality's AI communication to activate based on information received from the first communication device (for example, capability information and/or training completion information).

For example, assume that the wireless communication to which AI/ML models are applied (or processing related thereto) is uplink/downlink communication (or processing related thereto) and the control entity of LCM is base station 20. In this case, base station 20 determines which functionality's AI communication to activate based on information received from terminal device 40 that becomes the control target (for example, capability information and/or training completion information). Then, base station 20 notifies terminal device 40 of information indicating the determination result (for example, functionality ID).

For example, assume that the wireless communication to which AI/ML models are applied (or processing related thereto) is sidelink communication (or processing related thereto) and the control entity of LCM is one of terminal device 40 that becomes the transmitting device and terminal device 40 that becomes the receiving device. Terminal device 40 that becomes the control entity of LCM determines which functionality's AI communication to activate based on information received from terminal device 40 that becomes the control target (for example, capability information and/or training completion information). Then, terminal device 40 that becomes the control entity of LCM notifies terminal device 40 that becomes the control target of information indicating the determination result (for example, functionality ID).

In the case of functionality-based LCM, the communication device that becomes the control entity of LCM can execute LCM control without receiving AI/ML model lists and the like held by the communication device that becomes the control target. That is, which specific AI/ML model to use is determined by the communication device that becomes the control target based on information notified from the communication device that becomes the control entity of LCM.

### (D2) Model ID-based LCM

Model ID-based LCM indicates implementing AI/ML model management based on AI/ML models.

For example, assume that logical IDs are assigned to AI/ML models that can be supported by communication devices performing AI communication (at least one of the first communication device and the second communication device). At this time, the control entity of LCM notifies the communication device that becomes the control target of information indicating which AI/ML model's AI communication to activate. For example, the control entity of LCM determines which AI/ML model to activate and notifies the communication device that becomes the control target of the ID of the AI/ML model related to the determination (hereinafter referred to as model ID). Note that model IDs are not limited to logical IDs. The control entity of LCM may notify the communication device that becomes the control target of physical IDs individually linked to AI/ML models instead of logical IDs.

### (Transmission of capability information)

The terminal device that becomes the control target may transmit capability information as information regarding AI/ML models to the communication device that becomes the control entity of LCM. For example, assume that the second communication device is the control entity of LCM and the first communication device is the control target of LCM. At this time, the first communication device may transmit, as capability information, information indicating which AI/ML model it corresponds to among multiple AI/ML models related to at least one of the first transmission processing and the second reception processing to the second communication device. Here, the capability information may be the ID of supported AI/ML models (model ID) or may be a list of model IDs.

For example, assume that the wireless communication to which AI/ML models are applied (or processing related thereto) is uplink/downlink communication (or processing related thereto) and the control entity of LCM is base station 20. In this case, terminal device 40 that becomes the control target transmits capability information indicating which AI/ML model it corresponds to to base station 20.

For example, assume that the wireless communication to which AI/ML models are applied (or processing related thereto) is sidelink communication (or processing related thereto) and the control entity of LCM is one of terminal device 40 that becomes the transmitting device and terminal device 40 that becomes the receiving device. In this case, terminal device 40 that becomes the control target transmits capability information indicating which AI/ML model it corresponds to to terminal device 40 that becomes the control entity of LCM.

### (Transmission of training completion information)

Also, the terminal device that becomes the control target may transmit training completion information as information regarding AI/ML models to the communication device that becomes the control entity of LCM. For example, assume that the second communication device is the control entity of LCM and the first communication device is the control target of LCM. At this time, the first communication device may transmit, as training completion information, information indicating which AI/ML model has completed training (is in a state where model inference is possible) among multiple AI/ML models related to at least one of the first transmission processing and the second reception processing to the second communication device. Here, the training completion information may be the ID of AI/ML models for which training has been completed (model ID) or may be a list of model IDs.

For example, assume that the wireless communication to which AI/ML models are applied (or processing related thereto) is uplink/downlink communication (or processing related thereto) and the control entity of LCM is base station 20. In this case, terminal device 40 that becomes the control target transmits training completion information indicating which AI/ML model has completed training to base station 20.

For example, assume that the wireless communication to which AI/ML models are applied (or processing related thereto) is sidelink communication (or processing related thereto) and the control entity of LCM is one of terminal device 40 that becomes the transmitting device and terminal device 40 that becomes the receiving device. In this case, terminal device 40 that becomes the control target transmits training completion information indicating which AI/ML model has completed training to terminal device 40 that becomes the control entity of LCM.

### (Activation)

The control entity of LCM determines which AI/ML model to activate based on information received from the control target. For example, assume that the second communication device is the control entity of LCM and the first communication device is the control target of LCM. The second communication device determines which AI/ML model to activate based on information received from the first communication device (for example, capability information and/or training completion information).

For example, assume that the wireless communication to which AI/ML models are applied (or processing related thereto) is uplink/downlink communication (or processing related thereto) and the control entity of LCM is base station 20. In this case, base station 20 determines which AI/ML model to activate based on information received from terminal device 40 that becomes the control target (for example, capability information and/or training completion information). Then, base station 20 notifies terminal device 40 of information indicating the determination result (for example, model ID).

For example, assume that the wireless communication to which AI/ML models are applied (or processing related thereto) is sidelink communication (or processing related thereto) and the control entity of LCM is one of terminal device 40 that becomes the transmitting device and terminal device 40 that becomes the receiving device. Terminal device 40 that becomes the control entity of LCM determines which AI/ML model to activate based on information received from terminal device 40 that becomes the control target (for example, capability information and/or training completion information). Then, terminal device 40 that becomes the control entity of LCM notifies terminal device 40 that becomes the control target of information indicating the determination result (for example, model ID).

### <4-2-2. Transmission means of information regarding AI/ML models>

Communication devices may transmit information regarding AI/ML models (for example, control information for LCM control) as follows.

### (E1) Unicast

The control entity of LCM may control one control target. In this case, the control entity of LCM may transmit information regarding AI/ML models (for example, control information for LCM control) to one control target.

For example, assume that the wireless communication to which AI/ML models are applied (or processing related thereto) is uplink/downlink communication (or processing related thereto) and the control entity of LCM is base station 20. In this case, base station 20 may transmit information regarding AI/ML models (control information) to one terminal device 40.

Also, assume that the wireless communication to which AI/ML models are applied (or processing related thereto) is uplink/downlink communication (or processing related thereto) and the control entity of LCM is terminal device 40. In this case, terminal device 40 may transmit information regarding AI/ML models (control information) to one base station 20.

For example, assume that the wireless communication to which AI/ML models are applied (or processing related thereto) is sidelink communication (or processing related thereto) and the control entity of LCM is one of terminal device 40 that becomes the transmitting device and terminal device 40 that becomes the receiving device. Terminal device 40 that becomes the control entity of LCM may transmit information regarding AI/ML models (control information) to one terminal device 40.

In addition, a communication control device that controls at least one of the first communication device and the second communication device may transmit information regarding AI/ML models (control information) to one of the first communication device and the second communication device. For example, a communication control device that controls at least one of the communication device that becomes the transmitting device and the communication device that becomes the receiving device may transmit information regarding AI/ML models (control information) to one of the transmitting device and the receiving device.

### (E2) Group sharing

The control entity of LCM may control specific multiple control targets. In this case, the control entity of LCM may transmit information regarding AI/ML models (for example, control information for LCM control) to specific multiple control targets.

For example, assume that the wireless communication to which AI/ML models are applied (or processing related thereto) is uplink/downlink communication (or processing related thereto) and the control entity of LCM is base station 20. In this case, base station 20 may transmit information regarding AI/ML models (control information) to specific multiple terminal devices 40.

Also, assume that the wireless communication to which AI/ML models are applied (or processing related thereto) is uplink/downlink communication (or processing related thereto) and the control entity of LCM is terminal device 40. In this case, terminal device 40 may transmit information regarding AI/ML models (control information) to specific multiple base stations 20.

For example, assume that the wireless communication to which AI/ML models are applied (or processing related thereto) is sidelink communication (or processing related thereto) and the control entity of LCM is one of terminal device 40 that becomes the transmitting device and terminal device 40 that becomes the receiving device. Terminal device 40 that becomes the control entity of LCM may transmit information regarding AI/ML models (control information) to specific multiple terminal devices 40.

In addition, a communication control device that controls at least one of the first communication device and the second communication device may transmit information regarding AI/ML models (control information) to both the first communication device and the second communication device. For example, a communication control device that controls at least one of the communication device that becomes the transmitting device and the communication device that becomes the receiving device may transmit information regarding AI/ML models (control information) to both the transmitting device and the receiving device.

### (E3) Broadcast

The control entity of LCM may control unspecified multiple control targets. In this case, the control entity of LCM may transmit information regarding AI/ML models (for example, control information for LCM control) to unspecified multiple control targets. For example, base station 20 may transmit information regarding AI/ML models (control information) to unspecified multiple terminal devices 40, or terminal device 40 may transmit information regarding AI/ML models (control information) to unspecified multiple base stations 20. Terminal device 40 may transmit information regarding AI/ML models (control information) to unspecified multiple terminal devices 40. A communication control device may transmit information regarding AI/ML models (control information) to unspecified multiple communication devices including at least one of the first communication device and the second communication device.

### (E4) Others

In the above (E1) to (E3), the communication device that becomes the control entity of LCM transmitted information regarding AI/ML models. However, the communication device that becomes the control target may transmit information regarding AI/ML models. In this case, the communication device that becomes the control target may transmit information regarding AI/ML models to one communication device. Also, the communication device that becomes the control target may transmit information regarding AI/ML models to multiple communication devices. At this time, the communication device that becomes the control target may transmit information regarding AI/ML models to specific multiple communication devices, or may transmit information regarding AI/ML models to unspecified multiple communication devices.

### <4-2-3. Information sharing regarding LCM control>

In implementing wireless communication using AI/ML models, the first communication device and the second communication device need to have a common understanding of which AI/ML model or which functionality to implement LCM for.

Hereinafter, several examples of information sharing regarding LCM control will be described. Note that the examples shown in the following (F1) to (F4) may be implemented independently. Alternatively, at least part of the examples shown in the following (F1) to (F4) may be implemented in combination with other parts. Also, at least part of the information transmitted from the first communication device to the second communication device (or information transmitted from the second communication device to the first communication device) in the examples shown in the following (F1) to (F4) may be information regarding AI/ML models described above or below, or may be included in information regarding AI/ML models described above or below.

Note that in the following description, the first communication device is assumed to transmit information to the second communication device, but the second communication device may transmit information to the first communication device. At this time, the first communication device and the second communication device may be base station 20 and terminal device 40, or may be terminal device 40 and another terminal device 40. Also, a third communication device (for example, a communication control device) different from the first communication device and the second communication device may transmit information to the first communication device and/or the second communication device. At this time, the third communication device may be management device 10 or may be primary terminal device 40 (master terminal device 40).

The description of "first communication device" appearing in the following explanation can be replaced with "second communication device" or "third communication device". Also, the description of "second communication device" appearing in the following explanation can be replaced with "first communication device" or "first communication device and/or second communication device".

### (F1) Information sharing by model ID

The first communication device notifies the second communication device of the ID of AI/ML models (model ID). For example, base station 20 notifies terminal device 40 of the model ID. Alternatively, one of terminal device 40 that becomes the transmitting device and terminal device 40 that becomes the receiving device notifies the other terminal device 40 of the model ID. The second communication device determines the AI/ML model to use based on the notified model ID.

The first communication device may notify an ID linked to AI/ML models as the model ID, or may notify a logically assigned ID. The first communication device may notify information of the model ID as semi-static information such as system information or RRC signaling. Also, the first communication device may notify information of the model ID as dynamic information such as MAC CE (MAC Control Element), DCI (Downlink Control Information), UCI (Uplink Control Information), or SCI (Sidelink control information).

The second communication device may activate the AI/ML model specified by the notified model ID. Alternatively, the second communication device may hold the notification information (for example, information of the model ID) as information of available AI/ML models until it receives an activation notification of the AI/ML model specified by the notified model ID.

The information notified from the first communication device to the second communication device may be, for example, the following notification information (for example, RRC IEs (Information Elements)). The following notification information (e.g., ModelIDConfig) may further include at least part of the information regarding AI/ML models described above or below. Additionally or alternatively, at least part of the following notification information may be included in the information regarding AI/ML models described above or below. The first communication device may notify the second communication device of at least part of the notification information shown below.

```
  ModelIDConfig::= SEQUENCE {
     modelId CHOICE {
       modelID1 SEQUENCE {
         modelId,
         numberOfInputNode,
         numberOfOutputNode,
         numberOfLayer,
          informationOfWeight,
         ...
       },
       modelID2 SEQUENCE {
         modelId,
         numberOfInputNode,
         numberOfOutputNode,
         numberOfLayer,
          informationOfWeight,
           ...
       },
       ...
```

Here, modelId indicates a physical or logical identifier assigned to the AI/ML model. numberOfInputNode indicates the number of input nodes in the AI/ML model network structure that constitutes the AI/ML model. numberOfOutputNode indicates the number of output nodes in the AI/ML model network structure that constitutes the AI/ML model. numberOfLayer indicates the number of layers in the AI/ML model network structure that constitutes the AI/ML model. informationOfWeight indicates the weights assigned between each node in the AI/ML model network structure that constitutes the AI/ML model.

### (F2) Information sharing by functionality ID

The first communication device notifies the second communication device of the functionality ID. For example, base station 20 notifies terminal device 40 of the functionality ID. Alternatively, one of terminal device 40 that becomes the transmitting device and terminal device 40 that becomes the receiving device notifies the other terminal device 40 of the functionality ID. The second communication device determines the AI/ML model to use based on the notified functionality ID.

The first communication device may notify an ID linked to functionality models as the functionality ID, or may notify a logically assigned ID. The first communication device may notify information of the functionality ID as semi-static information such as system information or RRC signaling. Also, the first communication device may notify information of the functionality ID as dynamic information such as MAC CE (MAC Control Element), DCI (Downlink Control Information), UCI (Uplink Control Information), or SCI (Sidelink control information).

The second communication device determines the functionality to which AI/ML models are applied based on the notified functionality ID. The second communication device may activate the AI/ML model specified by the determined functionality. Note that the second communication device may hold the determination information (for example, information of the model ID) as information of available AI/ML models until it receives an activation notification of the determined AI/ML model. Alternatively, the second communication device may hold the notification information (for example, information of the functionality ID) until it receives an activation notification of the functionality specified by the notified functionality ID.

The information notified from the first communication device to the second communication device may be, for example, the following notification information (for example, RRC IEs (Information Elements)). The following notification information (e.g., FunctionalityConfig) may further include at least part of the information regarding AI/ML models described above or below. Additionally or alternatively, at least part of the following notification information may be included in the information regarding AI/ML models described above or below. The first communication device may notify the second communication device of at least part of the notification information shown below.

```
  FunctionalityConfig::= SEQUENCE {
     Functionality CHOICE {
       functionality1 SEQUENCE {
          functionalityId,
          feature,
          requirementList,
          capableModelList,
         ...
       },
       functionality2 SEQUENCE {
          functionalityId,
          feature,
          requirementList,
          capableModelList,
         ...
       },
```

Here, functionalityId indicates a physical or logical identifier assigned to functionality. feature indicates the feature that contains the functionality. requirementList indicates requirement values required for the functionality. capableModelList indicates information about AI/ML models applicable in the functionality.

### (F3) Information sharing by Model Config

The first communication device notifies the second communication device of RRC signaling defined for each AI/ML model. For example, base station 20 notifies terminal device 40 of RRC signaling defined for each AI/ML model. Alternatively, one of terminal device 40 that becomes the transmitting device and terminal device 40 that becomes the receiving device notifies the other terminal device 40 of RRC signaling defined for each AI/ML model. At this time, the first communication device may perform notification with different messages, different information fields, or different information elements for each AI/ML model.

The second communication device discriminates the notified AI/ML model based on RRC signaling defined for each AI/ML model. The second communication device may discriminate the notified AI/ML model based on which message, which information field, or which information element it received. Note that the second communication device may hold discrimination information (for example, model ID information) as information of available AI/ML models until it receives an activation notification of the discriminated AI/ML model.

The information notified from the first communication device to the second communication device may be, for example, the following notification information (for example, RRC IEs (Information Elements)). The following notification information (e.g., ModelConfigA, ModelConfigB) may further include at least part of the information regarding AI/ML models described above or below. Additionally or alternatively, at least part of the following notification information may be included in the information regarding AI/ML models described above or below. The first communication device may notify the second communication device of at least part of the notification information shown below. At this time, when ModelConfigA is notified, the second communication device may discriminate that the AI/ML model related to the notification is the AI/ML model of ModelConfigA. Also, when ModelConfigB is notified, the second communication device may discriminate that the AI/ML model related to the notification is the AI/ML model of ModelConfigB.

```
  ModelConfigA::= SEQUENCE {
     numberOfInputNode,
     numberOfOutputNode,
     numberOfLayer,
     informationOfWeight,
     ...
   }
  ModelConfigB::= SEQUENCE {
     numberOfInputNode,
     numberOfOutputNode,
     numberOfLayer,
     informationOfWeight,
     ...
   }
```

Here, modelId indicates a physical or logical identifier assigned to the AI/ML model. numberOfInputNode indicates the number of input nodes in the AI/ML model network structure that constitutes the AI/ML model. numberOfOutputNode indicates the number of output nodes in the AI/ML model network structure that constitutes the AI/ML model. numberOfLayer indicates the number of layers in the AI/ML model network structure that constitutes the AI/ML model. informationOfWeight indicates the weights assigned between each node in the AI/ML model network structure that constitutes the AI/ML model.

### (F4) Information sharing by Functionality Config

The first communication device notifies the second communication device of RRC signaling defined for each functionality ID. For example, base station 20 notifies terminal device 40 of RRC signaling defined for each functionality ID. Alternatively, one of terminal device 40 that becomes the transmitting device and terminal device 40 that becomes the receiving device notifies the other terminal device 40 of RRC signaling defined for each functionality ID. At this time, the first communication device may perform notification with different messages, different information fields, or different information elements for each functionality ID.

The second communication device discriminates the functionality to which AI/ML models are applied based on the notified functionality ID. The second communication device may discriminate the notified functionality (or AI/ML model) based on which message, which information field, or which information element it received. The second communication device may activate the AI/ML model specified by the discriminated functionality. Note that the second communication device may hold discrimination information (for example, model ID information) as information of available AI/ML models until it receives an activation notification of the discriminated AI/ML model. Alternatively, the second communication device may hold discrimination information (for example, functionality ID information) until it receives an activation notification of the functionality specified by the notified functionality ID.

The information notified from the first communication device to the second communication device may be, for example, the following notification information (for example, RRC IEs (Information Elements)). The following notification information (e.g., FunctionalityConfigA, FunctionalityConfigB) may further include at least part of the information regarding AI/ML models described above or below. Additionally or alternatively, at least part of the following notification information may be included in the information regarding AI/ML models described above or below. The first communication device may notify the second communication device of at least part of the notification information shown below. At this time, when FunctionalityConfigA is notified, the second communication device may discriminate that the functionality (or AI/ML model) related to the notification is the functionality of FunctionalityConfigA (or the AI/ML model of FunctionalityConfigA). Also, when FunctionalityConfigB is notified, the second communication device may discriminate that the functionality (or AI/ML model) related to the notification is the functionality of FunctionalityConfigB (or the AI/ML model of FunctionalityConfigB).

```
FunctionalityConfigA::= SEQUENCE {
     feature,
     requirementList,
     capableModelList,
     ...
   }
  FunctionalityConfigB::= SEQUENCE {
     feature,
     requirementList,
     capableModelList,
     ...
```

Here, feature indicates the feature that contains the functionality. requirementList indicates requirement values required for the functionality. capableModelList indicates information about AI/ML models applicable in the functionality.

### <4-2-4. Execution Timing of LCM>

Event-trigger-based control or periodic-based control may be introduced in the control of LCM (AI/ML model management).

Note that in the following description, the first communication device is assumed to execute LCM control, but the second communication device may execute LCM control. At this time, the first communication device may be base station 20 or terminal device 40. Also, a third communication device (for example, a communication control device) different from the first communication device and the second communication device may execute LCM control. At this time, the third communication device may be management device 10 or primary terminal device 40 (master terminal device 40).

The description of "first communication device" appearing in the following explanation can be replaced with "second communication device" or "third communication device". Also, the description of "second communication device" or "third communication device" appearing in the following explanation can be replaced with "first communication device" or "first communication device and/or second communication device".

### (G1) Event trigger-based control example

The first communication device may implement LCM control at the timing when a predetermined event occurs. For example, the first communication device may transmit information regarding AI/ML models to other communication devices (for example, the second communication device and/or the third communication device) at the timing when a predetermined event occurs. In addition, the first communication device may execute one or more of the above-mentioned (M1) to (M25) at the timing when a predetermined event occurs. Note that the timing when a predetermined event occurs may be the timing when the first communication device receives a predetermined notification from other communication devices. For example, the timing when a predetermined event occurs may be the timing when the first communication device receives a predetermined notification transmitted by other communication devices when the predetermined event occurs.

The timing when a predetermined event occurs may be at least one of the timings shown below. Note that the timings shown below are merely examples. The timing when a predetermined event occurs is not limited to the following. Also, information indicating which timing or which event among the following the first communication device should apply may be provided from other communication devices (the second communication device and/or the third communication device) to the first communication device.
▪Timing when AI/ML model training is completed
▪Timing when AI/ML model training is started
▪Timing when the validity period of AI/ML models has expired (Timer Expire, etc.)
▪Timing when the validity of AI/ML models is determined to be invalid
▪Timing when it is determined that AI/ML models need to be updated
▪Timing when the validity period of training data has expired (Timer Expire, etc.)
▪Timing when AI/ML models are downloaded
▪Timing when AI/ML models are uploaded
▪Timing when AI/ML model transfer is implemented
▪Timing when AI/ML model inference is implemented
▪Timing when AI/ML model activation is implemented
▪Timing when AI/ML model deactivation is implemented
▪Timing when AI/ML models are switched
▪Timing when AI/ML models are fallen back and switched to conventional processing that does not use AI/ML models

### (G2) Periodic-based control example

The first communication device may implement LCM control at the timing when a predetermined time is reached. For example, the first communication device may transmit information regarding AI/ML models to other communication devices (for example, the second communication device and/or the third communication device) at the timing when a predetermined time is reached. In addition, the first communication device may execute one or more of the above-mentioned (M1) to (M25) at the timing when a predetermined time is reached.

Note that the timing when a predetermined time is reached may be regular time intervals (for example, at least one of the number of symbols, number of slots, number of subframes, and absolute time). Alternatively, the timing when a predetermined time is reached may be set time timing (for example, at least one of symbol index, slot index, subframe index, and absolute time).

### (G3) Notification information

In event trigger-based control and/or periodic-based control, the information notified from the first communication device to other communication devices (for example, the second communication device and/or the third communication device) may be, for example, the following notification information (for example, RRC IEs (Information Elements)). The following notification information (e.g., LCMConfig) may further include at least part of the information regarding AI/ML models described above or below. Additionally or alternatively, at least part of the following notification information may be included in the information regarding AI/ML models described above or below. The first communication device may notify other communication devices of at least part of the notification information shown below.

```
  LCMConfig::= SEQUENCE {
     modelTrainingConfig SEQUENCE {
       onlineTrainingEnable,
       trainingEventTrigger,
       trainingPeridoicTimer,
       ...
     },
     modelIdentificationConfig SEQUENCE {
       identificationModelList,
       identificationEventTrigger,
       identificationPeriodicTimer,
       ...
     },
     functionalityIdentificationConfig SEQUENCE {
       identificationFunctionalityList,
       identificationEventTrigger,
       identificationPeriodicTimer,
       ...
     },
     modelTransferConfig SEQUENCE {
       modelId,
       numberOfInputNode,
       numberOfOutputNode,
       numberOfLayer,
       informationOfWeight,
       ...
     },
     modelInferenceConfig SEQUENCE {
       modelId,
       numberOfInputNode,
       numberOfOutputNode,
       numberOfLayer,
       informationOfWeight,
       ...
     },
     modelActivationConfig SEQUENCE {
       modelId,
       functionalityId,
       feature,
       requirementList,
       capableModelList,
       modelValidationTimer
       ...
     },
     functionalityActivationConfig SEQUENCE {
       functionalityId,
       feature,
       requirementList,
       capableModelList,
       functionalityValidationTimer
       ...
     },
     modelDeactivationConfig SEQUENCE {
       modelId,
       functionalityId,
       feature,
       requirementList,
       capableModelList,
       modelValidationTimer
       ...
     },
     functionalityDeactivationConfig SEQUENCE {
       functionalityId,
       feature,
       requirementList,
       capableModelList,
       functionalityValidationTimer
       ...
     },
     modelSwitchingConfig SEQUENCE {
       modelId,
       functionalityId,
       feature,
       requirementList,
       capableModelList,
       modelValidationTimer
       ...
     },
     functionalitySwitchingConfig SEQUENCE {
       functionalityId,
       feature,
       requirementList,
       capableModelList,
       functionalityValidationTimer
       ...
     },
     modelFallbackConfig SEQUENCE {
       modelId,
       functionalityId,
       feature,
       requirementList,
       capableModelList,
       modelValidationTimer,
       fallbackConventionalConfiguration
       ...
     },
     modelMonitoringConfig SEQUENCE {
       modelId,
       functionalityId,
       feature,
       requirementList,
       capableModelList,
       monitoringEventTrigger,
       monitoringPeriodicTimer,
       ...
     },
     modelUpdateConfig SEQUENCE {
       modelId,
       functionalityId,
       feature,
       requirementList,
       capableModelList,
       updateEventTrigger,
       updatePeriodicTimer,
       ...
     },
     ...
   }
```

Here, onlineTrainingEnable indicates whether to enable or disable online training. Here, online training may represent a means of implementing model training using training data acquired in real time. trainingEventTrigger indicates information about event triggers that start model training. trainingPeridoicTimer indicates information about periodic timers that implement model training.

Also, identificationModelList indicates information that notifies a list of model IDs used in model identification. identificationFunctionalityList indicates information that notifies a list of model IDs used in model identification. identificationEventTrigger indicates information about event triggers that start model identification. identificationPeriodicTimer indicates information about periodic timers that implement model identification.

Also, modelId indicates a physical or logical identifier assigned to the AI/ML model. numberOfInputNode indicates the number of input nodes in the AI/ML model network structure that constitutes the AI/ML model. numberOfOutputNode indicates the number of output nodes in the AI/ML model network structure that constitutes the AI/ML model. numberOfLayer indicates the number of layers in the AI/ML model network structure that constitutes the AI/ML model. informationOfWeight indicates the weights assigned between each node in the AI/ML model network structure that constitutes the AI/ML model.

Also, functionalityId indicates a physical or logical identifier assigned to functionality. feature indicates the feature that contains the functionality. requirementList indicates information about requirement values required for the functionality. capableModelList indicates information about AI/ML models applicable in the functionality. modelValidationTimer indicates information about a timer representing the period during which AI/ML models can be used, or information about a timer representing the period until they become unusable. functionalityValidationTimer indicates information about a timer representing the period until functionality information is updated.

Also, fallbackConventionalConfiguration indicates semi-static information about signal processing after fallback when falling back to conventional signal processing. monitoringEventTrigger indicates information about event triggers that start model monitoring. monitoringPeriodicTimer indicates information about periodic timers that implement model monitoring. updateEventTrigger indicates information about event triggers that start model update. updatePeriodicTimer indicates information about periodic timers that implement model update.

### <4-3. Fallback to Conventional Signal Processing>

Next, fallback to conventional processing that does not use AI/ML models will be described.

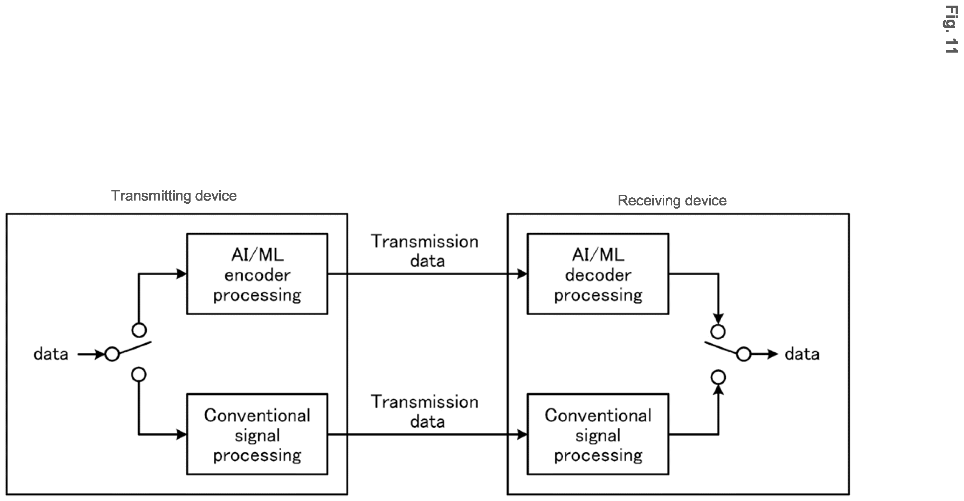

FIG. 11 is a diagram for explaining fallback processing. For example, let the signal processing method (transmission signal processing method and/or reception signal processing method) that uses AI/ML models be the first signal processing method, and the signal processing method (transmission signal processing method and/or reception signal processing method) that does not use AI/ML models be the second signal processing method. In the example of FIG. 11, AI/ML based encoder processing is transmission signal processing using the first signal processing method, and AI/ML based decoder processing is reception signal processing using the first signal processing method. Also, in the example of FIG. 11, Conventional signal processing is transmission signal processing/reception signal processing using the second signal processing method. Note that Conventional signal processing may be called Non-AI/ML based encoder processing or Non-AI/ML based decoder processing.

Communication devices (the first communication device and/or the second communication device) may execute switching processing (hereinafter also referred to as fallback processing) of the signal processing method from the first signal processing method that uses AI/ML models to the second signal processing method that does not use AI/ML models when predetermined conditions are satisfied. Here, the first communication device may be the transmitting device and the second communication device may be the receiving device, or the first communication device may be the receiving device and the second communication device may be the transmitting device.

For example, assume that the wireless communication to which AI/ML models are applied (or processing related thereto) is uplink/downlink communication (or processing related thereto). In this case, base station 20 and terminal device 40 may execute fallback processing when predetermined conditions are satisfied. Also, assume that the wireless communication to which AI/ML models are applied (or processing related thereto) is sidelink communication (or processing related thereto). In this case, terminal device 40 that becomes the transmitting device and terminal device 40 that becomes the receiving device may execute fallback processing when predetermined conditions are satisfied.

Here, conventional signal processing (signal processing using the second signal processing method) may be at least one of the signal processing shown in the following (H1) to (H3). Note that the signal processing shown below is an example. Conventional signal processing is not limited to the following.

### (H1) CSI feedback

Conventional signal processing may be conventional CSI feedback processing in CSI feedback. Here, conventional CSI feedback may be at least one of Type 1 Single-panel codebook, Type 1 Multi-panel Codebook, Type 2 Codebook, Type 2 Port selection codebook, Enhanced Type 2 Codebook, Enhanced Type 2 Port selection codebook, and Further enhanced Type 2 port selection codebook.

### (H2) Beam management

Conventional signal processing may be conventional Beam management processing in Beam management. Here, conventional Beam management may be an operation of receiving SSB (Synchronization Signal Block) and transmitting a PRACH preamble on a PRACH resource corresponding to the SSB. Also, conventional Beam management may be an operation of receiving CSI-RS and reporting a CSI report.

### (H3) Positioning

Conventional signal processing may be conventional Positioning processing in Positioning. Here, conventional Positioning may be an operation of transmitting PRS (Positioning Reference Signal) on the downlink and performing position estimation. Also, conventional Positioning may be an operation of transmitting SRS (Sounding Reference Signal) on the uplink and performing position estimation.

As described above, communication devices (the first communication device and/or the second communication device) may execute fallback processing when predetermined conditions are satisfied. At this time, the communication device may execute fallback processing when a predetermined event occurs, may execute fallback processing when a predetermined trigger is activated, or may execute fallback processing when a predetermined time is reached.

More specifically, the communication device may execute fallback processing in at least one of the following cases (I1) to (I4).

### (I1) When a fallback notification is received

The communication device may execute fallback processing when it receives a fallback notification instructing switching to conventional signal processing from another communication device. For example, one of the first communication device and the second communication device may execute fallback processing when it receives a fallback notification from the other communication device. The first communication device and/or the second communication device may execute fallback processing when it receives a fallback notification from a third communication device (a communication control device that controls the first communication device and/or the second communication device).

### (I2) When communication quality deteriorates

The communication device may execute fallback processing when communication quality deteriorates. For example, the communication device may execute fallback processing when communication quality deteriorates and an initial access procedure becomes necessary.

### (I3) When AI/ML model performance no longer meets requirements

The communication device may execute fallback processing when AI/ML model performance no longer meets requirements. For example, the communication device may execute fallback processing when it determines as a result of model monitoring that AI/ML model performance no longer meets the requirements of the applied functionality.

### (I4) When the validity period of AI/ML models has expired

The communication device may execute fallback processing when the validity period of AI/ML models has expired. For example, the communication device may execute fallback processing when the validation timer of AI/ML models expires and retraining or reacquisition of AI/ML models becomes necessary.

### <4-4. Change of LCM Control Entity>

When the communication device serving as the control entity of LCM has mobility, there is a possibility that the communication device serving as the control entity of LCM may move outside the communication area. Therefore, it is necessary to execute LCM control considering the possibility that the control entity may change. Therefore, communication devices (the first communication device and/or the second communication device) may execute LCM control as follows.

For example, a validity period may be set for LCM control. Then, the communication device starts counting a timer when the control entity of LCM executes LCM control. Here, the communication device that counts the timer may be the control entity of LCM or may be the control target. The communication device determines that AI/ML model-related information (configuration information and/or control information) is valid information (usable information) until the timer reaches zero. When the timer reaches zero, the communication device determines that the AI/ML model-related information is invalid.

Also, the communication device may transfer already activated AI/ML models to another communication device so that the other communication device can use the same AI/ML models.

For example, assume that the wireless communication to which AI/ML models are applied (or processing related thereto) is uplink/downlink communication (or processing related thereto). In this case, base station 20₁ may transfer the AI/ML model that was used in communication with terminal device 40 to base station 20₂. This enables base station 20₂ to smoothly communicate with terminal device 40 even if terminal device 40 moves outside the communicable area of base station 20₁.

Also, assume that the wireless communication to which AI/ML models are applied (or processing related thereto) is sidelink communication (or processing related thereto). In this case, terminal device 40₂ may transfer the AI/ML model that was used in communication with terminal device 40₁ to terminal device 40₃. This enables terminal device 40₃ to smoothly communicate with terminal device 40₁ even if terminal device 40₁ moves outside the communicable area of terminal device 40₂.

### <4-5. Examples of Input/Output Information for AI/ML Models>

Communication devices (the first communication device and/or the second communication device) may execute signal processing based on input information to AI/ML models and/or output information from AI/ML models. Also, information processing devices may perform training of AI/ML models based on the input information and/or output information shown below. Here, the information processing device may be one or both of the first communication device and the second communication device. Also, the information processing device may be a device other than the first communication device and the second communication device.

Here, the input information and/or output information may include at least one of the information shown in the following (J1) to (J15), for example. Of course, the input information and/or output information is not limited to the following information.
(J1) CQI (Channel Quality Information)
(J2) PMI (Precoding Matrix Indicator)
(J3) CRI (CSI-RS Resource Indicator)
(J4) SSBRI (SS/PBCH Resource Block Indicator)
(J5) LI (Layer Indicator)
(J6) RI (Rank Indicator)
(J7) L1-RSRP (Layer 1 Reference Signal Received Power)
(J8) Other cell interference amount
(J9) Position estimation information of terminal device 40
(J10) Position information of base station 20
(J11) Channel Matrix
(J12) Eigenvector
(J13) Beam ID
(J14) Timing error information
(J15) LOS (Line Of Sight) /NLOS (Non Line Of Sight) information

### <4-6. Coexistence with Communication Devices Not Supporting AI Communication>

Next, coexistence between communication devices supporting AI communication and communication devices not supporting AI communication will be described. As described above, AI communication is wireless communication using AI/ML models.

In the following description, wireless communication not using AI/ML models (wireless communication that is not AI communication) may be referred to as conventional communication or conventional wireless communication. Note that wireless communication not using AI/ML models (wireless communication that is not AI communication) is not necessarily limited to existing wireless communication. The descriptions of "conventional communication" or "conventional wireless communication" appearing in the following explanation can be replaced with "wireless communication not using AI/ML models" or "wireless communication that is not AI communication".

Note that the wireless communication appearing in the following description may be uplink communication with terminal device 40 as the transmitting device and base station 20 as the receiving device, or may be downlink communication with base station 20 as the transmitting device and terminal device 40 as the receiving device. Also, the wireless communication appearing in the following description may be sidelink communication with terminal device 40 as the transmitting device of sidelink data and another terminal device 40 as the receiving device of sidelink data.

To execute AI communication, both the transmitting device and the receiving device need to support AI communication. In this case, it is necessary to consider coexistence between communication devices supporting AI communication and communication devices not supporting AI communication.

On the other hand, when one of the transmitting device and the receiving device is a communication device supporting AI communication and the one communication device is a communication device capable of executing conventional wireless communication not using AI/ML models, it is not necessarily required to consider coexistence between communication devices supporting AI communication and communication devices not supporting AI communication.

Here, in processing related to AI/ML models of communication devices supporting AI communication, information provided by communication devices not supporting AI communication may be required. For example, in at least one of the processes shown in the above (M1) to (M25), such as model training processing or model inference processing, information provided by communication devices not supporting AI communication may be required. Therefore, even when communication devices supporting AI communication can execute conventional wireless communication, it may be necessary to consider coexistence between communication devices supporting AI communication and communication devices not supporting AI communication.

Note that when one of the transmitting device and the receiving device is a communication device supporting AI communication and the one communication device is a communication device incapable of executing conventional wireless communication not using AI/ML models, it is still necessary to consider coexistence between communication devices supporting AI communication and communication devices not supporting AI communication.

When it is necessary to consider coexistence between communication devices supporting AI communication and communication devices not supporting AI communication, the operation of communication devices is as follows. Hereinafter, the operation of communication devices will be described for each of broadcast communication, groupcast communication, and unicast communication.

### (L1) Broadcast communication

For example, when a transmitting device performs signal processing using AI/ML models and transmits data, a case may occur where communication devices supporting AI communication can receive the data but communication devices not supporting AI communication cannot receive the data.

### (L2) Groupcast communication

In the case of groupcast communication, the communication device determines whether the communication devices performing wireless communication (the first communication device and/or the second communication device) belong to a group supporting AI communication or a group not supporting AI communication. Here, the communication device performing the determination may be the first communication device, the second communication device, or a third communication device different from the first communication device and the second communication device (for example, a communication control device that controls the first communication device and/or the second communication device).

Then, the communication device determines, according to the determination result, whether to make the signal processing of the first communication device and/or the signal processing of the second communication device signal processing using AI/ML models or signal processing not using AI/ML models. The first communication device and/or the second communication device executes signal processing using AI/ML models or signal processing not using AI/ML models based on the determination result.

### (L3) Unicast communication

In the case of unicast communication, the communication device determines whether the communication devices performing wireless communication (the first communication device and/or the second communication device) can support AI communication. Here, the communication device performing the determination may be the first communication device, the second communication device, or a third communication device different from the first communication device and the second communication device (for example, a communication control device that controls the first communication device and/or the second communication device).

At this time, the communication devices performing wireless communication may transmit capability information including information indicating whether they can support AI communication to the communication device performing the determination. Then, the communication device performing the determination may determine whether the first communication device and/or the second communication device can support AI communication based on the capability information.

Then, the communication device determines, according to the determination result, whether to make the signal processing of the first communication device and/or the signal processing of the second communication device signal processing using AI/ML models or signal processing not using AI/ML models. The first communication device and/or the second communication device executes signal processing using AI/ML models or signal processing not using AI/ML models based on the determination result.

Note that one of the first communication device and the second communication device may notify the other communication device of control information regarding whether to communicate with AI communication or conventional communication. The control information may include capability information including information indicating whether AI communication can be supported. Then, the other communication device executes signal processing using AI/ML models or signal processing not using AI/ML models based on the received control information.

### <<5. Sequence Examples>>

Based on the above, sequence examples of communication processing according to this embodiment will be described.

In the following description, sequence examples of wireless communication performed between a transmitting device and a receiving device will be described. Note that the wireless communication shown in the following sequence examples may be uplink communication with terminal device 40 as the transmitting device and base station 20 as the receiving device, or may be downlink communication with base station 20 as the transmitting device and terminal device 40 as the receiving device. Also, the wireless communication shown in the following sequence examples may be sidelink communication with terminal device 40 as the transmitting device of sidelink data and another terminal device 40 as the receiving device of sidelink data.

Note that the communication processing of this embodiment is not limited to the communication processing shown in the following sequence examples. The communication processing of this embodiment can also be implemented with other sequences.

### <5-1. Case where Transmitting Device is LCM Control Entity>

First, a sequence example when the transmitting device is the LCM control entity and the receiving device is the control target will be described. In this sequence example, the operation of the transmitting device and receiving device in a two-sided model will be described. A two-sided model is a case where AI/ML models are used in both the transmitting device and the receiving device.

### <5-1-1. Basic Sequence Example>

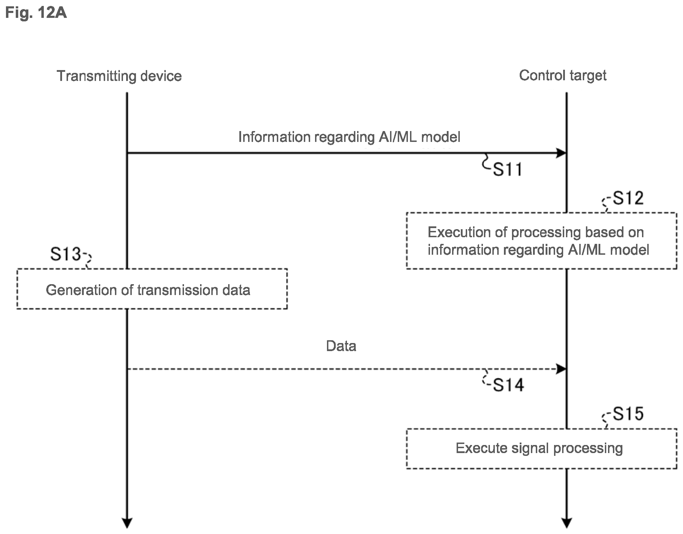

First, a basic sequence example will be described. FIG. 12A is a diagram showing a basic sequence example of communication processing when the transmitting device is the LCM control entity. Note that in the following, for convenience of explanation, details of each step from step S11 to S15 are described, but not all steps are essential components for specifying the invention. For example, the invention may be specified by step S11 and its details (for example, details regarding information about AI/ML models). In other words, steps S12 to S15 may be optional. Hereinafter, the communication processing according to this sequence example will be described with reference to FIG. 12A.

The transmitting device transmits information regarding AI/ML models (information regarding AI/ML models described above or below) to the receiving device (control target) (step S11). At this time, the transmitting device may transmit data of trained AI/ML models (learned AI/ML models) as information regarding AI/ML models, may transmit activation notifications of AI/ML models, or may transmit feedback information (information for model monitoring). In addition, the transmitting device may transmit information regarding the above-mentioned LCM as information regarding AI/ML models.

The receiving device receives information regarding AI/ML models (information regarding AI/ML models described above or below). Then, the receiving device executes processing based on the information regarding AI/ML models (step S12). For example, if data of trained AI/ML models is received as information regarding AI/ML models, the receiving device sets the received AI/ML model (or an AI/ML model generated based on the received AI/ML model data) as the AI/ML model for reception processing. Also, if an activation notification of AI/ML models is received as information regarding AI/ML models, the receiving device executes activation of the AI/ML model related to the notification. If feedback information is received as information regarding AI/ML models, the receiving device executes model monitoring based on the received

### feedback information.

The transmitting device generates transmission data by executing transmission signal processing (step S13). Here, the transmitting device may generate transmission data by executing transmission signal processing using AI/ML models (first transmission processing). Note that the transmitting device may execute transmission signal processing using AI/ML models in use cases that require a two-sided model. Alternatively, the transmitting device may execute transmission signal processing using AI/ML models when the transmitting device uses AI/ML models in one-sided model use cases.

The transmitting device transmits the generated transmission data to the receiving device (step S14).

The receiving device decodes received data by executing reception signal processing (first reception processing) (step S15). Here, the receiving device may decode received data by executing reception signal processing using activated AI/ML models. Note that the receiving device may execute reception signal processing using AI/ML models in use cases that require a two-sided model. Alternatively, the receiving device may execute reception signal processing using AI/ML models when the receiving device uses AI/ML models in one-sided model use cases.

### <5-1-2. Specific Sequence Example>

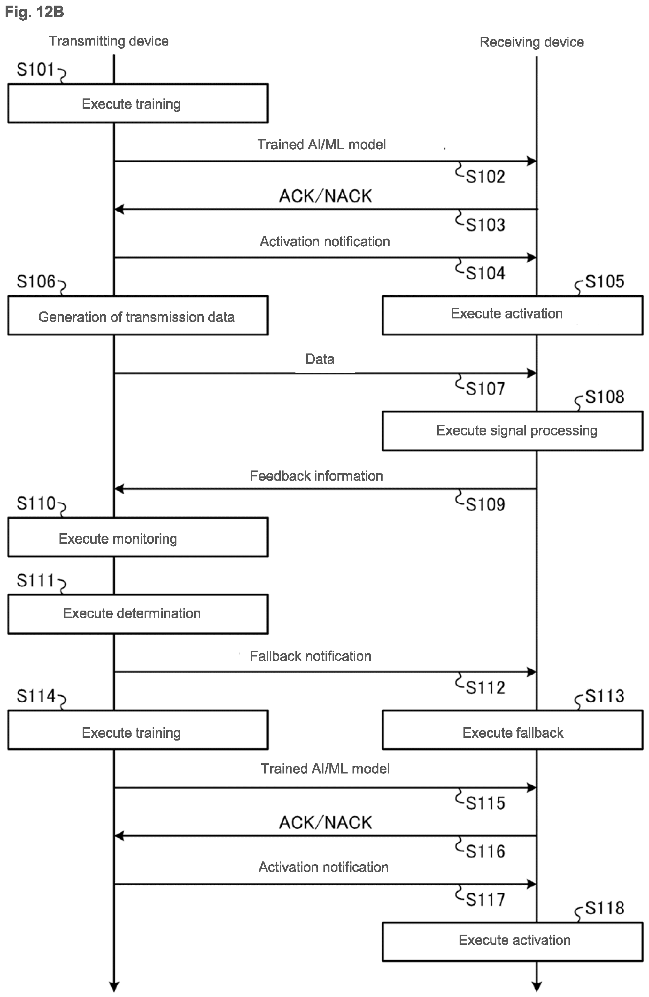

Next, a specific sequence example will be described. FIG. 12B is a diagram showing a specific sequence example of communication processing when the transmitting device is the LCM control entity. Hereinafter, the communication processing according to this sequence example will be described with reference to FIG. 12B.

The transmitting device executes training of AI/ML models (step S101). Thereby, the transmitting device acquires trained AI/ML models (learned AI/ML models).

The transmitting device transfers the trained AI/ML models to the receiving device (step S102). The transmitting device may notify the AI/ML models as semi-static information such as RRC signaling.

The receiving device notifies the transmitting device of the reception success/failure (ACK/NACK) of the received AI/ML models (step S103).

The transmitting device performs activation notification of AI/ML models to the receiving device (step S104). Here, the transmitting device may notify, for example, the ID of the AI/ML model to be activated (model ID) and/or the ID of the functionality to be activated (functionality ID). The transmitting device may notify the model ID and/or functionality ID as semi-static information such as RRC signaling, or may notify as dynamic information such as MAC CE, DCI, UCI, or SCI.

The receiving device executes activation of the AI/ML model based on the activation notification (step S105).

The transmitting device generates transmission data by executing transmission signal processing (step S106). Here, the transmitting device may generate transmission data by executing transmission signal processing using AI/ML models. Note that the transmitting device may execute transmission signal processing using AI/ML models in use cases that require a two-sided model. Alternatively, the transmitting device may execute transmission signal processing using AI/ML models when the transmitting device uses AI/ML models in one-sided model use cases.

The transmitting device transmits the generated transmission data to the receiving device (step S107).

The receiving device decodes received data by executing reception signal processing (step S108). Here, the receiving device may decode received data by executing reception signal processing using activated AI/ML models. Note that the receiving device may execute reception signal processing using AI/ML models in use cases that require a two-sided model. Alternatively, the receiving device may execute reception signal processing using AI/ML models when the receiving device uses AI/ML models in one-sided model use cases.

The receiving device may feedback information for model monitoring to the transmitting device (step S109). For example, the receiving device may feedback the decoded received data to the transmitting device.

The transmitting device executes model monitoring based on the received feedback information (step S110). Then, the transmitting device determines whether the characteristics of the AI/ML model satisfy the requirements based on the model monitoring results (step S111). For example, the transmitting device may determine whether the characteristics of the AI/ML model satisfy the requirements based on requirement information set in the notified functionality.

Here, assume that the transmitting device determines that the characteristics of the AI/ML model do not satisfy the requirements. In this case, the transmitting device notifies the receiving device of fallback to conventional signal processing (step S112).

When the receiving device receives the fallback notification, it stops signal processing using AI/ML models. Then, the receiving device falls back the reception signal processing to conventional signal processing that does not use AI/ML models (step S113).

The transmitting device executes training of AI/ML models (step S114). Then, the transmitting device transfers the trained AI/ML models to the receiving device (step S115).

The receiving device notifies the transmitting device of the reception success/failure (ACK/NACK) of the received AI/ML models (step S116).

The transmitting device performs activation notification of AI/ML models to the receiving device (step S117). Here, the transmitting device may notify, for example, the ID of the AI/ML model to be activated and/or the ID of the functionality to be activated.

The receiving device activates the AI/ML model based on the activation notification (step S118).

### <5-2. Case where Receiving Device is LCM Control Entity>

Next, a sequence example when the receiving device is the LCM control entity and the transmitting device is the control target will be described. In this sequence example, the operation of the transmitting device and receiving device in a two-sided model will be described. A two-sided model is a case where AI/ML models are used in both the transmitting device and the receiving device.

### <5-2-1. Basic Sequence Example>

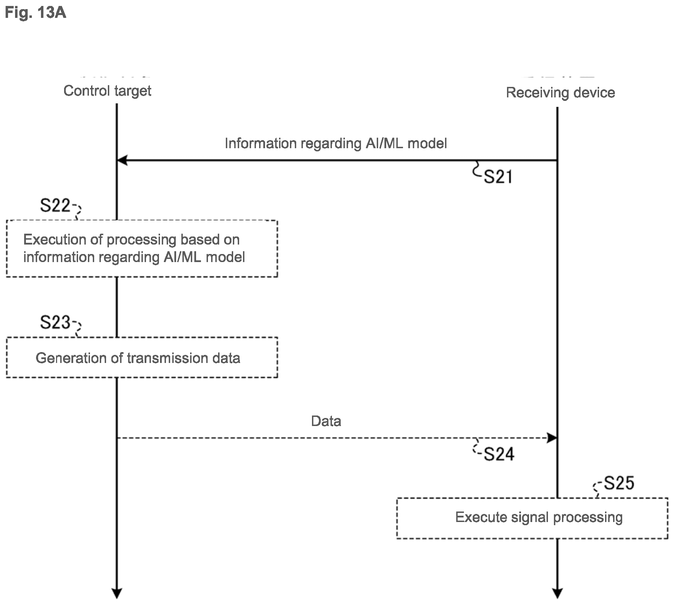

First, a basic sequence example will be described. FIG. 13A is a diagram showing a basic sequence example of communication processing when the receiving device is the LCM control entity. Note that in the following, for convenience of explanation, details of each step from step S21 to S25 are described, but not all steps are essential components for specifying the invention. For example, the invention may be specified by step S21 and its details (for example, details regarding information about AI/ML models). In other words, steps S22 to S25 may be optional. Hereinafter, the communication processing according to this sequence example will be described with reference to FIG. 13A.

The receiving device transmits information regarding AI/ML models (information regarding AI/ML models described above or below) to the transmitting device (control target) (step S21). At this time, the receiving device may transmit data of trained AI/ML models (learned AI/ML models) as information regarding AI/ML models, may transmit activation notifications of AI/ML models, or may transmit feedback information (information for model monitoring). In addition, the receiving device may transmit information regarding the above-mentioned LCM as information regarding AI/ML models.

The transmitting device receives information regarding AI/ML models (information regarding AI/ML models described above or below). Then, the transmitting device executes processing based on the information regarding AI/ML models (step S22). For example, if data of trained AI/ML models is received as information regarding AI/ML models, the transmitting device sets the received AI/ML model (or an AI/ML model generated based on the received AI/ML model data) as the AI/ML model for transmission processing. Also, if an activation notification of AI/ML models is received as information regarding AI/ML models, the transmitting device executes activation of the AI/ML model related to the notification. If feedback information is received as information regarding AI/ML models, the transmitting device executes model monitoring based on the received feedback information.

The transmitting device generates transmission data by executing transmission signal processing (step S23). Here, the transmitting device may generate transmission data by executing transmission signal processing using AI/ML models (second transmission processing). Note that the transmitting device may execute transmission signal processing using AI/ML models in use cases that require a two-sided model. Alternatively, the transmitting device may execute transmission signal processing using AI/ML models when the transmitting device uses AI/ML models in one-sided model use cases.

The transmitting device transmits the generated transmission data to the receiving device (step S24).

The receiving device decodes received data by executing reception signal processing (step S25). Here, the receiving device may decode received data by executing reception signal processing (second reception processing) using activated AI/ML models. Note that the receiving device may execute reception signal processing using AI/ML models in use cases that require a two-sided model. Alternatively, the receiving device may execute reception signal processing using AI/ML models when the receiving device uses AI/ML models in one-sided model use cases.

### <5-2-2. Specific Sequence Example>

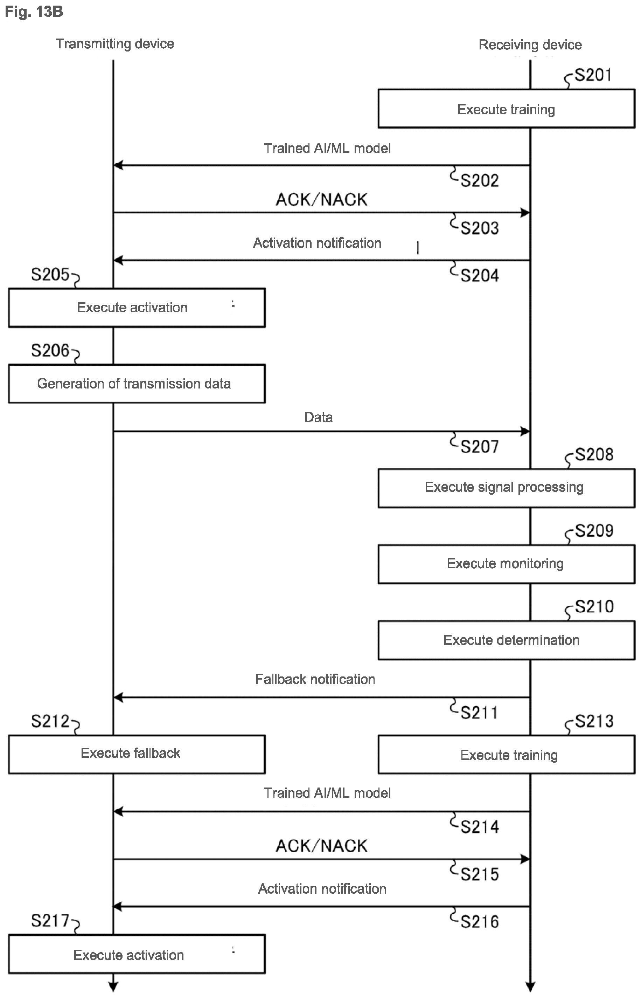

Next, a specific sequence example will be described. FIG. 13B is a diagram showing a specific sequence example of communication processing when the receiving device is the LCM control entity. Hereinafter, the communication processing according to this sequence example will be described with reference to FIG. 13B.

The receiving device executes training of AI/ML models (step S201). Thereby, the receiving device acquires trained AI/ML models (learned AI/ML models).

The receiving device transfers the trained AI/ML models to the transmitting device (step S202). The receiving device may notify the AI/ML models as semi-static information such as RRC signaling.

The transmitting device notifies the receiving device of the reception success/failure (ACK/NACK) of the received AI/ML models (step S203).

The receiving device performs activation notification of AI/ML models to the transmitting device (step S204). Here, the receiving device may notify, for example, the ID of the AI/ML model to be activated (model ID) and/or the ID of the functionality to be activated (functionality ID). The receiving device may notify the model ID and/or functionality ID as semi-static information such as RRC signaling, or may notify as dynamic information such as MAC CE, DCI, UCI, or SCI.

The transmitting device executes activation of the AI/ML model based on the activation notification (step S205).

The transmitting device generates transmission data by executing transmission signal processing (step S206). Here, the transmitting device may generate transmission data by executing transmission signal processing using AI/ML models. Note that the transmitting device may execute transmission signal processing using AI/ML models in use cases that require a two-sided model. Alternatively, the transmitting device may execute transmission signal processing using AI/ML models when the transmitting device uses AI/ML models in one-sided model use cases.

The transmitting device transmits the generated transmission data to the receiving device (step S207).

The receiving device decodes received data by executing reception signal processing (step S208). Here, the receiving device may decode received data by executing reception signal processing using activated AI/ML models. Note that the receiving device may execute reception signal processing using AI/ML models in use cases that require a two-sided model. Alternatively, the receiving device may execute reception signal processing using AI/ML models when the receiving device uses AI/ML models in one-sided model use cases.

The receiving device executes model monitoring based on the decoded received data (step S209). Then, the transmitting device determines whether the characteristics of the AI/ML model satisfy the requirements based on the model monitoring results (step S210). For example, the transmitting device may determine whether the characteristics of the AI/ML model satisfy the requirements based on requirement information set in the notified functionality.

Here, assume that the receiving device determines that the characteristics of the AI/ML model do not satisfy the requirements. In this case, the receiving device notifies the receiving device of fallback to conventional signal processing (step S211).

When the receiving device receives the fallback notification, it stops signal processing using AI/ML models. Then, the transmitting device falls back the transmission signal processing to conventional signal processing that does not use AI/ML models (step S212).

The receiving device executes training of AI/ML models (step S213). Then, the receiving device transfers the trained AI/ML models to the transmitting device (step S214).

The transmitting device notifies the receiving device of the reception success/failure (ACK/NACK) of the received AI/ML models (step S215).

The receiving device performs activation notification of AI/ML models to the transmitting device (step S216). Here, the receiving device may notify, for example, the ID of the AI/ML model to be activated and/or the ID of the functionality to be activated.

The receiving device activates the AI/ML model based on the activation notification (step S217).

### <5-3. Other Sequence Examples>

In the above sequence examples, communication processing examples including multiple LCM controls were shown. However, even partial sequences from the above sequence examples can constitute communication processing of this embodiment. Hereinafter, other sequence examples of communication processing of this embodiment will be described.

### (N1) Model transfer

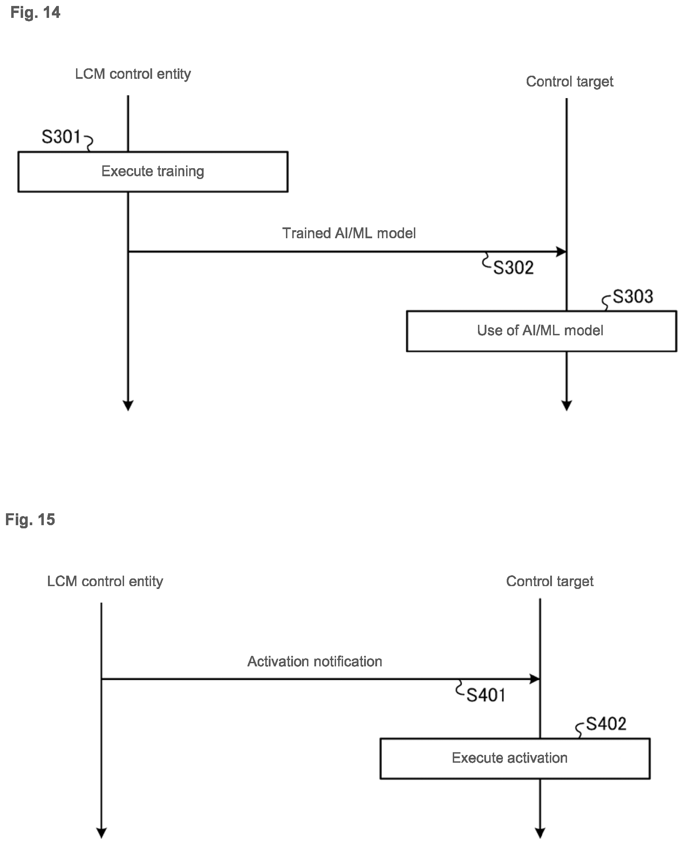

FIG. 14 is a diagram showing a sequence example of communication processing related to model transfer. The communication device that becomes the control entity of LCM executes training of AI/ML models (step S301). Then, the communication device that becomes the control entity of LCM transfers the trained AI/ML models to the communication device that becomes the control target (step S302). The communication device that becomes the control target executes reception signal processing using the received AI/ML models (step S303).

### (N2) Model activation

FIG. 15 is a diagram showing a sequence example of communication processing related to model activation. The communication device that becomes the control entity of LCM performs activation notification of AI/ML models to the communication device that becomes the control target (step S401). The communication device that becomes the control target executes activation of the AI/ML model based on the activation notification (step S402).

### (N3) Signal processing using AI/ML models

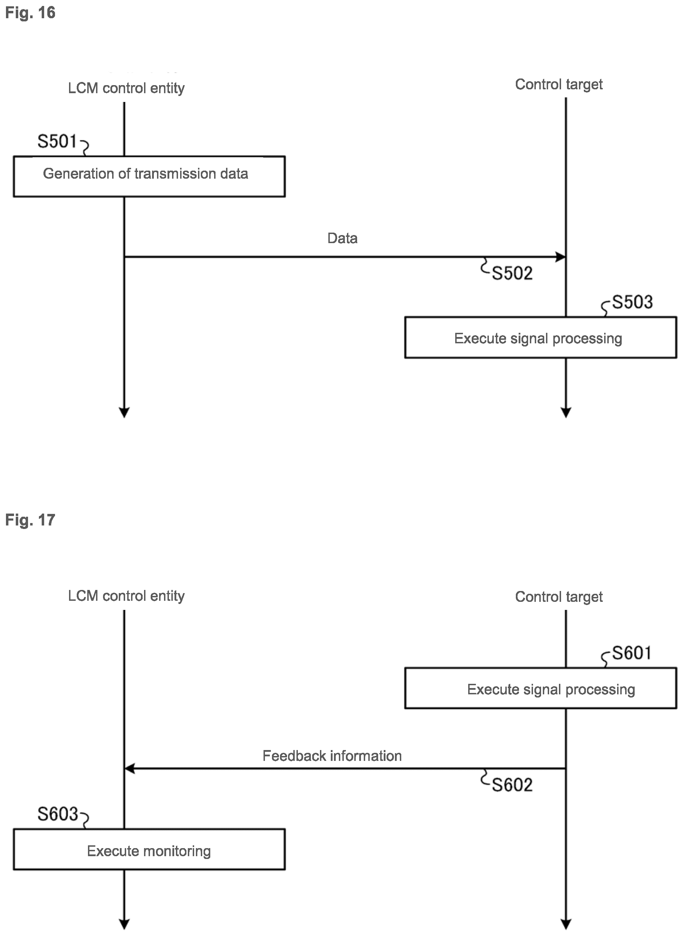

FIG. 16 is a diagram showing a sequence example of signal processing using AI/ML models. The communication device that becomes the control entity of LCM generates transmission data by executing transmission signal processing using AI/ML models (step S501). The communication device that becomes the control entity of LCM transmits the generated transmission data to the communication device that becomes the control target (step S502). The communication device that becomes the control target decodes received data by executing reception signal processing using AI/ML models (step S503).

### (N4) Model monitoring

FIG. 17 is a diagram showing a sequence example of communication processing related to model monitoring. The communication device that becomes the control target decodes received data by executing reception signal processing (step S601). The communication device that becomes the control target transmits the decoded received data as feedback information to the communication device that becomes the control entity of LCM (step S602). The communication device that becomes the control entity of LCM executes model monitoring based on the received feedback information (step S603).

### (N5) Model fallback

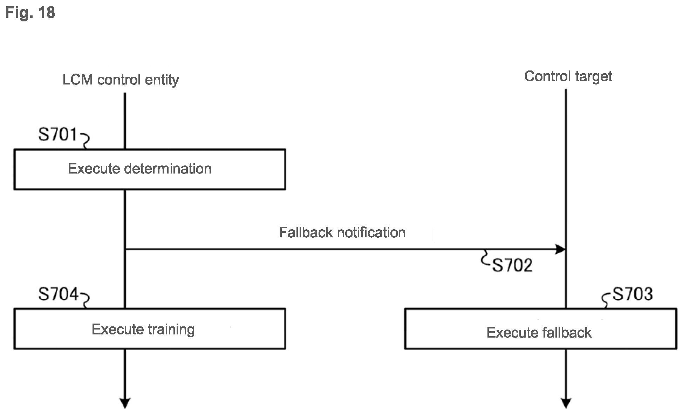

FIG. 18 is a diagram showing a sequence example of communication processing related to model fallback. The communication device that becomes the control entity of LCM determines whether the characteristics of the AI/ML model satisfy the requirements based on the model monitoring results (step S701). When the characteristics of the AI/ML model do not satisfy the requirements, the communication device that becomes the control entity of LCM notifies the communication device that becomes the control target of fallback to conventional signal processing (step S702). When receiving the fallback notification, the communication device that becomes the control target stops signal processing using AI/ML models and falls back the reception signal processing to conventional signal processing that does not use AI/ML models (step S703). The communication device that becomes the control target executes training of AI/ML models (step S704).

### <<6. Modifications>>

The above-described embodiment shows an example, and various modifications and applications are possible.

In the above-described embodiment, the technology of the present disclosure was explained using wireless communication between base station 20 and terminal device 40, or wireless communication between terminal device 40 and another terminal device 40 as examples. However, the scope of application of this embodiment is not limited to this. For example, the technology of the present disclosure is also applicable to wireless communication between multiple communication devices selected from management device 10, base station 20, relay station 30, and terminal device 40. Also, the technology of the present disclosure is also applicable to wireless communication between management devices 10, between base stations 20, between relay stations 30, or between terminal devices 40. Also, the technology of the present disclosure is also applicable to processing performed independently by management device 10, base station 20, relay station 30, and terminal device 40 using AI/ML models.

Note that the functions of each block (acquisition unit 231 to transmission unit 234) of control unit 23 of base station 20 may be the same as the functions of each block (acquisition unit 431 to transmission unit 434) of control unit 43 of terminal device 40, respectively. Also, the functions of each block (acquisition unit 331 to transmission unit 334) of control unit 33 of relay station 30 may be the same as the functions of each block of control unit 23 of base station 20, respectively, or may be the same as each block of control unit 23 of terminal device 40. Also, the functions of each block of control unit 43 of terminal device 40 may be the same as the functions of each block of control unit 23 of base station 20, respectively. Also, the functions of control unit 13 of management device 10 may be the same as the functions of control unit 23 of base station 20, respectively, or may be the same as the functions of control unit 33 of relay station 30, or may be the same as the functions of control unit 43 of terminal device 40.

The control device that controls management device 10, base station 20, relay station 30, or terminal device 40 of this embodiment may be realized by a dedicated computer system or may be realized by a general-purpose computer system.

For example, a communication program for executing the above-described operations is stored and distributed on a computer-readable recording medium such as an optical disk, semiconductor memory, magnetic tape, or flexible disk. Then, for example, the control device is configured by installing the program on a computer and executing the above-described processing. At this time, the control device may be a device external to management device 10, base station 20, relay station 30, or terminal device 40 (for example, a personal computer). Also, the control device may be a device internal to management device 10, base station 20, relay station 30, or terminal device 40 (for example, control unit 13, control unit 23, control unit 33, or control unit 43).

Also, the communication program may be stored in a disk device of a server on a network such as the Internet so that it can be downloaded to a computer. Also, the above-described functions may be realized by cooperation between an OS (Operating System) and application software. In this case, parts other than the OS may be stored on a medium and distributed, or parts other than the OS may be stored on a server so that they can be downloaded to a computer.

Also, among the processes described in the above embodiment, all or part of the processes described as being performed automatically can also be performed manually, or all or part of the processes described as being performed manually can also be performed automatically by known methods. In addition, the processing procedures, specific names, and information including various data and parameters shown in the above document and drawings can be arbitrarily changed unless otherwise specified. For example, the various information shown in each figure is not limited to the illustrated information.

Also, each component of each illustrated device is functionally conceptual and does not necessarily need to be physically configured as illustrated. That is, the specific form of distribution and integration of each device is not limited to that illustrated, and all or part of it can be functionally or physically distributed or integrated in arbitrary units according to various loads, usage conditions, etc. Note that this configuration by distribution or integration may be performed dynamically.

Also, the above-described embodiments can be appropriately combined in areas where the processing content does not conflict. Also, the order of each step shown in the flowcharts and sequence diagrams of the above-described embodiments can be changed as appropriate.

Also, for example, this embodiment can be implemented as any configuration constituting a device or system, for example, as a processor such as a system LSI (Large Scale Integration), a module using multiple processors, a unit using multiple modules, a set in which other functions are further added to the unit (that is, a partial configuration of the device).

System LSI may be called SOC (System on Chip). In other words, each of the above-mentioned or below-mentioned devices (for example, management device 10, base station 20, relay station 30, and terminal device 40) may be interpreted as a processor (for example, CPU) as a system LSI (for example, SoC), or a module using or constituting the processor. Furthermore, or alternatively, this embodiment may be implemented by any configuration constituting a device or system, for example, a modem chip (baseband chip) or RF (Radio Frequency) unit or a combination thereof. The RF unit includes at least one of RF circuit or RF Front-end. In other words, each of the above-mentioned or below-mentioned devices may be interpreted as a modem chip (baseband chip) or RF unit or a combination thereof. Furthermore or alternatively, each of the above-mentioned or below-mentioned devices may be interpreted as a module using or constituting a modem chip or RF unit.

The modem chip performs signal processing related to communication within the device (including the above-mentioned or below-mentioned devices). The modem chip may have at least the function of Modulator or Demodulator. The RF unit may have at least one function among RF transceiver (RF Upconverter, RF Downconverter), power amplifier (Power amplifier), and low noise amplifier (Low noise amplifier). The RF transceiver converts between baseband signals and RF frequency. The power amplifier performs amplification for transmitting signals from the antenna. The low noise amplifier amplifies weak signals received from the antenna. Furthermore or alternatively, the RF unit (particularly, RF Front-end) may include at least one of the above-mentioned power amplifier, low noise amplifier, envelope tracker (Envelope tracker), filter, duplexer, multiplexer, antenna switch, and antenna tuner.

The combination of modem chip and RF unit may be called a modem-RF system. At least part of the modem chip or RF unit or their combination may be included in a system LSI (for example, SoC). For example, at least part of MAC layer processing/PHY layer processing handled by at least part of the modem chip or RF unit or their combination may be realized by the system LSI. Here, the MAC layer processing or PHY layer processing may be at least part of the processing executed by the devices (for example, management device 10, base station 20, relay station 30, and terminal device 40) in the above-mentioned or below-mentioned embodiments.

Note that in this embodiment, a system means a collection of multiple components (devices, modules (parts), etc.), and it does not matter whether all components are in the same housing. Therefore, multiple devices housed in separate housings and connected via a network, and one device in which multiple modules are housed in one housing, are both systems.

Also, for example, this embodiment can take a cloud computing configuration in which one function is shared and jointly processed by multiple devices via a network.

### <<7. Conclusion>>

As described above, the first communication device (for example, base station 20 or terminal device 40) of this embodiment is configured to be capable of wireless communication with a second communication device (for example, base station 20 or terminal device 40). Also, at least one of the first communication device and the second communication device can execute processing related to wireless communication using AI/ML models.

The first communication device transmits information regarding AI/ML models to the second communication device in implementing LCM (AI/ML model management). Alternatively, the first communication device transmits information regarding AI/ML models to the second communication device that implements LCM.

For example, the first communication device transmits information regarding AI/ML models applied to at least one of (P1) first transmission processing of the communication device regarding wireless signals transmitted from the first communication device to the second communication device, (P2) first reception processing of the other communication device regarding wireless signals transmitted from the first communication device to the other communication device, (P3) second transmission processing of the other communication device regarding wireless signals transmitted from the other communication device to the first communication device, and (P4) second reception processing of the first communication device regarding wireless signals transmitted from the other communication device to the first communication device, to the second communication device.

The second communication device uses or manages AI/ML models based on the information regarding AI/ML models received from the first communication device. For example, assume that the first communication device is the control entity of LCM and the second communication device is the control target of LCM. In this case, the second communication device may execute processing related to signal processing (first reception processing or second transmission processing) of the second communication device based on the information regarding AI/ML models. Also, assume that the second communication device is the control entity of LCM and the first communication device is the control target of LCM. In this case, the second communication device may execute LCM related to signal processing (first transmission processing or second reception processing) of the first communication device based on the information regarding AI/ML models.

This enables efficient use or management of AI/ML models, so the first communication device and/or the second communication device can achieve high communication performance.

While each embodiment of the present disclosure has been described above, the technical scope of the present disclosure is not limited to the above-described embodiments as they are, and various modifications are possible within the scope that does not depart from the gist of the present disclosure. Also, components across different embodiments and modifications may be appropriately combined.

Also, the effects in each embodiment described in this specification are merely illustrative and not limiting, and other effects may exist.

Note that the present technology can also take the following configurations.
(1) A communication device that performs wireless communication with another communication device, comprising:
   a processor that controls a wireless transceiver for performing the wireless communication,
   wherein the processor controls the wireless transceiver to transmit, to the other communication device, information regarding an AI/ML model applied to at least one process among:
      a first transmission process of the communication device regarding wireless signals transmitted from the communication device to the other communication device,
      a first reception process of the other communication device regarding wireless signals transmitted from the communication device to the other communication device,
      a second transmission process of the other communication device regarding wireless signals transmitted from the other communication device to the communication device, or
      a second reception process of the communication device regarding wireless signals transmitted from the other communication device to the communication device.
(2) The communication device according to (1),
   wherein the processor is configured to determine a control entity of management of the AI/ML model based on setting information pre-stored by the communication device or control information received from the other communication device, and the determined control entity is one or both of the communication device and the other communication device.
(3) The communication device according to (2),
   wherein the management of the AI/ML model includes at least two of:
   data collection,
   model training,
   functionality identification,
   model identification,
   model delivery,
   model testing,
   model activation,
   functionality activation,
   model deactivation,
   functionality deactivation,
   model switching,
   functionality switching,
   model fallback,
   model monitoring,
   model update,
   model deployment,
   model configuration,
   model selection, or
   terminal capability,
   and when the processor determines both the communication device and the other communication device as the control entity, the processor determines the control entity for each of the at least two AI/ML model managements.
(4) The communication device according to any one of (1) to (3), wherein the information regarding the AI/ML model includes at least one of:
   data of the AI/ML model applied to at least one of the first reception process or the second transmission process,
   information instructing activation of the AI/ML model applied to at least one of the first reception process or the second transmission process,
   information instructing deactivation of the AI/ML model applied to at least one of the first reception process or the second transmission process,
   information instructing switching of the AI/ML model applied to at least one of the first reception process or the second transmission process, or
   information for causing at least one of the first reception process to which the AI/ML model is applied or the second transmission process to which the AI/ML model is applied to fall back to processing that does not use the AI/ML model.
(5) The communication device according to (4),
   wherein the information instructing activation of the AI/ML model includes at least one of:
   information for the other communication device to specify timing of the activation, or
   information for the other communication device to specify a period during which the activation is valid.
(6) The communication device according to (4) or (5),
   wherein the information instructing deactivation of the AI/ML model includes information for the other communication device to specify timing of the deactivation.
(7) The communication device according to any one of (4) to (6),
   wherein the information instructing switching of the AI/ML model includes information indicating timing for performing switching of the AI/ML model, and the information indicating timing for performing switching of the AI/ML model indicates a period from receiving the information indicating timing for performing switching of the AI/ML model to the timing for performing switching of the AI/ML model.
(8) The communication device according to any one of (4) to (7),
   wherein the information for causing fallback includes information indicating timing of AI/ML model fallback for the other communication device, and the information indicating timing of the fallback indicates a period from receiving the information indicating timing of the fallback to the timing for performing the fallback.
(9) The communication device according to (8),
   wherein the other communication device has multiple functionalities related to at least one of the first reception process and the second transmission process, and the information for causing fallback is information for causing processing of some functionalities among the multiple functionalities to fall back from processing using the AI/ML model to processing not using the AI/ML model.
(10) The communication device according to any one of (1) to (8), wherein the information regarding the AI/ML model includes at least one of:
   ModelIDConfig which is setting information regarding an identifier of the AI/ML model, or
   FunctionalityConfig which is setting information regarding functionality to which the AI/ML model is applied,
   wherein the ModelIDConfig includes at least one of:
      ModelId indicating an identifier of the AI/ML model,
      numberOfInputNode indicating the number of input nodes in an AI/ML model network structure constituting the AI/ML model,
      numberOfOutputNode indicating the number of output nodes in the AI/ML model network structure constituting the AI/ML model,
      numberOfLayer indicating the number of layers in the AI/ML model network structure constituting the AI/ML model, or
      informationOfWeight indicating weights assigned between each node in the AI/ML model network structure constituting the AI/ML model,
      and the FunctionalityConfig includes at least one of:
         functionalityId indicating an identifier of the functionality,
         feature indicating a feature that contains the functionality,
         requirementList indicating requirement values required for the functionality, or
         capableModelList indicating information about AI/ML models applicable in the functionality.
(11) The communication device according to (8) or (9),
   wherein the processor controls the wireless transceiver to transmit the information for causing fallback in at least one case of:
   when communication quality deteriorates,
   when performance of the AI/ML model no longer meets predetermined requirements, or
   when a validity period of the AI/ML model has expired.
(12) The communication device according to any one of (1) to (11),
   wherein the processor controls the wireless transceiver to transmit, to the other communication device, information indicating which functionality the communication device corresponds to among multiple functionalities related to at least one of the first transmission process and the second reception process.
(13) The communication device according to any one of (1) to (12),
   wherein the AI/ML model is linked to functionality related to at least one of the first transmission process and the second reception process, and the processor controls the wireless transceiver to transmit, as the information regarding the AI/ML model, information indicating which functionality among multiple functionalities has completed AI/ML model training to the other communication device.
(14) The communication device according to any one of (1) to (13),
   wherein the processor controls the wireless transceiver to transmit, to the other communication device, information indicating which AI/ML model the communication device corresponds to among multiple AI/ML models related to at least one of the first transmission process and the second reception process.
(15) The communication device according to any one of (1) to (14),
   wherein identification information is linked to the AI/ML model, and the processor transmits, as the information regarding the AI/ML model, information indicating which AI/ML model among multiple AI/ML models has completed training to the other communication device.
(16) The communication device according to any one of (1) to (15),
   wherein the processor controls the wireless transceiver to transmit the information regarding the AI/ML model to multiple of the other communication devices.
(17) The communication device according to any one of (1) to (16),
   wherein the processor controls the wireless transceiver to transmit the information regarding the AI/ML model to the other communication device at timing when a predetermined event occurs or at timing when a predetermined time is reached.
(18) The communication device according to any one of (1) to (17),
   wherein the communication device is one of a base station and a terminal device, and the other communication device is the other of the base station and the terminal device.
(19) The communication device according to any one of (1) to (17),
   wherein the communication device is a terminal device, and the other communication device is another terminal device.
(20) A communication method in which a communication device that performs wireless communication with another communication device transmits, to the other communication device, information regarding an AI/ML model applied to at least one process among:
   a first transmission process of the communication device regarding wireless signals transmitted from the communication device to the other communication device,
   a first reception process of the other communication device regarding wireless signals transmitted from the communication device to the other communication device,
   a second transmission process of the other communication device regarding wireless signals transmitted from the other communication device to the communication device, or
   a second reception process of the communication device regarding wireless signals transmitted from the other communication device to the communication device.

Also, the present technology can also take the following configurations.
(X1) A communication device that performs wireless communication with another communication device,
   wherein the communication device transmits, to the other communication device, information regarding an AI/ML model applied to at least one process among:
   a first transmission process of the communication device regarding wireless signals transmitted from the communication device to the other communication device,
   a first reception process of the other communication device regarding wireless signals transmitted from the communication device to the other communication device,
   a second transmission process of the other communication device regarding wireless signals transmitted from the other communication device to the communication device, or
   a second reception process of the communication device regarding wireless signals transmitted from the other communication device to the communication device.
(X2) The communication device according to (X1), comprising a determination unit that determines a control entity of management of the AI/ML model,
   wherein the determination unit determines one or both of the communication device and the other communication device as the control entity based on setting information pre-stored by the communication device or control information received from the other communication device.
(X3) The communication device according to (X2),
   wherein the management of the AI/ML model includes multiple managements, and when the determination unit determines both the communication device and the other communication device as the control entity, the determination unit determines the control entity for each of the multiple managements.
(X4) The communication device according to any one of (X1) to (X3),
   wherein the transmission unit transmits, as the information regarding the AI/ML model, data of the AI/ML model used in at least one of the first reception process and the second transmission process.
(X5) The communication device according to any one of (X1) to (X4),
   wherein the transmission unit transmits, as the information regarding the AI/ML model, information instructing activation of the AI/ML model used in at least one of the first reception process and the second transmission process.
(X6) The communication device according to any one of (X1) to (X5),
   wherein the transmission unit transmits, to the other communication device, information instructing deactivation of the AI/ML model used in at least one of the first reception process and the second transmission process.
(X7) The information instructing deactivation includes timer information for the other communication device to specify timing of the deactivation,
   The communication device according to (X6).
(X8) The transmission unit transmits, as the information regarding the AI/ML model, information for causing at least one of the first reception process and the second transmission process to fall back from processing using the AI/ML model to processing not using the AI/ML model,
   The communication device according to any one of (X1) to (X7).
(X9) The other communication device has multiple functionalities related to at least one of the first reception process and the second transmission process,
   The information for causing fallback is information for causing processing of some functionalities among the multiple functionalities to fall back from processing using the AI/ML model to processing not using the AI/ML model,
   The communication device according to (X8).
(X10) The information for causing fallback includes timer information for the other communication device to specify timing of the fallback,
   The communication device according to (X8) or (X9).
(X11) The transmission unit transmits the information for causing fallback in at least one case of when communication quality deteriorates, when performance of the AI/ML model no longer meets predetermined requirements, and when a validity period of the AI/ML model has expired,
   The communication device according to any one of (X8) to (X10).
(X12) The transmission unit transmits, to the other communication device, information indicating which functionality the communication device corresponds to among multiple functionalities related to at least one of the first transmission process and the second reception process,
   The communication device according to any one of (X1) to (X11).
(X13) The AI/ML model is linked to functionality related to at least one of the first transmission process and the second reception process,
   The transmission unit transmits, as the information regarding the AI/ML model, information indicating which functionality among multiple functionalities has completed AI/ML model training to the other communication device,
   The communication device according to any one of (X1) to (X12).
(X14) The transmission unit transmits, to the other communication device, information indicating which AI/ML model the communication device corresponds to among multiple AI/ML models related to at least one of the first transmission process and the second reception process,
   The communication device according to any one of (X1) to (X13).
(X15) Identification information is linked to the AI/ML model,
   The transmission unit transmits, as the information regarding the AI/ML model, information indicating which AI/ML model among multiple AI/ML models has completed training to the other communication device,
   The communication device according to any one of (X1) to (X14).
(X16) The transmission unit transmits the information regarding the AI/ML model to multiple of the other communication devices,
   The communication device according to any one of (X1) to (X15).
(X17) The transmission unit transmits the information regarding the AI/ML model to the other communication device at timing when a predetermined event occurs or at timing when a predetermined time is reached,
   The communication device according to any one of (X1) to (X16).
(X18) The communication device is one of a base station and a terminal device,
   The other communication device is the other of the base station and the terminal device,
   The communication device according to any one of (X1) to (X17).
(X19) The communication device is a terminal device,
   The other communication device is another terminal device,
   The communication device according to any one of (X1) to (X17).
(X20) A communication method in which a communication device that performs wireless communication with another communication device transmits, to the other communication device, information regarding an AI/ML model applied to at least one process among:
   a first transmission process of the communication device regarding wireless signals transmitted from the communication device to the other communication device,
   a first reception process of the other communication device regarding wireless signals transmitted from the communication device to the other communication device,
   a second transmission process of the other communication device regarding wireless signals transmitted from the other communication device to the communication device, or
   a second reception process of the communication device regarding wireless signals transmitted from the other communication device to the communication device,
   Communication method.

### [Reference Signs List]

1 Communication system
10 Management device
20 Base station
30 Relay station
40 Terminal device
11 Communication unit
21, 31, 41 Wireless communication unit
12, 22, 32, 42 Storage unit
13, 23, 33, 43 Control unit
211, 311, 411 Transmission processing unit
212, 312, 412 Reception processing unit
213, 313, 413 Antenna
231, 331, 431 Acquisition unit
232, 332, 432 Management unit
233, 333, 433 Determination unit
234, 334, 434 Transmission unit
520 User plane function group
540 Control plane function group
551 MTLF
552, 553 MEC server
554 LCM-related network function
RAN Radio access network
CN Core network

## Claims

1. A communication device that performs wireless communication with another communication device, comprising:
a processor that controls a wireless transceiver for performing the wireless communication,
wherein the processor controls the wireless transceiver to transmit, to the other communication device, information regarding an AI/ML model applied to at least one process among:
a first transmission process of the communication device regarding wireless signals transmitted from the communication device to the other communication device,
a first reception process of the other communication device regarding wireless signals transmitted from the communication device to the other communication device,
a second transmission process of the other communication device regarding wireless signals transmitted from the other communication device to the communication device, or
a second reception process of the communication device regarding wireless signals transmitted from the other communication device to the communication device.

2. The communication device according to claim 1,
wherein the processor is configured to determine a control entity of management of the AI/ML model based on setting information pre-stored by the communication device or control information received from the other communication device, and
the determined control entity is one or both of the communication device and the other communication device.

3. The communication device according to claim 2,
wherein the management of the AI/ML model includes at least two of:
data collection,
model training,
functionality identification,
model identification,
model delivery,
model testing,
model activation,
functionality activation,
model deactivation,
functionality deactivation,
model switching,
functionality switching,
model fallback,
model monitoring,
model update,
model deployment,
model configuration,
model selection, or
terminal capability,
and when the processor determines both the communication device and the other communication device as the control entity, the processor determines the control entity for each of the at least two AI/ML model managements.

4. The communication device according to claim 1,
wherein the information regarding the AI/ML model includes at least one of:
data of the AI/ML model applied to at least one of the first reception process or the second transmission process,
information instructing activation of the AI/ML model applied to at least one of the first reception process or the second transmission process,
information instructing deactivation of the AI/ML model applied to at least one of the first reception process or the second transmission process,
information instructing switching of the AI/ML model applied to at least one of the first reception process or the second transmission process, or
information for causing at least one of the first reception process to which the AI/ML model is applied or the second transmission process to which the AI/ML model is applied to fall back to processing that does not use the AI/ML model.

5. The communication device according to claim 4,
wherein the information instructing activation of the AI/ML model includes at least one of:
information for the other communication device to specify timing of the activation, or
information for the other communication device to specify a period during which the activation is valid.

6. The communication device according to claim 4,
wherein the information instructing deactivation of the AI/ML model includes information for the other communication device to specify timing of the deactivation.

7. The communication device according to claim 4,
wherein the information instructing switching of the AI/ML model includes information indicating timing for performing switching of the AI/ML model, and the information indicating timing for performing switching of the AI/ML model indicates a period from receiving the information indicating timing for performing switching of the AI/ML model to the timing for performing switching of the AI/ML model.

8. The communication device according to claim 4,
wherein the information for causing fallback includes information indicating timing of AI/ML model fallback for the other communication device, and the information indicating timing of the fallback indicates a period from receiving the information indicating timing of the fallback to the timing for performing the fallback.

9. The communication device according to claim 8,
wherein the other communication device has multiple functionalities related to at least one of the first reception process and the second transmission process, and the information for causing fallback is information for causing processing of some functionalities among the multiple functionalities to fall back from processing using the AI/ML model to processing not using the AI/ML model.

10. The communication device according to claim 8,
wherein the information regarding the AI/ML model includes at least one of:
ModelIDConfig which is setting information regarding an identifier of the AI/ML model, or
FunctionalityConfig which is setting information regarding functionality to which the AI/ML model is applied,
wherein the ModelIDConfig includes at least one of:
ModelId indicating an identifier of the AI/ML model,
numberOfInputNode indicating the number of input nodes in an AI/ML model network structure constituting the AI/ML model,
numberOfOutputNode indicating the number of output nodes in the AI/ML model network structure constituting the AI/ML model,
numberOfLayer indicating the number of layers in the AI/ML model network structure constituting the AI/ML model, or
informationOfWeight indicating weights assigned between each node in the AI/ML model network structure constituting the AI/ML model,
and the FunctionalityConfig includes at least one of:
functionalityId indicating an identifier of the functionality,
feature indicating a feature that contains the functionality,
requirementList indicating requirement values required for the functionality, or
capableModelList indicating information about AI/ML models applicable in the functionality.

11. The communication device according to claim 8,
wherein the processor controls the wireless transceiver to transmit the information for causing fallback in at least one case of:
when communication quality deteriorates,
when performance of the AI/ML model no longer meets predetermined requirements, or
when a validity period of the AI/ML model has expired.

12. The communication device according to claim 1,
wherein the processor controls the wireless transceiver to transmit, to the other communication device, information indicating which functionality the communication device corresponds to among multiple functionalities related to at least one of the first transmission process and the second reception process.

13. The communication device according to claim 1,
wherein the AI/ML model is linked to functionality related to at least one of the first transmission process and the second reception process, and the processor controls the wireless transceiver to transmit, as the information regarding the AI/ML model, information indicating which functionality among multiple functionalities has completed AI/ML model training to the other communication device.

14. The communication device according to claim 1,
wherein the processor controls the wireless transceiver to transmit, to the other communication device, information indicating which AI/ML model the communication device corresponds to among multiple AI/ML models related to at least one of the first transmission process and the second reception process.

15. The communication device according to claim 1,
wherein identification information is linked to the AI/ML model, and the processor transmits, as the information regarding the AI/ML model, information indicating which AI/ML model among multiple AI/ML models has completed training to the other communication device.

16. The communication device according to claim 1,
wherein the processor controls the wireless transceiver to transmit the information regarding the AI/ML model to multiple of the other communication devices.

17. The communication device according to claim 1,
wherein the processor controls the wireless transceiver to transmit the information regarding the AI/ML model to the other communication device at timing when a predetermined event occurs or at timing when a predetermined time is reached.

18. The communication device according to claim 1,
wherein the communication device is one of a base station and a terminal device, and the other communication device is the other of the base station and the terminal device.

19. The communication device according to claim 1,
wherein the communication device is a terminal device, and the other communication device is another terminal device.

20. A communication method in which a communication device that performs wireless communication with another communication device transmits, to the other communication device, information regarding an AI/ML model applied to at least one process among:
a first transmission process of the communication device regarding wireless signals transmitted from the communication device to the other communication device,
a first reception process of the other communication device regarding wireless signals transmitted from the communication device to the other communication device,
a second transmission process of the other communication device regarding wireless signals transmitted from the other communication device to the communication device, or
a second reception process of the communication device regarding wireless signals transmitted from the other communication device to the communication device.
